(19) Europäisches Patentamt
European Patent Office
Office européen des brevets

(11) Publication number: **0 328 206 A2**

# (12) EUROPEAN PATENT APPLICATION

(21) Application number: 89200261.9

(22) Date of filing: 06.02.89

(51) Int. Cl.⁴: C08G 81/00, B01F 17/00, C09B 67/00, C09D 11/02, C09D 17/00

(30) Priority: 12.02.88 IT 1939288

(43) Date of publication of application: 16.08.89 Bulletin 89/33

(84) Designated Contracting States: AT BE CH DE ES FR GB GR IT LI LU NL SE

(71) Applicant: Canestri, Giuseppe
Via Parisano, 84
I-47037 Rimini (Forli)(IT)

(72) Inventor: Canestri, Giuseppe
Via Parisano, 84
I-47037 Rimini (Forli)(IT)

(74) Representative: Marchi, Massimo et al
c/o Marchi & Mittler s.r.l. Viale Lombardia 20
I-20131 Milano(IT)

## (54) Method and materials to disperse solid particles in organic compounds.

(57) Method and materials fit to disperse large quantities of solid particles both in thermoplastic materials and in non-polymeric liquid diluents, generally used in the printing inks and in the paint field, by at least one composition, having an average molecular weight included between 2500 and 70000 obtained condensing (a) at least a reactive compound at the limit of the plastic materials with (b) a compound chosen among the polyesters obtained by the polycondensation of aliphatic hydroxycarboxylic acids having frcm 8 to 20 carbon atoms, the polybutadienes having a terminal hydroxylic or carboxylic group and caprolactone's polycondensates having a terminal carboxylic group.

EP 0 328 206 A2

# Method and materials to disperse solid particles in organic compounds

## Field of the invention

The present invention relates to a method to disperse a high quantity of solid particles both in thermoplastic materials and in liquid non polymeric diluents which are generally used in the printing inks and in the paint fields, by a suitable dispersant.

The compositions obtained according to the present invention have unique characteristics, because they combine the capacity to maintain in dispersion a great amount of solid particles and a high compatibility as regards the different materials to which they may be added during the working and the preparation of thermoplastic materials, printing inks and paints.

## Prior art

The need of dispersing a large quantity of solid particles and, particularly, of inorganic and organic pigments is specially felt in the field of printing inks, paints and thermoplastic materials.

In fact, in the printing inks field it is greatly felt the exigence to dispose of concentrated dispersions, stable, and containing the maximum possible pigment loading. That is due to economical reasons. Ideally, said concentrated dispersions should be compatible with the majority of typical diluents in this field, to produce the greatest possible number of inks.

In this way, it should be drastically reduced the number of intermediate products which should be produced and stocked by the chemical industries and consequently, the number of those products which should be bought by the printing inks producers, ideally, it should be possible to dispose of a single intermediate concentrated dispersion for each type of pigment.

This should allow also to obtain a considerable energetic saving, because the energy required for the use of the mills, by which said concentrated dispersions are produced, is as low as the volume handled and, consequently, related to a greater pigment concentration of the final dispersion.

Exigences of the same kind are greatly felt also in the paint and in the thermoplastic materials industries.

For example, in relation with the manufacturing of thermoplastic materials, the direct addition of powders to thermoplastic materials requires special equipments and procedures fit to avoid ambient pollution caused by the powder.

Most of producers in the thermoplastic industries use master batches. Master batches, are thermoplastic intermediates, made by highly specialized equipment in suitable facilities. Master batches are a mechanical mixture of powders, as pigments and fillers, in thermoplastic materials which are delivered, as beads or granules, to the final users, who are able to handle and add required amount of pigments to their materials by a reliable solid to solid addition.

Said master batches, beside having the highest possible content of pigments or fillers, should be also compatible and mixable with the largest number possible of thermoplastic materials.

The granules contained in the aforesaid master batches, should be compatible, in weight and volume, with those of the thermoplastic materials to which they should be added, in order to avoid their settling at the bottom of a solid-solid mixer or/and at the bottom of the extruder.

The patent applications WO 81/02395, EP 0189385 and EP 0198994 describe some polymeric dispersants which enable to disperse, in non polar liquids, more than 50%, as regards, organic pigments, and more than 75%, as regards inorganic pigments.

The dispersants described in the patent application WO 81/02395, however, are fit to disperse only particles having an acid nature; for example, they are not able to disperse high quantities of diazoic pigments, quinachridon and perylene pigments.

In their turn, the dispersants described in the patent applications EP 0189385 or 0198994 have the inconvenience to be insufficiently compatible with all the components used for the production of paints and thermoplastic materials and to alter remarkably, in some cases, the mechanical properties of the final products. Examples of components with which the aforesaid dispersants are not-compatible, are acrylic resins, melaminic resins and oil free alkyd resins. Examples in which the properties of the final products are worse, can be paints containing alkyd resins and thermoplastic materials containing polyvynil chloride.

## Summary of the invention

The present invention relates to a method to disperse a high quantity of solid particles in thermoplastic materials and in liquid non polymeric diluents generally used in the printing inks field and paints, by at least a composition, having an average molecular weight included between 2,500 and 70,000, obtained by condensing (a) at least a reacting composition at the limit of the plastic materials with (b) a composition chosen among polyesters obtained by the polycondensation of aliphatic hydroxycarboxylic acids having from 8 to 20 carbon atoms, among polybutadienes having a terminal hydroxylic or carboxylic acid and among polycondensation products of caprolactone. The above mentioned method enables to disperse at least 40% of an organic pigment and at least 70% of an inorganic pigment.

A further object of the present invention is constituted by compositions containing (i) solid particles, (ii) at least a composition, having an average molecular weight included between 2,500 and 70,000, obtained by condensing a reactive composition at the limit of plastic materials, with a composition chosen among polyesters obtained by the polycondensation of aliphatic hydroxycarboxylic acids having from 8 to 20 carbon atoms, the polybutadiene resins having a hydroxylic or a carboxylic terminal group and the polycondensates of caprolactone having a carboxylic terminal group, and (iii) at least a thermoplastic material or a liquid non polymeric diluent generally used for the printing inks production and for the paints production.

The expression "reactive composition at the limit of the plastic materials" is used, during the present description, to characterize polymerization and polycondensation products having the following properties:

- they hold free functions, as hydroxylic groups, carboxylic groups, primary or secondary amino groups, or functional groups able to react with hydroxylic or/and carboxylic groups;
- they have molecular weight included between 600 and 50,000; and
- they are liquid at ambient temperature, or, if they are solid, they can be attacked (= soluble or partially soluble) by the toluene or/and by the o-xylene.

The degree of solubility by toluene and/or by o-xylene is measured by powdering finely the substance to be tested and by introducing 10 g of the powder thus obtained in a container of a Silverson high speed mixer, together with 100 ml of toluene or o-xylene. The mixer is then run without transferring external heat to the mixture of the components.

There are considered attackable those powders which after 30′ mixing are soluted, or liquefied by at least one of the two solvents, mentioned above.

## Detailed description of the invention

To semplify the wording, in the present description, the reactive compositions at the limit of the plastic materials having the characteristics specified above, will be mentioned as "Compositions A" while the polyesters obtained by polycondensation of aliphatic hydroxycarboxylic acid having from 8 to 20 carbon atoms, the polybutadiene resins having a terminal hydroxylic or carboxylic group and the polycondensates of caprolactone having a terminal carboxylic group, will be mentioned as "Compositions B".

The condensation reaction of "Compositions A" with "Compositions B" is carried on by known method consisting, essentially, in setting them intimately in contact and heating them, a suitable catalyst being present, and in separating the reaction water while it is formed during the reaction.

Examples of suitable catalysts are the paratoluenesulfonic acid, the methylmorpholine, the dibutyltin dilaurate, the Chromium salts soluble in organic solvents, the naphthalenesulfonic acid, the triphenylphosphine, the dimethylaminopyridine, the tributyltin bromide, the sulfuric acid, the potassium hydroxyde, the diphenylphosphine, the zinc chloride, the calcium acetate and the compounds having the formula: $BrCH_2CH_2N(CH_3)_3Br$, $BrCH_2CH_2P(C_6H_5)_3Br$, and $[CH_3(CH_2)_3]_4NI$.

The lowest condensation temperature is between 70° and 260° C; and more preferably the condensation reaction is from 120° and 230° C. The temperatures lower than 120° C are preferably used when the polycondensation reaction involves addition reactions, practically when there is no water formation.

If required, the condensation reaction can be made in a suitable inert diluent, preferably a high boiling one, as the toluene, the o- and the m-xylene, the cellosolve acetate, the benzene, the dimethylformamide, the o-chlorotoluene, the o-chlorobenzene, the o-di-chlorobenzene, the butyl acetate and the like.

To ensure the better reproducing of the method and a greater constance of the characteristics of the materials according to the present invention, the "Compositions A and B" will be preferably prepared

separately. But also their preparations in situ, however, do not lie outside the field of the present invention. During the condensation stage, or, if it is preferred, immediately after, when the polycondensation composition is still at a melted state, there may be added suitable light stabilizers, heat stabilizers, X rays stabilizers and the like, belonging to known types.

Naturally, they might be added later on and this could involve a new heating operation of the polycondensation composition, and, therefore a heating waste.

Examples of suitable stabilizers are: as regards the heat, Weston 618 (Weston Inc. USA) and the like; as regards the light, Cyasorb UV 531 (American Cyanamid, USA) and the like; as regards X rays, Good Rite 3114 (BF Goodrich, USA) and the like. There exists a great number of the possible "Compositions A" and a detailed list of them could be very long; it would also be superfluous, because any technician in the field will not meet any difficulty in determining if a composition possesses the properties already described above, since it has been pointed out what is the meaning given to the expression "Reactive Composition at the limit of the plastic materials" according to the present invention.

To exemplify, without limiting the invention, it will be specified that some "Compositions A" may belong to the classes of phthalic resins, alkyd resins, acrylic alkyd resins, maleic resins and maleic modified resins, condensation products of melamine and other triazines, aldehyde resins, keton resins, xylolformaldehyde resins, sulfonamide resins, epoxy resins, polyesteramide resins, hydrocarbon resins and condensation products derived from rosin (colophony).

They may also belong to the classes of polyamide, poliurethane and silicone resins.

Examples of elementary chemical structures which may be present in the chains belonging to "Compositions A" are: imidazolines, the oxazolines, the piperazines, the cyclopentadiene, the dioxopyrrolidine, the dioxoimidazoline and the perylene; residues: of piramic acid, of the L-piramic acid, of the abietic acid and diemers of resin acids, of the aromatic acids of the colophony, of the aliphatic acids of tall oil, of amino alcohols, of aliphatic diamines, of cycloaliphatic and aromatic amines, of diamino imines, of amino acids, of saturated and unsaturated fatty acids, of di- or polycarboxylic saturated and unsaturated aliphatic fatty acids, of cycloaliphatic and aromatic acids, of the dehydroabiethylamine, of glicols, of aromatic or alkylaromatic diols, of polyoxydrilic aliphatic alcohols, of aromatic and aliphatic ethers, of aliphatic isocyanates and of the styrene.

Examples of the suitable "Compositions B" are the "Poly bd Resins" (Arco Chem. - USA), the "Hycar CT" resins (BF Goodrich, USA), the "Niax" resins (Union Carbide, USA), the poly (ricinoleic acids), the poly (hydroxystearic acids) and the BTN resins (Union Carbide, USA) and similar.

In order to fulfil the condition that a polycondensation product of a "Composition A" with a "Composition B" must have the desired dispersing properties, it must be observed that it should contain at least 5% by weight of a Composition A and that its average molecular weight should be between 2,500 and 70,00.

Preferably, the above mentioned polycondensation product will contain from 25% to 75% by weight of a "Composition A" and, respectively, from 75% to 25% by weight of a "Composition B".

At present it does not exist a standard method to classify the dispersion properties of the agents used to disperse pigments in the printing inks field, in the paint or/and the thermoplastic materials field. Therefore, when in the literature it is mentioned the dispersion property of a given agent, a technician of this field knows that this property is usually referred to a given vehicle and to a given pigment which should be used to prepare a given ink or paint.

In other words, the dispersing properties of different dispersing agents are usually measured maintaining unchanged the nature and the amount of the vehicle and the nature of the pigment. Said vehicles, however, contain also or only some polymeric substances fit to fulfil a particular function as, for example, the formation of an elastic film resistant to the atmospheric agents.

According to their nature, all polymeric compositions are singularly provided, (even if in different ways and with particular characteristics variating from one pigment to another), with a dispersing property of their own.

Therefore, the measurements considered above, do not express the dispersing property of a dispersing agent, as regards a given pigment, but they express the summation of the dispersing properties of the polymeric vehicle and of the dispersing agent. In order to render more homogeneous the measurements and the evaluations of the results obtained with the methods and the materials of the present invention, they have been made by using non-polymeric diluents; such non-polymeric diluents do not have dispersing properties of their own, and they are commonly used in the printing inks and in the paint industry; among them the most known are the aliphatic and the aromatic hydrocarbons.

This measurement method has enabled to ascertain that the results achievable by the methods and the materials according to the present invention are quite unexpected as regards the quantity of solid particles

(eg. organic and/or inorganic pigments) dispersed in aliphatic and/or aromatic hydrocarbons, and because these unexpected superior results are noticed almost in the whole range of organic and inorganic pigments used in the paint field, in the printing inks and in the thermoplastic materials field and, moreover because the above mentioned dispersions have resulted to be compatible with a great range of polymeric vehicles commonly used in the printing inks and paint field, and with a great range of thermoplastic materials.

The method according to the present invention, as regards the dispersion of organic and inorganic pigments, makes use of conventional technics.

For example, it is known that the concentrated dispersions employed in the production of printing inks are preferably constituted by 25 to 40 parts by weight of dry organic pigment or by 40 to 60 parts by weight of dry inorganic pigment and respectively from 75 to 60 parts or by 40 to 60 parts by weight of a vehicle. The vehicle is usually constituted by a polycondensate or a mixture of polycondensate products as alkyd resins, acrylic resins, phenol modified formaldehyde resins and/or hydrocarbon resins, and by a liquid diluent usually constituted by aliphatic and/or aromatic hydrocarbon (Ink Technology for Printers and Students. Leonard Hill 1963; Printing Ink Manual; W. Heffer & Sons 1963). The printing inks production comprises the dispersion stage; examples of dispersion methods are the grinding, the flushing and the pseudo flushing.

The grinding method comprises the mixing and the grinding of the pigment and the vehicle in desired quantities, in order to obtain a dispersion having rheology (viscosity, tack and fluidity) compatible with the machinery employed in the different working stages.

The machinery usually utilized for the mixing procedure are those produced by Cowless, Silverson and Molteni.

Normally the mixing stage is carried on at ambient temperature until a homogeneous mixture is obtained, the agglomerates of which are from 50 to 300 microns of size.

The mixture is then poured on a three-roll mill or forced through a ball mill, in order to obtain a stable dispersion (at least 6 months) the agglomerates of which should not exceed 5 microns of size.

The dispersion product is then suitably diluted with products similar to those used in the mixing stage, in order to obtain a printing ink containing from 12% to 25% by weight of organic pigment and from 40 to 60% of inorganic pigment, using the same equipment employed to perform the mixing.

The flushing and pseudo-flushing methods do not need, on the contrary, any grinding stage.

The aforesaid dispersion methods are carried on by mixing pigments, containing a water amount variating from 50% to 70% by weight, in order to obtain a selective substitution of the water with the dispersing vehicle, on the surface of the pigment. The vehicle used has a viscosity higher than the one of the water and it is not mixable with it; it is, therefore, capable to take the place of the water on the surface of the pigment, simply by mixing and by a subsequent evaporation.

Normally, the process is carried on by mixing a certain amount of press-cake, obtained after the last filtering operation of the pigment at the end of its synthesis, so that the dry pigment content of the final dispersion should variate from 30% to 40% by weight, while the remaining 70-60% by weight is constituted by a vehicle, the type of which has been already mentioned as regards the grinding process.

The mixing stage is carried on in a kneader mixer as Werner & Phleiderer, Battagion types or similar.

There are mixed the two above mentioned components until there has been mechanically separated a certain water amount variating from 60 to 80% in relation to the total weight of the mixture. The rest of the water is then evaporated continuing the mixing operation under vacuum, while the mixture is heated under vacuum, by circulating hot oil in the jacket of the mixer.

A paste is thus obtained, the particles of which are not exceeding 5 microns and which contains 30%-40% pigment and 70-60% by weight of vehicle. At last, in order to obtain a printing ink, the dispersion is diluted by the addition of a suitable amount of vehicle already mentioned in connection with the grinding process.

The fundamental difference between the flushing and the pseudo flushing process consists in the fact that the latter is carried on by preparing a "press-cake like product" in a kneader mixer, obtained by mixing about 50-40 parts by weight of a dry pigment together with 50-60 parts by weight of a mixture of water and an alcohol having a low molecular weight, before proceeding, according to the flushing process.

The dispersion used for the production of paints may be carried on in the same way and with the same machinery described for the production of concentrates for printing inks manufacturing. The chemical nature of the vehicles used for the production of paints is not too different from the one of the vehicles used for the production of several printing inks, while the physical characteristics of the films formed by the last ones are substantially different.

The final concentration of the dry pigment contained in concentrated dispersions used in paints production variates from 15 to 30% by weight as regards organic pigments and from 30 to 50% by weight

of inorganic pigments.

The dry pigment content in a ready paint, otherwise, variates from 3 to 15% by weight as regards organic pigments, and from 15 to 30% by weight as regards inorganic pigments.

As for the chemical nature of the vehicle and of the additives used for the paint production, see the specialized literature on the subject as "Organic Coating Technology", Pain, John Wiley Ed., New York 1954; and "Modern Surface Coating" P. Nylen E. Sunderland, John Wiley Ed., London 1965.

The preparation of pigmented master batches for thermoplastic materials can be carried on by known methods, as the extrusions, the dispersion and the flushing.

As regards the extrusion, 30-40 parts by weight of an organic pigment or 40-50 parts of an inorganic pigment are mixed in a turbine mixer together with 70-60 parts or, respectively, 60-50 parts by weight of a thermoplastic material, in order to obtain a mixture of solid particles consisting of pigment/thermoplastic materials.

The mixture is poured into an extruder, and it is extruded through a screw extruder (single or multiple screw extruder) at a temperature variating from 20° to 200°C, then it is granulated and dried.

The methods, the extrusion machinery and the raw materials for the production of master batches are described in details in the "Manual of Plastic Materials", by H. Saechtling and W. Zebrowski - Tecniche Nuove, Milano 1983.

The dispersion method includes, otherwise, the mixing and the dispersion of the pigment and of the plastic materials by a Bambury mixer (Chemical Engineer's Handbook, Mc Graw Hill) at a temperature between 60° and 200°C.

The dimension of the dispersed pigment particles are lower than 3 microns. The mass is then cooled and granulated. The master batches obtained by the aforesaid methods are, in their final use, mixed with 80-99 parts by weight of a plastic material in a slow mixer, and then coextruded and pressed.

It is possible to obtain solid master batches also by the flushing method, already described, using as a vehicle, a thermoplastic material and working at the melting temperature of the thermoplastic material employed.

As regards thermoplastic materials, it is frequent the need to disperse solid particles of different nature than those of the pigment, for example, inert fillers or metallic powders. Such additional matters aim principally at modifying the physical properties (mechanical strength, thermal capacity, electric conductivity or similar) or, somehow, aim at reducing the amount of the employed thermoplastic material. As regards all these cases, the materials and the methods, according to the present invention, show all kind of advantages already mentioned above.

The method according to the present invention can be performed by one of the numerous known technics as those already mentioned above. In particular, as regards printing inks, both the grinding, the flushing and the pseudo-flushing technics. The intermediates materials thus obtained are constituted by dispersions containing from 40% to 70% by weight, of an organic pigment or from 60% to 85% by weight of inorganic pigment, and from 2% to 25% by weight of a polycondensation product made by a "Composition A" and a "Composition B", while the remaining parts by weight are represented by an aliphatic and/or an aromatic hydrocarbon.

The aforesaid intermediates have shown to be compatible with the different polymeric vehicles used to prepare printing inks and they are stable for at least eight months.

A technician in the field will immediately realize that the absence of any polymeric vehicle, together with the above mentioned stability and compatibility properties confer to these intermediate compositions a great multivalence because they can be admixed, when a printing ink is prepared, with any suitable polymeric vehicle chosen in accordance with the printing type and the type of printing machine suitable to perform the printing required.

As regards paints, there are used conventional technics and machinery already described above.

The intermediates thus obtained are preferably constituted by dispersions containing from 30% to 40% by weight of an organic pigment or from 40% to 65% by weight of an inorganic pigment, and from 2% to 10% by weight of a polycondensation product made by a "Composition A" and a "Composition B", while the remaining parts by weight are represented by an aliphatic and/or an aromatic hydrocarbon.

Preferably, the size of the dispersed pigment particles do not exceed 5 microns.

The same considerations made in connection with printing inks intermediates, as regards the polyvalence, can be made also for these intermediate compositions. Also as regards the preparation of master batches, the method according to the present invention can be performed using conventional technics and machinery already described above.

The master batches prepared according to the method of the present invention are preferably constituted from 40% to 60% of an organic pigment and from 60% to 80% of an inorganic pigment, and

from 2% to 20% of a polycondensation product made by a "Composition A" and a "Composition B", while the remaining part is a thermoplastic material having some time the same nature and being most of all compatible with nearly all the thermoplastic materials, to which the master batch should be added.

The aforesaid master batches have shown to be preferably compatible with thermoplastic materials of the following types: ABS, APP, PVC, PA, PP, EP, UP, PBT, PET, SAN, LDPE, HDPE, SB, EVA and similar (see Manual of Plastic Materials - H. Saechtling and W. Zebrowski - Tecniche Nuove - Milano 1983).

Also in this case, the compatibility plays a determining role and gives to these master batches a great multivalence.

The "pigments" section of the third edition of the "Colour Index" (1971) and further revisions and additions, represent a useful review of organic and inorganic pigments which can be used according to the present invention.

Typical examples of useful pigments according to the present invention are those described in the Colour Index at the numbers: 74160, 74260, 77891, 77520, 77266, 77491, 77492, 77220, 77052, 77947, 77005, 77120, 12775, 11710, 11740, 68420, 70600, 59710, 71140, 68000, 60010, 69825, 69810, and all the others mentioned in the examples which will follow.

The following examples are useful to illustrate the present invention, without, however, limiting it in any way.

## Polyester A

In a reactor for the polymer production of Biic Bianchi type (Italy), there are introduced 158.3 Kg of $CH_3(CH_2)_9OH$, 134.2 Kg of $CH_3C(CH_2OH)_2COOH$, 23.3 Kg of $HOOC(CH_2)_{10}COOH$, 10 Kg of toluene and 0.500 Kg of p-toluenesulfonic acid. The mixture has been reacted at 220° C, in nitrogen stream, in solvent reflux, separating reaction water, by rapid stirring.

When the product has reached the acid value of 15 mg KOH/g there are added (the reactor being closed), at liquid state, from a separate container, 800 Kg of 12 hydroxystearic acid having an acid value of 180 mg KOH/g and an OH value of 150 mg KOH/g. The reaction is continued by rapid stirring, at 220° C, in solvent reflux, in nitrogen stream, separating water reaction, for 10 hours more. Then there are added (at liquid state) by a separate container, 20.4 Kg of $HO(CH_2)_{10}OH$ and the reaction is continued at the aforesaid conditions until there is obtained an acid value of the product of 20 mg KOH/g. The solvent is extracted under vacuum at the temperature of 220° C.

The I.R. spectrum of the final product shows the principal peaks in the spectral regions: 2850-2920, 1730-1710, 1460-1410, and 1380-1340 $cm^{-1}$.

## Polyester B

The Polyester B is prepared in a quite similar way as the Polyester A, except that there have been added 1,342 Kg of $CH_3C(CH_2OH)_2COOH$, 230.3 Kg of $HOOC(CH_2)_{10}COOH$, and 610 Kg of $HO(CH_2)_{10}OH$ and the reaction is continued until the OH value obtained is 12 mg KOH/g.

The I.R. spectrum of the product thus obtained shows evident similarities, in all bands, with Polyester A, except for the presence of a supplementary peak at 3550 $cm^{-1}$ and for the total lack of the peak at 1710 $cm^{-1}$.

## Polyester C

The Polyester C is prepared in a quite similar way as the Polyester A, except that there have been added 786 Kg of ricinoleic acid having an acid value of 179.5 mg KOH/g and an OH value of 153 mg KOH/g.

The I.R. spectrum of the product thus obtained shows evident analogies in all bands with the Polyester A.

## Example 1

### Prepolymer

A composition in which at least 80% of the structure corresponds to the following formula:

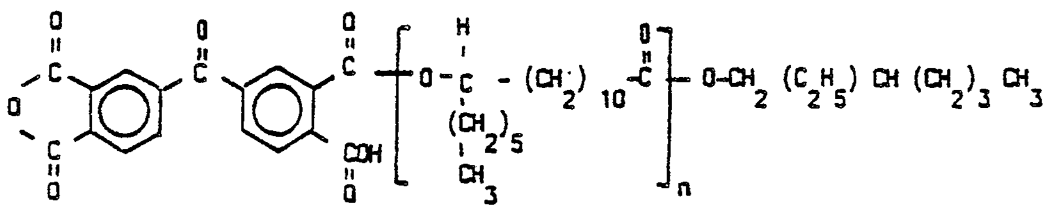

n = 6 - 10

where n is an integer from 6 to 10, and it has been obtained by reacting 1,500 g of 12 hydroxystearic acid with 600 g of 2 ethyl-1- hexanol, p-toluenesulfonic acid being present at a maximum temperature of 180° C and by reacting the product thus obtained with 970 g benzophenonetetracarboxylic dianhydride, at the temperature of 100° -120° C, in cellosolve acetate.

### Polymer C

16,000 g of the Prepolymer, previously obtained, are admixed in a reactor with 300 g toluene, 3 g methylmorpholine, 900 g Versamid 140 (having an amide equivalent weight of 150) and they have been reacted at 220° C in toluene reflux, while stirring, separating reaction water, until the amine number of the mixture is lower than 3 mg HCl/g.

Comparing the prepolymer spectrum with the one of the polymer, it is noticed the appearing of peaks at 3300 $cm^{-1}$, 1640 $cm^{-1}$ and 1540 $cm^{-1}$, with changes in the region between 1750 and 1680 $cm^{-1}$.

## Example 1 bis

In a reactor for polymer production there are admixed 15,000 g of polyester B, 1,040 g of benzophenonetetracarboxylic dianhydride and 300 g of cellosolve acetate. The mixture has been reacted in solvent reflux, while stirring, in nitrogen stream, until the OH value obtained is 0 mg KOH/g. From a separate container, connected with the reactor by metallic piping, there are added 900 g of Versamid 140 (having an amine equivalent weight of 150) at liquid state and 150 g toluene. The mixture has been reacted at 220° C in solvent reflux, in nitrogen stream, separating reaction water by stirring and by azeotropic distillation, catalyzing the process with 3 g of methylmorpholine. The reaction is continued until the product has a final acid value of 8 mg KOH/g. The solvent is extracted under vacuum at 220° C.

The I.R. spectrum shows bands and peaks analogous to those of the product of Example 1.

## Example 2

1,600 g of prepolymer of Example 1 are admixed in a reactor with 300 g toluene, 5 g of dibutyltin dilaurate and 750 g of a product having the formula:

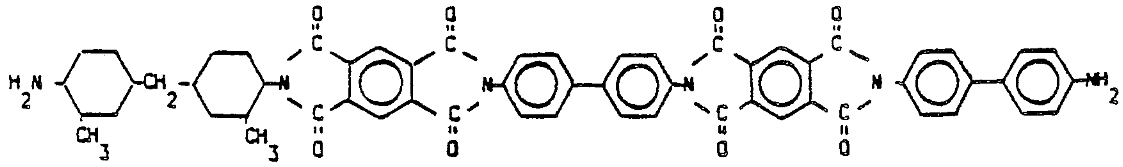

The mixture is heated and mixed at 220 °C, in toluene reflux, separating reaction water.

The I.R. spectrum of the product thus obtained shows peaks at 3300 $cm^{-1}$, 1640 $cm^{-1}$ and at 1540 $cm^{-1}$.

In a likely way there has been formed a further amount of imides and of amides because the amine of the final product is lowered to 3 mg HCl/g.

Example 2 bis

The preparation of Example 1 bis is repeated but, instead of 900 g of Versamid 140 and 150 g toluene, there have been added 801 g of a product having the formula:

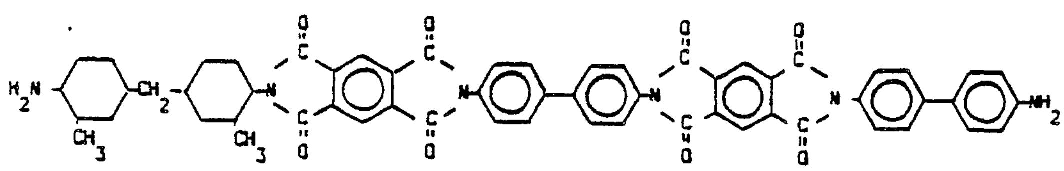

at melted state and mixed together with 300 g of toluene and 5 g of dibutyltin dilaurate.

The I.R. spectrum of the product thus obtained shows bands analogous to those of the product described in Example 2.

Example 3

18,000 g of the prepolymer of Example 1 are admixed in a reactor with 300 g toluene and 150 g of butyl acetate together with 3,000 g of a product having the formula:

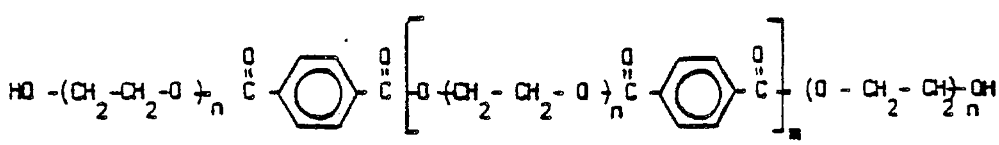

where the average values of n and m are respectively 6 and 3; and 5 g of P-toluenesulfonic acid. The product has been reacted while stirring in toluene reflux, at 180 °C, while the ethyl acetate is extracted from the mixture. Since there is no separation of reaction water, the reaction of the product is checked by measuring the acid value decreasing.

The solvent is extracted under vacuum at 180 °C temperature.

The spectrum of the final product presents the principal peaks in the regions: 2930-2850, 1730 and 1160-1175 $cm^{-1}$.

A band at 760 $cm^{-1}$ belonging to the esters of terephthalic acid, alters the band at 710 $cm^{-1}$ belonging to the polyester.

Example 3 bis

In a polymer reactor there are admixed: 17,000 g of polyester B, 1,180 g of benzophenonetetracarboxylic dianhydride and 300 g cellosolve acetate. The mixture has been reacted at 100°-120°C in solvent reflux, under stirring, in nitrogen stream until the OH value thus obtained is 0 mg KOH/g.

From a separate container, connected with the reactor by metallic piping, there are added 350 g toluene, 3,000 g of the product having the formula III (Example 3) and 5 g of p-toluenesulfonic acid at liquid state and previously mixed. The products have been reacted at 180°C temperature in solvent reflux and until the OH value of the product is lower than 10 mg KOH/g. The solvent is extracted under vacuum at 180°C.

The I.R. spectrum of the product thus obtained shows bands and peaks similar to those of the product prepared according to Example 3.

## Example 4

18,000 g of the prepolymer of Example 1 are admixed in a reactor with 30 g ethanol, 150 g of butyl acetate, 4 ml Cordova AMC-2 and 3,600 g of a product having the formula:

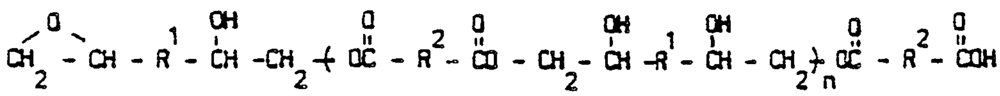

n = 3

where the average value of n is 3, $R^1$ is the residue of bisphenol A dyglycidyl ether and $R^2$ is the residue of a dicarboxylic acid having 3 carbon atoms and obtained by reacting, in butyl acetate, in dry air stream, at the temperature of 80°C and catalyzing the reaction with 4 ml of AMC-2, a composition having the formula:

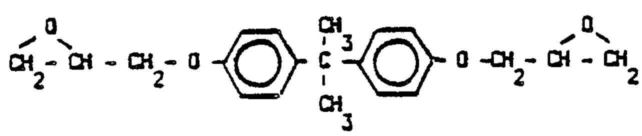

with an equal molar quantity of itaconic acid.

The prepolymer of Example 1 and the composition IV are heated at 80°C until the epoxide content is lower than 0.02% of the total weight of the reacted product. The butyl acetate is extracted under vacuum.

The I.R. spectrum of the final product shows the principal peaks in the regions: 3600-3300, 2930-2850; 1730; 1510; 1250 and 1170 $cm^{-1}$.

## Example 4 bis

In a reactor for the polymer production there are admixed: 17,000 g of polyester B, 1,180 g of benzophenonetetracarboxylic dianhydride and 300 g of butyl acetate. The mixture has been reacted at 100°-120°C in solvent reflux, under stirring, in nitrogen stream, until the OH value obtained is 0 mg KOH/g.

From a separate container, connected with the reactor by metallic piping, there are admixed 350 g of butyl acetate, 3,600 g of the product having the formula IV (Example 4), 4 ml of Cordova AMC - 2 previously mixed and at melted state, and 50 g ethanol. The products are mechanically stirred and reacted at 80°C until there is obtained an epoxide content lower than 0.02% of the total weight of the reacted product. The butyl acetate is extracted under vacuum.

The I.R. spectrum of the product thus obtained shows bands and peaks similar to those of the product prepared according to Example 4.

## Example 5

In a similar way as described in the Example 4 there have been reacted 18,000 g of prepolymer of Example 1 together with 900 g of DER 332 (bisphenol A diglycidyl ether having an epoxide equivalent weight of 175, and produced by Dow Chemical Co).

The I.R. spectrum of the product thus obtained lacks a certain number of peaks which are visible in the spectrum of the product obtained according to Example 4, because it has been variated the number of free hydroxy groups and a certain number of ethylenic bonds.

## Example 5 bis

The preparation procedure of Example 4 bis has been repeated but 3,600 g of the product having the formula IV have been replaced with 900 g of DER 332 (bisphenol A dyglicydil ether, having an epoxide equivalent weight of 175, and produced by Dow Chemical Co).

The I.R. spectrum of the product thus obtained shows bands and peaks similar to those of the product obtained according to Example 5.

## Example 6

Reacting the product of Example 4 with acrylic acid, in dry air stream, in butyl acetate there is obtained a product having the following formula:

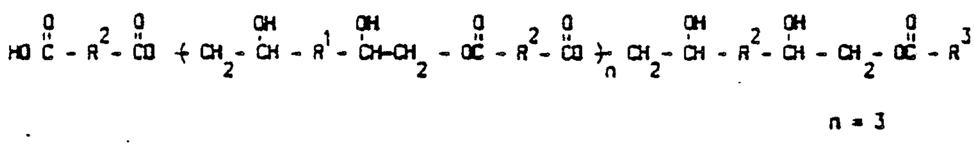

where the average value of n is 3 and R is the residue of the acrylic acid.

This product has an average molecular weight from 2265 and 3010 and an EUE (ethylenic unsaturation equivalent weight) comprised between 305 and 245. 3,000 g of the product obtained as described above, are reacted together with 16,000 g of the prepolymer made according to Example 1 at 110 °C using, as a catalyst, p-toluenesulfonic acid, in reflux of butyl acetate, dry air being present, for 4 hours. The mixture is cooled down to 25 °C and there are added 5 g of dibutyltin dilaurate, and over a period of 30 minutes, 280 g of isocyanatoethyl methacrylate (so that 1/6 of all OH groups of the composition having the formula V, are reacted).

The mixture is heated at the refluxing temperature of the butyl acetate (70-75 °C) for about 9 hours until the amount of the isocyanate left is lower than 0.02% of the total weight of the final product.

The presence of the isocyanate groups is controlled during the course of the reaction by I.R. spectroscopy.

The I.R. spectrum of the final product shows characteristic peaks in the regions: 3300; 2930-2850; 1750-1730; 1600-1540 and 1460 $cm^{-1}$.

## Example 6 bis

In a polymer reactor there are admixed 15,000 g of polyester B, 1,040 g of benzophenonetetracarboxylic dianhydride and 300 g of butyl acetate. The mixture is reacted at 100 °-120 °C in solvent reflux, while stirring, in nitrogen stream, until there is obtained an OH value of 0 mg KOH/g.

From a separate container, connected with the reactor, there is added a liquid mixture of 350 g butyl acetate, 3,000 g of a product having the formula V (Example 6) and 5 g of p-toluenesulfonic acid. The reaction is continued, by mechanical stirring, dry air being present, in solvent reflux, for 4 hours.

The mixture is cooled down to 25 °C and there are added 5 g of dibutyltin dilaurate. Then there are

added 280 g of isocyanatoethyl methacrylate (so that 1/6 of the OH groups of the composition having the formula V are reacted) dropping them over a period of 30 minutes. The mixture is then reacted in reflux of butyl acetate for 9 hours at 70-75 °C until the amount of isocyanate present, on the total weight of the final product is lower than 0.02%.

The presence of isocyanate groups is controlled also during the course of the reaction by I.R. spectroscopy. The I.R. spectrum of the final product shows bands and peaks similar to those of the product obtained according to Example 6.

Example 7

Intermediate 1

603.9 g of 11-aminoundecanoic acid and 1,263.6 g of an alkylpropylene diamine of formula $H_2N(CH_2)_3NHR$, where R is an alkyl group having 18 C atoms, and 150 g toluene, are mixed in a reactor, in toluene reflux until the acid value is lower than 0 mg KOH/g.

Polyesteramide

16,340 g of commercial 12 hydroxystearic acid having a COOH equivalent weight of 326.16 and an OH equivalent weight 381.6, 604 g of Intermediate 1 and 300 g toluene, are mixed in a reactor, in toluene reflux, separating the reaction water azeotropically, at 220 °C until the acid value of the mixture is lowered to 26 mg KOH/g.

The I.R. spectrum of the final product shows characteristic peaks in the regions: 1730; 1640 and 1540 $cm^{-1}$.

At 220 °C, there are added at liquid state, maintaining the reactor closed and under vacuum, 1,000 g of Intermediate 1 and 700 g of the Alkyl propylene diamine already mentioned. The reaction is continued for 5 hours more at 220 °C, separating reaction water and until the acid value of the product is lowered to 7.4 mg KOH/g.

The I.R. spectrum reveals, in comparison with the previous one, the appearing of a remarkable peak at 3300 $cm^{-1}$ and a tripled intensity of the peaks at 1640 $cm^{-1}$ and 1540 $cm^{-1}$.

Polymeric dispersant

There are melted 500 g of Versamid 140 (Shering), there are admixed by setting the reactor under vacuum, and there are reacted together with the product already present in the reactor for 5 hours, at 220 °C. The toluene is extracted under vacuum and the product thus obtained has an acid value of 1.2 mg KOH/g.

Example 7 bis

In a polymer reactor there are admixed: 1,583 g of $CH_3(CH_2)_9OH$, 1,342 g of $CH_3C(CH_2OH)_2COOH$, 2,303 g of $HOOC(CH_2)_{10}COOH$, 300 g toluene and 5 g of p-toluenesulfonic acid. The mixture has been reacted at 220 °C, in nitrogen stream, in solvent reflux, separating water reaction until there is obtained an acid value of 15 mg KOH/g. Then there are added 9,000 g of 12-hydroxystearic acid, from a separate container, at liquid state. The reaction is continued for 5 hours according to the above mentioned conditions. Then there are admixed, at liquid state, at 220 °C, from a container connected with the reactor, 304 g Intermediate 1 (Example 7), and the reaction is continued at 220 °C, in solvent reflux, in nitrogen stream, separating the reaction water, for 6 hours.

Maintaining the temperature constant at 220° C, there are admixed, from a separate container, at liquid state, 1,300 g of Intermediate 1 (Example 7), 700 g of Duomeen T (Akzo) and 500 g of Versamid 140. The reaction is continued, at the above mentioned conditions, until the acid value of the final product is 5.2 mg KOH/g.

The I.R. spectrum of the final product shows peaks and bands similar to those of the product according to Example 7.

## Example 8

A polyesteramide is prepared in a similar way as described in Example 7 by reacting: 16,340 g of commercial 12-hydroxystearic acid (Example 7) together with 604 g of Intermediate 1 (Example 7), until the acid value is lowered to 26 mg KOH/g.

Maintaining the temperature at 220° C there are added, by setting the reactor under vacuum, 1,400 g of Versamid 140 at melted state. The reaction is continued for 11 hours, maintaining the temperature constant and separating the reaction water until the acid value is lowered to 5 mg KOH/g.

The I.R. spectrum of the final product shows clear similarities with the products obtained according to Example 7.

## Example 8 bis

In a polymer reactor there are admixed: 1,583 g of $CH_3(CH_2)_9OH$, 1,342 g of $CH_3\text{-}C(CH_2OH)_2COOH$, 2,303 g of $HOOC(CH_2)_{10}COOH$, 300 g toluene and 5 g of p-toluenesulfonic acid. The mixture is reacted at 200° C, in nitrogen stream, in solvent reflux, separating the reaction water until the acid value is lowered to 15 mg KOH/g. Then there are added 8,000 g of 12-hydroxystearic acid, from a separate container, at liquid state. The reaction is continued for 5 hours at the above mentioned conditions. Then there are admixed at liquid state, at 220° C from a container connected with the reactor, 304 g of Intermediate 1 (Example 7) and the reaction is continued at 220° C, in solvent reflux, in nitrogen stream, separating reaction water, over a period of 6 hours. Maintaining the temperature at 220° C, there are admixed from a separate container, at liquid state, 304 g of Intermediate 1 (Example 7), 700 g Duomeen T (Akzo) and 1,400 g of Versamid 140, and the reaction is continued, at the above mentioned conditions for 5 hours.

The acid value of the final product is 5 mg KOH/g and the I.R. spectrum shows peaks and bands similar to those noticed as regards the products described in Example 8.

## Example 9

### Polyesteramide

There is made a polyesteramide in a similar way as the one described in Example 7, by reacting 16,340 g of 12-hydroxystearic acid with 604 g of Intermediate 1 (Example 7). The acid value of the product thus obtained is 26 mg KOH/g.

### Polymer

Maintaining the temperature at 220° C, there are admixed, while the reactor is set under vacuum, 1,600 g of DEN 431 (an epoxy resin from Dow Chemical, having an epoxide equivalent of 177). The reaction is catalyzed by 10 ml of Cordova AMC-2 and it is continued at 220° C until the acid value of the product thus obtained is lowered to 3 mg KOH/g.

The I.R. spectrum of the final product shows characteristic peaks in the regions: 3500-3300; 2920-2850;

1730; 1640; 1540 and 1460 $cm^{-1}$.

## Example 9 bis

### Polyesteramide

In a polymer reactor there are admixed: 158.3 kg of $CH_3(CH_2)_9OH$, 134.2 kg of $CH_3$-$C(CH_2OH)_2COOH$, 230.3 kg of $HOOC(CH_2)_{10}COOH$, 10 kg toluene and 50 g p-toluenesulfonic acid. The mixture is reacted at 220° C, in nitrogen stream, in solvent reflux, separating reaction water until the acid value obtained is 15 mg KOH/g.

Then there are added 900 kg of 12-hydroxystearic acid, from a separate container, at liquid state. The reaction is continued for 5 hours at the above mentioned conditions. Then there are admixed, at liquid state, at 220° C, from a container connected with the reactor, 30.4 kg of Intermediate 1 (Example 7) and the reaction is continued at 220° C, in solvent reflux, in nitrogen stream, separating the reaction water formed, for 6 hours.

Maintaining the temperature at 220° C, there are admixed, from a separate container, at liquid state, 30.4 kg of Intermediate 1 (Example 7) and 700 g Duomeen T(Akzo), and the reaction is continued at the above mentioned conditions for 5 hours more.

The solvent is extracted under vacuum; the acid value of the final product is 16 mg KOH/g.

### Dispersant

15,500 g polyesteramide, prepared as previously described in this example, are admixed in a polymer reactor together with 1,600 g of DEN 431 (Dow Chemical), having an epoxide equivalent weight of 177, 10 ml Cordova AMC-2 and 300 g toluene.

The mixture is reacted at 220° C, in solvent reflux, in nitrogen stream, until the acid value is lower than 3 mg KOH/g. The solvent is extracted under vacuum at 220° C.

The I.R. spectrum of the final product shows peaks and bands similar to those appearing in the one of the product prepared according to Example 9.

## Example 10

### Poly-hydroxypolyester

A poly-hydroxypolyester having the formula

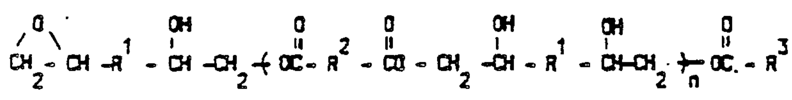

n = 2

where the average value of n is 2, there has been obtained by reacting, in a polymer reactor, in dry air, in 600 g of butyl acetate, 5 ml AMC-2 being present, 3, 063 g of product having the formula:

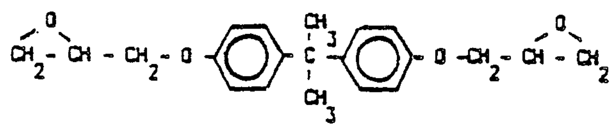

with 783 g of itaconic acid at 80° - 90°C for 8 hours, and admixing then 349.5 g of caproic acid and reacting the mixture for 4 hours more.

The product thus obtained has an epoxide equivalent of about 1400 and an OH equivalent of 350

Dispersant

1,900 g of polyesteramide prepared as described in Example 9, are reacted with 4,050 g of polyhydroxypolyester prepared as described above, at 160°C, 5 ml of AMC-2 catalyst being present, in toluene reflux, until there are practically no traces of free epoxide.

The toluene is then extracted at 10 mm Hg residual pressure and it is replaced with butyl acetate.

The I.R. spectrum shows evident changes of the peaks related to the amide group of the polyesteramide.

The temperature is reduced to 70°C, then there are admixed slowly 175 g of a mixture of 2,4 - and 2,6 toluene diisocyanate, and later on, 1 g of dibutyltin dilaurate. The temperature is maintained at 70-75°C in reflux of butyl acetate until the I.R. spectrum (in the region 2265-2280 $cm^{-1}$) clearly shows that the isocyanate is completely reacted. The acid value of the final product is 3.5 mg KOH/g.

The butyl acetate is extracted under vacuum.

The acid value of the final product is 3.5 mg KOH/g. The butyl acetate is extracted under vacuum.

The I.R. spectrum shows characteristic peaks in the regions: 3500-3300; 2930-2850; 1750-1730; 1640-1600; 1540-1510 and 1460 $cm^{-1}$.

Example 10 bis

In a polymer reactor there are admixed: 19,000 g of polyesteramide prepared as described in Example 9 bis, 4,050 g of polyhydroxy polyester prepared as described in Example 10 (at liquid state), 5 ml AMC-2 and 350 g toluene. The products are reacted at 160°C, in solvent reflux, in nitrogen stream, until the free epoxide equivalent of the mixture is nearly 0. The toluene is extracted under vacuum and it is replaced with 350 g of butyl acetate, and the temperature is reduced to 70°C. At this temperature there are added 175 g of a mixture of 2,4-and 2,6- toluene diisocyanate over a period of 30 minutes.

Later on there is added 1 g of dibutyltin dilaurate and the temperature is maintained at 70°-75°C in reflux of butyl acetate until there is practically no trace of isocyanate (0.02%). The butyl acetate is extracted under vacuum.

The acid value of the final product is 3.5 mg KOH/g and its I.R. spectrum is similar to the product described at Example 10.

Example 11

12,000 g of polyesteramide prepared as described in Example 9 are admixed together with 8,000 g of Desmalkyd L 178 (an urethane oil from Bayer), in a closed reactor, with toluene, at 120°C, catalyzing the reaction with 5 g of a mixture of naphthalenesulfonic acid and AMC-2 1:1.

The products are mixed for 6 hours in toluene reflux; the toluene is then extracted under vacuum. The acid value of the final product thus obtained is 8 mg KOH/g.

The I.R. spectrum of the final product shows characteristic peaks in the regions: 3300-3000; 2930-2850; 1750-1730; 1640-1600; 1540; 1460 and 1250-1230 $cm^{-1}$.

Example 11 bis

12,000 g of polyesteramide prepared as described in Example 9 bis, are admixed in a polymer reactor together with 8,000 g of Desmalkyd L 178 (Bayer), 360 g of toluene and 5 g of a mixture of naphthalenesulfonic acid and AMC-2 1:1. The mixture is stirred 6 hours in toluene reflux, in nitrogen stream. The toluene is then extracted under vacuum.

The I.R. spectrum of the final product shows bands and peaks similar to those of the product described in Example 11.

The acid value of the final product is 7.5 mg KOH/g.

Example 12

Intermediate 2

A polyamine-amido resin, usually used as an adhesion promoter for plastisols based on polyvinyl chloride polymers and copolymers, is obtained by reacting, in a polymer reactor, under stirring in nitrogen stream, at 180 °C, 2,850 g of polymerized fatty acids (15% dimers and 85% trimers) having a similar composition as the one of the Empol products of Unilever, together with 1,290 g of aminoethylpiperazine.

The temperature is maintained at 180 °C, at atmospheric pressure, until the acid value is about 5-7 mg KOH/g. Then the reactor is set under vacuum at 70 mm Hg residual pressure and it is kept in that way until it is obtained an acid value of 0.5 mg KOH/g. Under vacuum there are extracted also some unreacted residues of aminoethylpiperazine. During the course of the reaction it is also separated a certain amount of water. The amine number of the final product is 268 mg HCl/g.

Dispersant

1,600 g of polyesteramide, prepared as described in Example 9, are admixed in a reactor with 2,000 g Intermediate 2 (Example 12). Then there are added 300 g toluene and the mixture is reacted at 190 °C, separating water reaction until the acid value of the final composition is lower than 5 mg KOH/g.

The I.R. spectrum of the final product shows characteristic peaks in the regions 3300; 2920-2850; 1730; 1640; 1540; 1460 and 940-930 $cm^{-1}$.

A band in the region 930-940 $cm^{-1}$ confirms the presence of dimerized acids in the composition.

Example 12 bis

In a polymer reactor there are admixed: 16,000 g of polyesteramide prepared as described in Example 9 bis, 2,000 g of Intermediate 2 prepared as described in Example 12 and 300 g toluene. The mixture is reacted at 190 °C, in solvent reflux, in nitrogen stream, separating the reaction water until the acid value of the final product is lower than 5 mg KOH/g. The solvent is extracted under vacuum.

The I.R. spectrum of the final product shows peaks and bands similar to those found in the product described in Example 12.

Example 13

Polyaminoamide resin

A polyaminoamide resin is obtained by reacting 2,850 g of polymerized fatty acids (containing 15% of dimers and 85% trimers and belonging to the category of products sold under the name of Empol "Unilever") together with 860 g of piperazine. The mixture is heated in toluene reflux at 180°C until the dry resin, (without solvent), shows an acid value lower than 6 mg KOH/g and an amine number of 145 mg KOH/g.

The toluene is left in the final product.

Dispersant

16,500 g of polyesteramide, prepared according to Example 9, are admixed in a reactor, together with 2,950 g polyaminoamide resin prepared as described above in this Example. The mixture is heated at 180°C, in nitrogen stream, separating reaction water until the acid value of the final product is lower than 5 mg KOH/g.

The toluene is extracted under vacuum.

The I.R. spectrum of the final product is similar to the one of the product obtained according to Example 12.

Example 13 bis

In a polymer reactor there are admixed: 16,500 g of a polyesteramide prepared as described in Example 9 bis, 2,950 g of polyaminoamide resin prepared as described in Example 13 and 300 g toluene.

The mixture is reacted at 180°C, in solvent reflux, in nitrogen stream, separating the reaction water.

When the acid value of the final product is 56 mg KOH/g, the solvent is extracted under vacuum.

The I.R. spectrum of the final product shows bands and peaks similar to those of the product described in Example 13.

Example 14

Amino amide

An amide derived from resin acids is obtained by reacting a mixture of resin acids (containing mainly abietic acid) with an alkyl propylene diamine.

5,940 g of Duomeen T (Akzo), having an average molecular weight of 360 and having the formula $H_2N-(CH_2)_3NH-R$ where R is an alkyl having 18 carbon atoms, are heated in a reactor at 190°C in xylene reflux. The mixture is stirred vigorously by a mechanical stirrer in nitrogen stream.

From a closed container placed over the reactor there are added, at liquid state, over a period of 3 hours, 5,270 g of the above mantioned mixture of fatty acids.

The reaction is catalyzed with naphthalensulfonic acid. During the acids addition there is separated a certain amount of reaction water.

When the addition of the resin acids is ended, the temperature is reduced to 220°C and the reaction is continued until the acid value of the composition is lower than 20 mg KOH/g.

Alkyd Resin

In a closed reactor, there are admixed 11,090 g of Tall oil fatty acids having an acid value of 194 mg KOH/g, 3,400 g of phthalic anhydride, 2,630 g of pentaerythritol and 880 g of trimethylolpropane. The components are heated under stirring in nitrogen stream, separating the reaction water, at 230°C -233°C until the final product has an acid value lower than 12 mg KOH/g and a viscosity Poise at 25°C of 120-140.

The OH value of the product is 68 mg KOH/g.

Polymer C

2,840 g of the aminoamide previously described in this Example are reacted with 16,000 g of commercial 12-hydroxystearic acid already described (Example 7), in toluene reflux, at 220° C, in nitrogen stream, for 10 hours. The product thus obtained has an acid value of 40 mg KOH/g.

The I.R. spectrum points out the presence of free carboxylic acids, most of all consisting in unreacted resin acids.

Maintaining the temperature at 220° C, there are admixed 2,840 g of aminoamide, while the reactor is closed, by free falling from a container connected with the reactor by a metallic pipe.

From a special container there are admixed 20 g of diphenylphosphine and from another container placed over the reactor, there are admixed 12,600 g of the alkyl resin prepared as previously described in this Example. The reaction is continued for 5 hours more. The toluene is extracted under vacuum. The acid value of the final product is 16 mg KOH/g and the OH value is 22 mg KOH/g.

The I.R. spectrum of the final product presents characteristic peaks in the regions: 3510-3100; 2920-2850; 1730 and 1270-1250 $cm^{-1}$.

Example 15

Polyester

16,000 g of 12 hydroxystearic acid, having an acid value of 180 mg KOH/g and an OH value of 153 mg KOH/g, are reacted at 220° C, in toluene reflux and in nitrogen stream for 15 hours separating the reaction water. At the end of the reaction the acid value of the product is 30 mg KOH/g.

Prepolymer

At 220° C, there are added to the above mentioned polyester, from two separate containers connected with the reactor by a metallic pipe, contemporarily, 4,043 g of a mixture of resin acids, having the same characteristics of the one described in Example 14, and 655 g of Duomeen T, already described in Example 14. The reaction is continued at 220° C, separating the water thus formed, until the amine number is lower than 1.

The I.R. spectrum of this polymer shows characteristic peaks at 1640 and 1540 $cm^{-1}$.

Dispersant

The temperature in reduced to 180° C. Then, from the same container from which the amine had been previously admixed, there are added 2,600 g of polyaminoamide resin prepared according to Example 13, together with 12,600 g of alkyl resin prepared according to Example 14. The mixture is reacted for 5 hours more at 180° C, in toluene reflux, separating the reaction water. The toluene is extracted under vacuum. The final product has an acid value of 5 mg KOH/g.

The I.R. spectrum shows evident similarities with the one of Example 14, it shows, however, also two typical bands belonging to dimerized acids in the regions 1420-1410 $cm^{-1}$ and 940-930 $cm^{-1}$.

Example 15 bis

In a polymer reactor there are admixed: 16,000 g of Polyester A, 4,043 g of a fatty acid mixture, having the same characteristics of the one described in Example 14, 655 g of Duomeen T (Akzo), (see Example 14) and 300 g of toluene. The mixture is reacted at 220° C, in solvente reflux, in nitrogen stream, under mechanical stirring, separating the reaction water until the amine number is lower than 1.

From a separate container, connected with the main reactor by metallic pipes, there are added 2,600 g of polyamide resin, having the characteristics described in Example 13, and 12,600 g of alkyd resin prepared according to Example 14. The reaction is continued at 220° C in solvent reflux, in nitrogen stream, under mechanical stirring, separating the reaction water until the acid value of the final product is lower than 5 mg KOH/g.

The toluene is extracted under vacuum.

The I.R. spectrum of the final product shows bands and peaks similar to those of the product prepared according to Example 15.

## Example 16

16,000 g of 12 hydroxystearic acid, having an acid value of 180 mg KOH/g and a OH value of 150 mg KOH/g, are reacted according to Example 15. The product thus obtained has an acid value of 30 mg KOH/g, and it is maintained at 220° C. Then there are admixed, in sequence, by pumping them into the reactor from separate containers, at liquid state, 4,043 g of a mixture of resin acids having the same characteristics described in Example 15, 655 g of Duomeen T (Akzo) and 1,200 g of alkyl resin prepared according to Example 14. The temperature is maintained for 10 hours at 220° C, in toluene reflux, catalyzing the reaction with p-toluenesulfonic acid and separating the reaction water. The acid value of the final product is 22 mg KOH/g.

The I.R. spectrum shows bands and peaks similar to those of the product obtained according to Example 14.

## Example 17

Intermediate: Polyester terminated with diaminotriazine.

2,427 g of ricinoleic acid, having a COOH equivalent weight of 315.17 and an OH equivalent weight of 369.1, are admixed together with 10,708 g of 12 hydroxystearic acid and 250 g toluene in a polymer reactor and heated under stirring at 220° C. After having removed azeotropically 639 g water, the temperature is lowered to 140° C. Then, there are added 468 g of benzoguanamine. The temperature is maintained at 140° C for 30 minutes until the composition is completely clear. Then, maintaining the temperature constant, there are admixed 650 g of n-butyl glycidyl ether. The temperature is maintained constant for 1 hour more, in dry air stream.

### Polymer

To the aforesaid composition there are added 10,000 g of alkyd resin, prepared as described in Example 14. Then, there are admixed 10 g of a mixture 1:1 p-toluenesulfonic acid and naphthalenesulfonic acid.

The temperature is maintained at 140° C for 3 hours and, during this time, the product contained in the reactor is maintained under vacuum (10 mm Hg) extracting toluene and reaction water.

The temperature is lowered to 80° C and there are admixed 200 g Manalox 205 (an aluminum chelate isopropylate of Manchem Ltd).

The reaction mixture is set under vacuum again and the temperature is raised to 120° C and maintained in this way for 1 hour. The propyl alcohol is separated.

The product thus obtained is a low viscous liquid, slightly gelled having an acid value of 8 mg KOH/g and the OH value is 20 mg KOH/g.

The I.R. spectrum of the final product shows characteristic peaks at 3510-3100; 2910-2850; 1730; 1640-1600; 1570-1520; 1460 and 1375 $cm^{-1}$.

Example 17 bis

In a polymer reactor there are admixed: 2,500 g of Polyester C, 12,000 g of Polyester A, 468 g of benzoguanamine and 200 g toluene. The mixture is heated at 140 °C for 30 minutes until it is clear.

Maintaining the temperature constant at 140 °C, there are admixed, from a separate container, 650 g of n-butyl glycidyl ether. The reaction is continued in dry air stream, in solvent reflux, under stirring at 140 °C for 60 minutes.

Then there are added 8,000 g of alkyd resin, prepared as described in Example 14, and 10 g of a mixture of p-toluenesulfonic acid and naphthalenesulfonic acid 1:1. The temperature is maintained at 140 °C, for 3 hours, continuing the reaction, in solvent reflux, in nitrogen stream and separating the reaction water. The solvent is extracted under vacuum at 140 °C separating some more reaction water. The temperature is lowered to 80 °C and there are added 200 g of Manalox 205 (Manchem Ltd.).

The reaction is continued at 120 °C, under vacuum for 1 hour, separating isopropyl alcohol.

The product thus obtained has the same rheological characteristics as the one obtained according to Example 17. The acid value of the final product is 6 mg KOH/g and the OH value is 25 mg KOH/g.

The I.R. spectrum of the final product shows bands and peaks similar to those seen in the one of the product described in Example 17.

Example 18

15,000 g of 12-hydroxystearic acid, having an acid value of 180 mg KOH/g and an OH value of 153 mg KOH/g, are reacted, at 220 °C, in toluene reflux in nitrogen stream for 15 hours, separating reaction water. At the end of the reaction, the acid value of the product is 30 mg KOH/g.

Maintaining constant the temperature at 220 °C there are added, from a closed container connected with the reactor by a metallic pipe, 3,200 g of a polyimide having the formula:

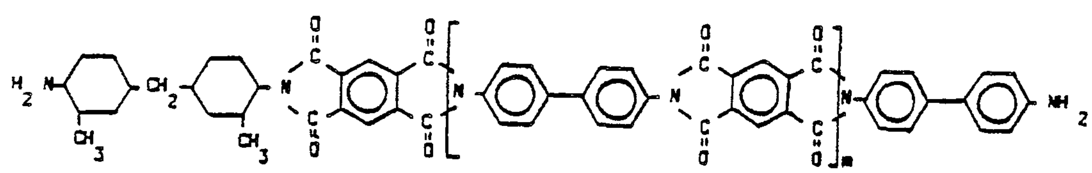

(VII)

where the average value of m is 2;

obtained by reacting diamino benzidine and pyromellitic dianhydride and separating the reaction water thus formed, terminating the reaction with a molecule of 3,3′-dimethyl-4,4′-diaminodicyclo-hexylmethane and catalyzing the reaction with 4-N,N-dimethylaminopyridine. The reaction is continued at 220 °C for 120 minutes, in nitrogen stream, separating the reaction water. Then, from two separate containers connected with the reactor by metallic pipes, there are added at liquid state, 4,400 g of dimerized and monomeric resin acid mixture, having an acid value of 150 mg KOH/g, and 665 g of Duomeen T (Akzo). The mixture is reacted at 220 °C for 5 hours more, in toluene reflux, separating the reaction water azeotropically. The solvent is extracted under vacuum.

The final acid value is 18 mg KOH/g, this is due to the fact that a certain amount of resin acids has not been conveniently reacted with amino groups.

The I.R. spectrum of the final product shows characteristic peaks in the regions: 3300; 2930-2850; 1730; 1640; 1540; 1460; 1375 and 1250 $cm^{-1}$.

Example 18 bis

In a polymer reactor there are admixed: 15,000 g of Polyester A, 3,200 g of polyimide having the formula VII (Example 18) and 300 g toluene. The mixture is reacted in nitrogen stream, in solvent reflux, under mechanical stirring, separating the reaction water, at 220° C, for 120 minutes. From a separate container connected with the reactor, there are added, at liquid state, 4,400 g of a mixture of resin acids similar to those described in Example 18, and 665 g of Duomeen T (Akzo), and the reaction is continued at 220° C for 5 hours more, in solvent reflux, separating the reaction water. The solvent is extracted under vacuum. The acid value of the final product is 14 mg KOH/g.

The I.R. spectrum of the final product shows peaks and bands similar to those of the product described in Example 18.

Example 19

16,400 g of 12 hydroxystearic acid, having an acid value of 180 mg KOH/g and an OH value of 152 mg KOH/g, are reacted with 1,000 g of a polyimide having the formula VII where m is 1 instead of 2.

The reaction is carried on at 220° C, in toluene reflux in nitrogen stream separating the reaction water azeotropically. The product is reacted until the acid value is 26 mg KOH/g.

Maintaining constant the temperature, there are added, from a let-down tank, 3,000 g more of the above mentioned polyimide, at liquid state. The product is reacted at 220° C for 10 hours more, separating the reaction water.

The acid value of the final product is 8 mg KOH/g and the amine value is 3 mg HCl/g.

The I.R. spectrum shows characteristic peaks in the regions: 3500-3200; 1645-1425 and 1540 $cm^{-1}$.

Example 19 bis

In a polymer reactor there are admixed: 1,900 g of $CH_2(CH_2)_9OH$, 1,610 g of $CH_3$-$C(CH_2OH)_2COOH$, 2,763 g of $HOOC(CH_2)_{10}COOH$,300 g toluene and 5 g p-toluenesulfonic acid. The mixture is reacted at 220° C, under mechanical stirring, in solvent reflux, in nitrogen stream, separating the reaction water until the acid value is 15 mg KOH/g. Then there are added 10,600 g of 12 hydroxystearic acid and 1,000 g of a polyimide having the formula VII (Example 18) where m is 1 instead of 2. The reaction is continued at 220° C, under mechanical stirring, in solvent reflux, in nitrogen stream, separating the reaction water, until the acid value of the final product is 16 mg KOH/g. Then there are added, from a separate container by help of a pump, 3,000 g more of the above mentioned polyimide, at liquide state.

The reaction is continued at 220° C for 10 hours, in solvent reflux, in nitrogen stream, separating the reaction water. The acid value of the final product is 8 mg KOH/g. The solvent is extracted under vacuum.

The I.R. spectrum of the final product shows bands and peaks similar to those seen in connection with the product described in Example 19.

Example 20

15,000 g of 12 hydroxystearic acid, having the same characteristics described in Example 15, are reacted in a similar way as in Example 15 obtaining a product having an acid value of 30 mg KOH/g. At 220° C there are added, at liquid state, 4,200 g of polyethylene glycol terephthalate having the formula:

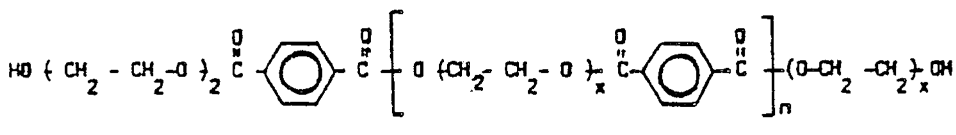

n = 3 x = 6

where the value of x and n are respectively 6 and 3, from a container connected with the reactor by metallic pipes.

The mixture is reacted for 5 hours in toluene reflux in nitrogen stream separating the reaction water. The acid value of the product is 12 mg KOH/g.

Maintaining the temperature at 220 °C, there are admixed, at melted state, 3,800 g of colophony resin acids (containing mainly abietic acid) and 655 g of Duomeen T. The composition is heated at 220 °C for 5 hours more, separating azeotropically the reaction water. The final product has an acid value of 41 mg KOH/g.

The I.R. spectrum of the final product shows characteristic peaks in the regions: 1640; 1540-1500; 1455-1410; 1120-1100 and 760-710 $cm^{-1}$.

## Example 20 bis

17,000 g of Polyester A are admixed in a polymer reactor together with 4,200 g of polyethylene glycol terephthalate, having the formula shown in Example 20, and with 350 g toluene. The mixture is reacted at 220 °C, while stirring, in solvent reflux, in nitrogen stream, and separating the reaction water until the acid value is 12 mg KOH/g.

Then there are admixed, from a separate container, a mixture having a temperature of 80 °C, containing 3,800 of colophony resin acids (principally abietic acid) and 655 g Duomeen T.

The reaction is continued at 220 °C, by mixing, in nitrogen stream, in solvent reflux and separating the reaction water, for 5 hours more. The final product has an acid value of 31 mg KOH/g.

The I.R. spectrum shows bands and peaks similar to those seen as regards the product described in Example 20.

## Example 21

### Prepolymer

17,000 g of 12 hydroxystearic acid, having an acid value of 180 mg KOH/g and an OH value of 153 mg KOH/g, are reacted at 220 °C, in toluene reflux in nitrogen stream for 15 hours, separating the reaction water. The final product has an acid value of 30 mg of KOH/g.

At 220 °C there are admixed, from two separate containers, 4,043 g of a mixture of polymerized resin acids, having a COOH equivalent weight of 400 and a melting point of 137 °C, together with 655 g of Duomeen T (Akzo). The reaction is continued at 220 °C, separating the reaction water until the amine number is from 2 to 1 mg HCl/g. The acid value of the final product is 45 mg KOH/g.

### Polymer

The temperature of the above mentioned product is reduced to 160 °C, and there are admixed 5,100 g of a styrene-maleic acid resin, having an average molecular weight of 10,000 and an acid value of 150 mg KOH/g, soluble in water at pH 8-9.

The temperature is maintained at 160 °C while the mixture is stirred under vacuum extracting toluene and remainder reaction water. The temperature is reduced to 120 °C and there are added 3,900 g of pelargonic acid and 7,500 g of laurylpropylene diamine. The mixture is stirred at 120 °C for 60 minutes.

The acid value of the final product is 86 mg KOH/g. The I.R. spectrum of the final product shows characteristic peaks in the regions: 3300; 2930-2850; 1730; 1640; 1540 and 1460 $cm^{-1}$.

## Example 21 bis

In a polymer reactor there are admixed: 17,000 g of Polyester A, 4,043 g of a mixture of polymerized resin acids (having a COOH equivalent of 400 and a melting point of 137 °C), 655 g of Duomeen T and 350 g toluene. The mixture is reacted at 220 °C, in nitrogen stream, in solvent reflux, under stirring, and separating the reaction water until the amine number is comprised between 2 and 1 mg HCl/g.

The temperature is reduced to 160 °C and there are added 5,100 g of styrene-maleic acid resin having an average molecular weight of 10,000 and an acid value of 150 mg KOH/g. The temperature is maintained at 160 °C, while the toluene is separated under vacuum together with remainder reaction water. The temperature is reduced to 120 °C and there are admixed 3,900 g of pelargonic acid and 7,500 g of laurylpropylene diamine. The mixture is reacted mixing it for 60 minutes at 120 °C. The acid value of the final product is 79 mg KOH/g.

The I.R. spectrum of the final product shows bands and peaks similar to those of the product described in Example 21.

## Example 22

### Prepolymer

16,000 g of 12 hydroxystearic acid, having an acid value of 180 mg KOH/g and an OH value of 153 mg KOH/g are reacted at 220 °C, in toluene reflux, in nitrogen stream, over a period of 15 hours, separating the reaction water. The final product has an acid value of 30 mg KOH/g.

### Polymer

Maintaining the temperature constant at 220 °C there are added, at liquid state, 6,800 g of maleic resin obtained by reacting 6,700 g of tall oil resin acids (acid value 180 mg KOH/g), 1,980 g pentaerythritol and 1,280 g of maleic anhydride. This maleic resin has an acid value of 150 mg KOH/g and an OH value of 220 mg KOH/g.

The temperature is maintained at 220 °C, in toluene reflux, for 5 hours, separating the reaction water. The temperature is reduced to 160 °C and there are added, at liquid state, 655 g of Duomeen T, 7,500 g of laurylpropylenediamine and 3,900 g of pelargonic acid. The temperature is maintained at 160 °C for 30 minutes and the solvent is extracted under vacuum.

The I.R. spectrum of the final product shows remarkable similarities with the product described in Example 21. The acid value is 110 mg KOH/g.

## Example 22 bis

In a polymer reactor there are admixed: 16,900 g of Polyester A, 6,800 g of maleic resin having similar characteristics to those described in Example 22 and 350 g toluene. The mixture is reacted at 220 °C, under mechanical stirring, in solvent reflux, in nitrogen stream, separating the reaction water, for 5 hours.

The temperature is reduced to 160 °C and there are added at liquid state, from a separate container, 655 g of Duomeen T, 7,500 g of laurylpropylenediamine and 3,900 g of pelargonic acid. The temperature is maintained constant at 160 °C for 30 minutes and the solvent is extracted under vacuum. The acid value of the final product is 110 mg KOH/g and its I.R. spectrum shows peaks and bands similar to those of the product described in Example 22.

## Example 23

33,000 g of a product having the formula I (Example 1) are admixed, in a polymer reactor at 220 °C, in

toluene reflux and in nitrogen stream, together with 10,000 g of a polycondensate, having an OH value of 45 mg KOH/g, which has been prepared by reacting azelaic acid, phthalic anhydride, terephthalic acid and diethylene glycol in equivalents proportion of 2.65:2.03:3.97:9.00. The reaction is continued at 220 °C for one hour. Then the temperature is reduced to 150 °C and there are added 2,150 g of a mixture 1:1 by weight of Polymin G 35/Polymin P Wasser Frei (BASF). The mixture is reacted under vacuum, 10 g naphthalenesulfonic acid being present separating toluene and reaction water.

The acid value of the product is 6 mg KOH/g.

The I.R. spectrum of the final product shows characteristic peaks at 3300, 2920-2850, 1740-1730, 1650, 1540, 1460 and 1260-1240 $cm^{-1}$.

## Example 23 bis

In a polymer reactor there are admixed: 30,000 g of Polyester B, 1,040 g of 3,3′-4,4′-Benzophenonetetracarboxylic dianhydride and 300 g of cellosolve acetate. The mixture is reacted at 100 °-120 °C, in solvent reflux, under stirring, in nitrogen stream, until the OH value obtained is 0 mg KOH/g. From a separate container, connected with a reactor, there are admixed 10,000 g of polycondensate having the same characteristics described in Example 23. The reaction is continued at 220 °C for one hour. The temperature is reduced to 150 °C and there are added 2,150 g of a mixture 1:1 by weight of Polymin G 35/Polymin P Wasser Frei (BASF). The mixture is reacted under vacuum at 150 °C, in nitrogen stream, 10 g of naphthalenesulfonic acid being present, under mechanical stirring, separating the reaction water.

The I.R. spectrum of the final product shows bands and peaks similar to those of the product described in Example 23. The acid value of the final product is 6 mg KOH/g.

## Example 24

### Oxazolineamide

A mixture of tall oil fatty acids and resin acids (weight content: unsaponifiables 8 parts, 40 parts resin acids and 45 parts of free fatty acids, the 3% of which are saturated; having an acid value of 130 mg KOH/g, is reacted with a mixture of N,N-bis-(2-aminoethyl)-1,2-ethanediamine and 2-amino-2-methyl-1,3 propanedyol in respective proportions 4:1 parts/weight, in solvent reflux, separating the reaction water.

### Procedure

1,032 g of a mixture of N,N-bis-(2 aminoethyl)-1,2-ethanediamine and 2-amino-2-methyl-1,3-propanedyol in proportions 4:1 parts/weight are admixed in a polymer reactor together with 300 g of o-xylene and there are heated, under mechanical stirring and in nitrogen stream, at 140 °C. At the aforesaid temperature there are added 8,630 g of the above mentioned mixture, over a period of 120 minutes so that there is always present a remarkable amine excess to promote the continuation of the reaction.

When the addition, during which has been separated the reaction water, is ended, the temperature is raised to 200 °C and it is maintained until the acid value of the product is lower than 5 mg KOH/g. The o-xylene is extracted under vacuum and the product is then dissolved in toluene so that it will remain liquid at 70 °C.

The I.R. spectrum of the final product shows characteristic peaks at 3300, 1640, 1540 and 1075 $cm^{-1}$.

### Polyester

15,000 g of 12-hydroxystearic acid, having an acid value of 180 mg KOH/g and an OH value of 153 mg

KOH/g, 600 g 2-ethyl-hexyl alcohol and 20 g of p-toluenesulfonic acid are reacted at 185°C in toluene reflux until the product obtained has an acid value lower than 5 mg KOH/g.

Prepolymer

15,000 g of the above mentioned polyester are heated at 70°C together with 1.9 g of dibutyltindilaurate, in ethyl acetate reflux. From a separate container there are added 875 g of a mixture of 2,4 and 2,6 toluene di-isocyanate over a period of 3 hours. The above mentioned temperature is maintained constant 3 hours more.

Polymer

15,800 g of the above mentioned prepolymer are mixed together with 3,000 g of oxazolineamide, prepared as previously described, 500 g of a 1:1 mixture by weight of Polymin G 10 and Polymin P Wasserfrei, at 70°C, for 5 hours. The temperature is raised to 130°C and the toluene and the ethyl acetate are extracted under vacuum. The product thus obtained is a high viscous liquid soluble in aliphatic and in aromatic diluents.

The I.R. spectrum of the final product shows characteristic peaks at 3330-3300; 2930-2850; 1750-1730; 1640; 1540 and 1250-1230 $cm^{-1}$.

Example 24 bis

In a polymer reactor there are admixed: 15,000 g of Polyester B, 1.9 g of dibutyltin dilaurate and 350 g of ethyl acetate. The mixture is stirred mechanically at 70°C. Maintaining the temperature constant, there are admixed over a period of 3 hours, 875 g of a mixture of 2,4- and 2,6- toluene di-isocyanate.. The temperature is maintained constant at 70°C, in solvent reflux, for 3 hours more. At this temperature there are added 500 g of a mixture, 1:1 by weight, of Polymin G 10 and Polymin P Wasserfrei and 3,000 g of oxazoline amide described in Example 24. The temperature is maintained at 70°-75°C in solvent reflux for 5 hours and it is raised at 130°C, while the ethyl acetate is extracted under vacuum.

The I.R. spectrum of the product shows peaks and bands similar to those seen in the product described in Example 24.

Example 25

Polyester

16,400 g of 12-hydroxystearic acid having an acid value of 180 mg KOH/g and an OH value of 153 mg KOH/g are reacted in toluene reflux, at 220°C, separating the reaction water and obtaining a final product having an acid value of 30 mg KOH/g. The toluene is extracted under vacuum.

Epoxidized prepolymer

15,400 g of the above mentioned polyester are admixed, in a polymer reactor together with 2,760 g of the product having the formula:

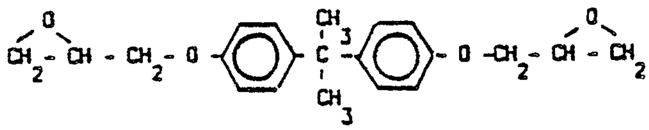

and 5 ml of AMC-2 and with 500 g of Solvesso 100 (Esso).

The mixture is reacted at 180° C, in solvent reflux, until the acid value of the product is lower than 5 mg KOH/g. The Solvesso is extracted under vacuum, at 180° C.

Alkyd Resin

12,660 g of tall oil fatty acids (having an equivalent weight of COOH of 266), 3,380 g terephthalic acid dimethyl ester and 4,080 g of pentaerythritol are heated in nitrogen stream for 30 minutes.

Then there are admixed, from a closed container, very slowly, 500 g toluene. The reaction is continued azeotropically until the acid value obtained is 3,5 mg KOH/g and the OH value is 68 mg KOH/g.

Dispersant

18,000 g of the above mentioned epoxidized prepolymer are admixed into a reactor together with 1000 g of a mixture 1:1 by weight of Polymin G 35 (BASF) and Polymin P (BASF), 500 g toluene and 2,500 g of alkyd resin.

The mixture is heated at 180° C, in solvent reflux, until the epoxy residue of the final composition is lower than 0.02% by weight.

The I.R. spectrum of the final product shows characteristic peaks at 3510-3300; 2920-2850; 1730; 1650; 1550-1510; 1460 and 1260-1250 $cm^{-1}$.

Example 25 bis

In a polymer reactor there are admixed: 16,800 g of Polyester A, 2,760 g of the product having the formula:

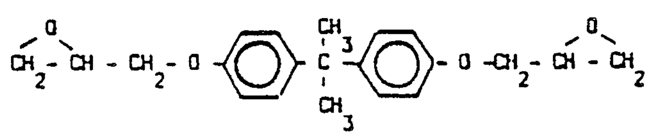

and 5 ml of AMC - 2 and 500 g of Solvesso 100 (Esso).

The mixture is reacted at 180° C, in solvent reflux, until the acid value of it is lowered to 5 mg KOH/g. The Solvesso is extracted under vacuum at 180° C.

Then there are added 1,000 g of a mixture 1:1 by weight of Polymin G 35 and Polymin P (BASF), 500 g toluene and 2,500 g of the alkyd resin described in Example 25. The mixture is reacted at 180° C, in solvent reflux, until the epoxy residue, remained unreacted, is lower than 0.02% of the total weight of the final product.

The I.R. spectrum of the final product shows peaks and bands similar to those seen in the product described in Example 25.

Example 26

In a polymer reactor there are admixed 2,670 g of phthalic anhydride, 746 g of calcium hydroxyde,

2,000 g of Solvesso 150 and the mixture is heated at 50°C for 2 hours. Then there are admixed (at liquid state) 760 g of Duomeen T (Akzo). The temperature is maintained at 75°C for two hours.

Later on it is raised at 180°C and maintained, in nitrogen stream, until the acid value is lowered to 2 mg KOH/g. The temperature is reduced to 120°C and there are admixed 82,390 g of 12-hydroxystearic acid (acid value = 180 mg KOH/g; OH value = 150 mg KOH/g) and 2,000 g of toluene. The mixture is heated at 220°C, in nitrogen stream in solvent reflux. The reaction is continued at the same temperature for 15 hours separating reaction water. Maintaining the temperature constant there are admixed, from two separate containers, 9,960 g of dimerized tall oil fatty acids, having an acid value of 147 mg KOH/g and a melting point of 115°C, and 20,000 g of an alkyd resin prepared as described in Example 25 together with 7,536 g of Duomeen T. All the above mentioned products are admixed at melted state. The mixture is reacted at 220°C for further 5 hours, catalyzing the reaction with 45 g of p-toluenesulfonic acid and separating the reaction water. The solvent is extracted under vacuum at 220°C.

The acid value of the product is 12 mg KOH/g.

THe I.R. spectrum of the final product shows characteristic peaks in the regions: 3500-3200; 1730; 1640; 1540; and 1280-1260 $cm^{-1}$.

## Example 26 bis

In a polymer reactor there are admixed: 267 g of phthalic anhydride, 74.6 g of calcium hydroxide and 200 g of Solvesso 150. The mixture is heated at 50°C for 2 hours. Then there are admixed (at liquid state) 760 g of Duomeen T (Akzo). The temperature is maintained at 75°C for 2 hours and then raised and maintained at 180°C, in nitrogen stream, separating the reaction water until the acid value obtained is lower than 2 mg KOH/g. Then there are admixed, from a separated container connected with the reactor, 8,500 g of Polyester A and 200 g of toluene. The temperature is raised at 220°C. The mixture is reacted in solvent reflux, in nitrogen stream, under mechanical stirring, separating the reaction water at 220°C for 8 hours. From a separate container, there are added, at liquid state, 996 g of dimerized tall oil resin acids (acid value = 147 mg KOH/g, melting point 115°C) and 2,000 g of alkyd resin, prepared as described in Example 25, together with 774 g of Duomeen T. The reaction is continued at 220°C for 5 hours catalyzing the same with 4.5 g of p-toluenesulfonic acid and separating the reaction water, in nitrogen stream, in solvent reflux and under mechanical stirring. The acid value of the final product is 10 mg KOH/g. The solvent is extracted under vacuum. The I.R. spectrum of this product shows peaks and bands similar to those of the product described in Example no. 26.

## Example 27

### Polyimino - amide

1,200 g of Polymin G 10 (BASF) diluted with 1,000 g of dimethylformamide are reacted with 7,700 g of a mixture of resin acids having an acid value.of 144 mg KOH/g (monomeric resin acids 54%, dimerized resin acids 30%, free fatty acids 4%, unsaponifiables 12%) while there are present 50 g of naphthalenesulfonic acid, 50 g of paratoluenesulfonic acid and 10 g triphenylphosphine. The product is heated at 180°C, in toluene reflux, in nitrogen stream, for 3 hours; the temperature is then raised to 190°C and the solvent is extracted under vacuum. The acid value of the final product is 8 mg KOH/g.

### Dispersant

17,000 g of a polyester, prepared as described in Example 25, are admixed in a reactor together with 2,800 g of the polyimino amide described previously in this example,

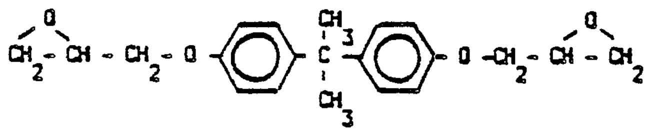

The mixture is reacted at 180°C, in nitrogen stream, in toluene reflux, separating the reaction water until the final product has an acid value lower than 12 mg KOH/g. The toluene is extracted under vacuum.

The I.R. spectrum of the final product shows characteristic peaks in the regions: 3300-3000; 2920-2850; 1730; 1650-1640, 1550-1540 and 1460 $cm^{-1}$.

## Example 27 bis

17,500 g of Polyester A are admixed in a polymer reactor together with 2,800 g of poly-iminoimide, described in Example 27, and 1,000 g of a product having the formula:

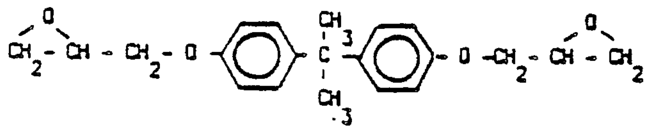

The mixture is reacted at 180°C, in nitrogen stream, in toluene reflux, separating the reaction water until the final product has an acid value lower than 12 mg KOH/g. The toluene is then extracted under vacuum.

The I.R. spectrum of the product shows bands and peaks similar to those of the product described in Example 27.

## Example 28

Aminoamido piperazine of resin acids

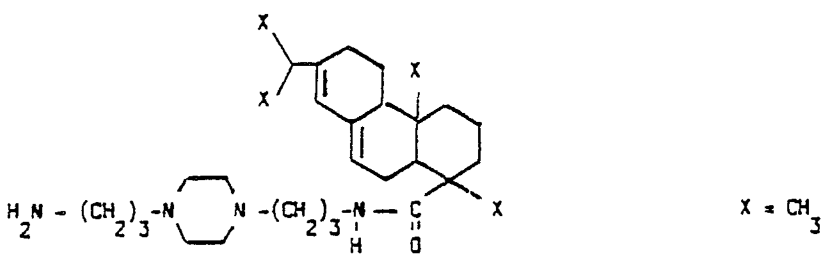

4,680 g of a resin acids mixture, having an acid value of 144 mg KOH/g (and containing 54% of monomeric resin acids, 30% of dimerized resin acids, and 4% of free fatty acids and 12% of unsaponifiables) and 2,504 g of 1,4-bis-(3-aminopropyl)-piperazine are admixed in a reactor together with 50 g of p-toluenesulfonic acid and 500 g of toluene.

The product is reacted at 190°C in solvent reflux separating the reaction water until the acid value of the product is 0.1 mg KOH/g.

Final product

From a separate container, there are admixed 17,900 g of the polyester described in Example 25. The temperature is raised to 200 °C and is maintained constant for 5 hours, in solvent reflux, in nitrogen stream, separating the reaction water. The final product has an acid value of 3 mg KOH/g.

The I.R. spectrum of the final product shows remarkable analogies with the product described in Example 27.

Example 28 bis

In a polymer reactor there are admixed: 18,000 g of Polyester A, 6,960 g of aminoamido piperazine, made as described in Example 28, and 300 g toluene. The mixture is heated at 200 °C, in solvent reflux, under mechanical stirring, in nitrogen stream, separating the reaction water until the acid value is 3 mg KOH/g. The solvent is extracted under vacuum. The I.R. spectrum of this product shows bands and peaks similar to those of the final product made according to Example 28.

Example 29

Polyamide resin

1,359 g of E-caprolactam are admixed in a reactor together with 1,320 g of ethylenediamine and 300 g of toluene and they are heated at 110 °C for 30 minutes, in nitrogen stream. Maintaining the temperature constant, there are admixed, from a closed container connected with the reactor by metallic pipes, over a period of 120 minutes, 4,027.5 g of polymerized fatty acids (15% dimers and 85% trimers). The temperature is raised to 200 °C, in 60 minutes, and it is maintained for 5 hours, separating the reaction water azeotropically.

Then there are added 1,050 g of tall oil fatty acids having an acid value of 194 mg KOH/g.

The reaction is continued until there is obtained an amine number of 17.5 mg KOH/g. The toluene is extracted under vacuum. The product thus obtained has a melting point of 100 °C.

Polyamide dispersant

5,500 g of the above mentioned polyamide resin are admixed in a reactor together with 9,500 g of polyester described in Example 25 and 500 g toluene. The mixture is heated at 200 °C for 8 hours, in nitrogen stream, separating the reaction water. The toluene is extracted under vacuum and the final product is 12 mg KOH/g.

The I.R. spectrum of the final product shows characteristic peaks at: 3300-3000; 2940-2920; 2850; 1730; 1665-1640; 1550-1540; 1460 and 1325 $cm^{-1}$.

Example 29 bis

In a Polymer reactor there are admixed: 5,500 g of polyamide resin, prepared as described in Example 29, 5,000 g of Polyester A and 500 g toluene. The mixture is heated at 200 °C for 8 hours, in nitrogen stream, in mechanical stirring, in solvent reflux, separating the reaction water. The toluene is extracted under vacuum and the final product has an acid value of 6 mg KOH/g.

The I.R. spectrum shows peaks and bands similar to those of the product described in Example 29.

Example 30

16,500 g of the polyesteramide, prepared as described in Example 7, are admixed in a reactor together with 5,500 g of polyamide resin obtained as described in Example 29 and 500 g toluene. The mixture is heated for 7 hours at 200 °C in toluene reflux in nitrogen stream, separating the reaction water. The acid value of the final product is 0.5 mg KOH/g.

The I.R. spectrum of the final product shows analogies with the one of the product described in Example 29.

## Example 30 bis

In a polymer reactor there are admixed: 16,800 g of polyesteramide similar to the one described in Example 9 bis, 5,500 g of a polyamide resin obtained as described in Example 29 and 500 g toluene. The mixture is heated for 7 hours at 220 °C, in solvent reflux, in nitrogen stream, separating the reaction water. The acid value of the final product is 0.5 mg KOH/g.

The solvent is extracted under vacuum. The I.R. spectrum shows bands and peaks similar to those described in Example 30.

## Example 31

### Polyester 1

4 molecules of 1,6-hexanediol, 1 molecule of trimethylolpropane, 3 molecules of terephthalic acid dimethyl ester and 1 molecule of adipic acid are reacted in toluene reflux at 195 °C, in nitrogen stream, catalyzing the reaction with 5 g triphenylphosphine. The mixture is maintained under stirring separating the reaction water until the acid value is 1.8 mg KOH/g and the OH value is 148 mg KOH/g. The final product is mixed with toluene so that it may melt at 60 °C.

### Polyester 2

22,400 g of 12 hydroxystearic acid, having the same characteristics of the one described in Example 25, are reacted until there is obtained an acid value of the final product of 30 mg KOH/g.

### Prepolymer

18,700 g of Polyester 2 (100% dry product) and 7,581 g of Polyester 1 (100% dry product) are admixed in a reactor and heated at 200 °C with 10 g of triphenylphosphine, in solvent reflux and in nitrogen stream, separating the reaction water.

The temperature is maintained constant until the acid value obtained is 6 mg KOH/g. The toluene is extracted under vacuum at 220 °C.

### Polymeric dispersant

In a reactor containing the above mentioned prepolymer, there are admixed 2,500 g of ethyl acetate and 10 g of dibutyltin dilaurate. The temperature is raised to 70 °C. At this temperature there are dropped, over a period of 120 minutes, 841 g of 1,6-hexamethylene diisocyanate [$OCN(CH_2)_6NCO$].

The temperature is maintained at 70-75 °C until there are no traces of free isocyanate. The ethyl acetate is extracted under vacuum maintaining constant the above mentioned temperature.

Then, there are added, lowering the temperature to 25°C, 20 g of commercial ethanol.

The acid value of the final product is 0.5 mg KOH/g. The I.R. spectrum of the final product shows characteristic peaks at 3300-3000; 2930-2850; 1736-1720; 1640; 1540-1500; 1460 and 1260-1240 $cm^{-1}$.

## Example 31 bis

In a polymer reactor there are admixed 22,000 g of Polyester A, 7,580 g of polyester 1 prepared as described in Example 31, 350 g toluene and 10 g of triphenylphosphine. The mixture is reacted in solvent reflux, under mechanical stirring, in nitrogen stream, separating the reaction water until there is obtained an acid value of 6 mg KOH/g. The toluene is then extracted under vacuum at 220°C. The temperature is reduced to 70°C and then there are added 2,000 g of butylethylacetate and 10 g of dibutyltin dilaurate. Then there are dropped into the mixture, over a period of 120 minutes, 841 g of 1,6-hexamethylene diisocyanate $[OCN(CH_2)_6-NCO]$. The temperature is maintained at 70-75°C until any trace of free isocyanate is disappeared. The ethyl acetate is extracted under vacuum. The temperature is reduced to 25°C and there are admixed and stirred, over a period of 10 minutes, 20 g of commercial ethanol. The I.R. spectrum of this product shows peaks and bands similar to those of the product described in Example 31.

## Example 32-39

The characteristics of the resin acids used in Example 32-39 are the following:

Resin 1. It is constituted by tall oil resin acids; acid value = 180 mg KOH/g, softening temperature = 75°C, free resin acids = 95%.

Resin 2. It is constituted by non crystallizing tall oil resin acids; crystallization time = ∞, acid value = 143 mg KOH/g, resin acids: monomeric 56% dimerized 30%, free fatty acids = 2%, unsaponifiables = 12% softening temperature = 80°C.

Resin 3. It is constituted by polymerized tall oil resin acids; acid value 147 mg KOH/g, softening temperature 115°C.

Resin 4. It is constituted by polymerized tall oil resin acids; acid value = 140 mg KOH/g, softening point = 140°C.

Resin 5. It is constituted by resin acids of Chinese colophony; acid value = 173 mg KOH/g.

Resin 6. It is constituted by resin acids of Portuguese colophony; acid value = 175 mg KOH/g.

Resin 7. It is constituted by resin acids of Honduras colophony; acid value = 178 mg KOH/g.

## Example 32

Resin 1 (6,440 g), phthalic anhydride (1,550 g), tri methylolpropane (2,710 g), maleic anhydride (330 g), TNPP (10 g) of Weston U.S.A. are heated in a reactor, in nitrogen stream at 220°C, separating the reaction water, when the acid value of the product is 26 (+/-2) mg KOH/g, the temperature is reduced to 220°C and there are added 1,550 g of Polyesteramide prepared as described in Example 7, in 500 g toluene. The reaction is continued at 220°C for 5 hours, in nitrogen stream, separating the reaction water. The toluene is extracted under vacuum and the temperature is reduced to 146°C. At this temperature there are added and dissolved Good-rite 3114 (15 g), Cyasorb UV 531 (20 g), Weston 618 (20 g), Wax A (200 g) and $[-CH_2-CH-(O_2CCH_3)-]$ melting at 85°C (200 g). The product is discharged slowly over a metallic revolving band, cooled at 15°C and flaked for packaging. The resin thus obtained has a melting point of 75°C. The acid value is 19 mg KOH/g. The OH value is 55 mg KOH/g.

## Example 33

Resin 2 (6,550 g), phthalic anhydride (1,550 g), trimethylolpropane (2,710 g), maleic anhydride (330 g)

TNPP (10 g) are reacted in a similar way as described in Example 32. Then 1,550 g of polyesteramide described in Example 7, Good-rite 3114 (12 g), Cyasorb UV 531 (18 g), Weston 618 (18 g), Wax A (21 g) and [$-CH_2-CH(O_2OCH_3)-$] melting at 85°C (21 g) are added as described in Example 32. The final resin thus obtained melts at 80°C. The acid value is 14 mg KOH/g. The OH value is 50 mg KOH/g.

Example 34

Resin 3 (5,900 g), phthalic anhydride (1,300 g), trimethylolpropane (2,210 g), maleic anhydride (270 g), TNPP (9 g), polyesteramide obtained according to Example 7 (1,500 g), Good-rite 3114 (12 g), Cyasorb UV 531 (18 g), Weston 618 (18 g), Wax A (180 g) and [$-CH_2CH(O_2CCH_3)-$] melting at 85°C (18 g) are reacted according to the procedure described in Example 32.

The final product melts at 115°C, and has an acid value of 18 mg KOH/g and an OH value of 46 mg KOH/g.

Example 35

Resin 3 (6,200 g), phthalic anhydride (1,350 g), trimethylolpropane (2,230 g), maleic anhydride (270 g), TNPP (9 g), polyesteramide obtained according to Example 7 (1,550 g), Good-rite 3114 (12 g), Cyasorb UV 531 (18 g), Weston 618 (18 g), Wax A (190 g) and [$-CH_2-CH(O_2CCH_3)-$] melting at 85°C (190 g) are reacted according to the procedure described in Example 32. The final product has a melting point of 122°C and an acid value of 20 mg KOH/g and an OH value of 40 mg KOH/g.

Example 36

Resin 4 (6,800 g), phthalic anhydride (1,300 g), trimethylolpropane (2,210 g) maleic anhydride (270 g), TNPP (9 g), polyesteramide obtained according to Example 7 (160 g), Good-rite 3114 (15 g), Cyasorb UV 531 (20 g), Weston 618 (20 g), Wax A (220 g) and [$-CH_2CH(O_2CCH_3)-$] melting at 85°C (220 g) are reacted according to the procedure described in Example 32. The final product has a melting point of 138°C and an acid value of 19 mg KOH/g and an OH value of 50 mg KOH/g.

Example 37

Resin 5 (6,600 g), phthalic anhydride (1,550 g), trimethylolpropane (2,710 g), maleic anhydride (330 g), TNPP (10 g), polyesteramide according to Example 7 (1,600 g), Good-rite 3114 (15 g), Cyasorb UV 531 (20 g), Weston 618 (20 g), Wax A (210 g) and [$-CH_2-CH(O_2CCH_3)-$] melting at 85°C (210 g) are reacted according to the procedure described in Example 32.

The final product melts at 75°C, has an acid value of 14 mg KOH/g and an OH value of 55 mg KOH/g.

Example 38

Resin 6 (6,750 g), phthalic anhydride (1,550 g), trimethylolpropane (271 g), maleic anhydride (330 g), TNPP (10 g), polyesteramide prepared according to Example 7 (1600 g), Good-rite 3114 (15 g), Cyasorb UV 531 (20 g), Weston 618 (20 g), Wax A (215 g) and [$-CH_2-CH(O_2CCH_3)-$] melting at 85°C (215 g) are reacted according to the procedure described in Example 32.

The final product melts at 77°C, has an acid value of 16 mg KOH/g and an OH value of 60 mg KOH/g.

Example 39

Resin 7 (5,800) g, phthalic anhydride (1,300 g), trimethylolpropane (2,240 g), maleic anhydride (270 g), TNPP (9 g), polyesteramide prepared according to Example 7 (1,500 g), Good-rite 3114 (12 g), Cyasorb UV 531 (18 g), Weston 618 (18 g), Wax A (180 g) and [$-CH_2-CH(O_2CCH_3)-$] melting at 85 °C (180 g) are reacted according to the procedure described in Example 32.

The final product melts at 73 °C, has an acid value of 14 mg KOH/g and an OH value of 52 mg KOH/g.

## Example 40

The same quantities of resin 3, phthalic anhydride, trimethylolpropane, maleic anhydride and TNPP described in Example 35, but substituting the polyesteramide of Example 7 with 1,500 g of the prepolymer described in Example 21, are reacted according to the procedure of Example 32, together with: 12 g of Good-rite 3114, (18 g) Cyasorb UV 531, 18 g Weston 618, 190 g Wax A and 190 g [$-CH_2CH(O_2CCH_3)-$] melting at 85 °C.

The final product has an acid value of 25 mg KOH/g, an OH value of 36 mg KOH/g and melts at 123 °C.

## Example 41

The same quantity of Resin 4, phthalic anhydride, trimethylolpropane, maleic anhydride and TNPP described in Example 36, but substituting the polyesteramide of Example 7 with 1,600 g of the prepolymer described in Example 21, are reacted together with 15 g Good-rite 3114, 20 g of Cyasorb UV 531, 20 g of Weston 618, 210 g of Wax A and 220 g [$-CH_2-CH(O_2CCH_3)-$] according to the procedure described in Example 32.

The final product has an acid value of 24 mg KOH/g, an OH value of 45 mg KOH/g and melts at 138 °C.

## Example 42

6,400 g of tall oil resin acids (83% free resin acids) having a melting point of 62 °C and an acid value of 166 mg KOH/g are used in the composition of Example 36, in substitution of Resin 3, leaving unchanged the quantities of phthalic anhydride (1,300 g), trimethylolpropane (2,210 g) and TNPP (9 g). In its turn the quantity of polyesteramide of Example 7 (1600 g) is substituted with 1600 g of the prepolymer described in Example 21, leaving unchanged the quantities of Good-rite 3114 (15 g), Cyasorb UV 531 (20 g), Weston 618 (20 g), it is used the same procedure described in Example 32, and the prepolymer of Example 21, is added when the mixture has an acid value of 45 mg KOH/g.

The Final product has a melting point of 62 °C, an acid value of 36 mg KOH/g and an OH value of 50 mg KOH/g.

## Example 43

### Prepolymer

In a polymer reactor there are admixed 267.0 g of phthalic anhydride, 74.6 g of calcium hydroxide, 2000 g of Solvesso 150 (ESSO) and they are heated under stirring for two hours at 50 °C. Then there are added, at liquid state, 76.0 g of Duomeen T (Akzo). The temperature is maintained constant, in nitrogen stream, until the acid value is lower than 2 mg KOH/g.

After having reduced the temperature to 120 °C there are admixed 8239 g of 12 hydroxystearic acid (acid value 180 mg KOH/g; OH value 150 mg KOH/g) and 200 g toluene. The temperature of the mixture is

raised to 220° C and it is maintained, in nitrogen stream and in solvent reflux for 15 hours, separating the reaction water.

At this temperature there are added, from two separate containers, 990 g of dimerized tall oil resin acids (acid value = 147 mg KOH/g) having a melting point of 140° C, and 773 g of Duomeen T.

The reaction is continued, in solvent reflux and in nitrogen stream, separating the reaction water until the acid value of the product is 36 mg KOH/g.

### Final Resin

The polyesteramide of the Example 7 is substituted with 1,500 g of prepolymer described in this example; then there are admixed the same quantities of Resin 3, phthalic anhydride, trimethylolpropane, maleic anhydride and 9 g TNPP, described in Example 35. Then the above mentioned are reacted together with: 12 g Good-rite 3114, 18 g Cyasorb UV 531, 18 g Weston 618, 190 g Wax A and 190 g [$-CH_2-CH(O_2CCH_3)-$] melting at 85° C, according to the procedure described in Example 32.

The final product has an acid value of 23 mg KOH/g, and an OH value of 40 mg KOH/g, and a melting point of 125° C.

### Example 44

The same quantities of Resin 4, phthalic anhydride, trimethylolpropane, maleic anhydride and TNPP while substituting the polyesteramide of Example 7 with 1600 g of prepolymer described in Example 43, are reacted with 15 g Good-rite 3114, 20 g Cyasorb UV 531, 20 g Weston 618, 220 g Wax A and 220 g of [$-CH_2-CH(O_2CCH_3)-$] melting at 85° C according to the procedure described in Example 32.

The final product has an acid value of 25 mg KOH/g an OH value of 43 mg KOH/g and a melting point of 140° C.

### Example 45

This Example is carried on as Example 42 with the exception that the Polystearamide of Example 7 is substituted with 1,600 g of the prepolymer described in Example 43.

The final product has an acid value of 50 mg KOH/g, an OH value of 45 mg KOH/g and a melting point of 65° C.

### Example 46

### Prepolymer

1,200 g of Polymin G 35 (BASF), are heated at 40-50° C under stirring, while there are blown under the surface, 3,272 g of propylene oxide, over a period of 12 hours, when the addition is ended, the excess of propylene oxide is extracted at 100° C and at 12 mm Hg residual pressure.

The final weight of the remaining substance is 2,972 g.

### Polymer

14,000 g of Hycar CTB 2000 x 156 (BF Goodrich), being a COOH terminated polybutadiene of formula:

$$CH_3(CH_2)_5\text{-O-}\overset{\overset{O}{\|}}{C}\,[CH_2\text{-}CH=CH\text{-}CH_2]_m\,\overset{\overset{O}{\|}}{C}\ OH \qquad m = 80$$

are admixed in a reactor together with 2850 g of the above mentioned Prepolymer and with 10 g of paratoluene sulfonic acid.

The mixture is heated at 120 °C under vacuum separating the reaction water. The I.R. spectrum of the product thus obtained shows characteristic peaks at 3500-3300; 2920-2840; 2240-2220; 1730; 1650 and 1550 $cm^{-1}$.

## Example 47

2,500 g of the polyester described in Example 25 are admixed in a reactor together with 30,000 g of Escorez 8000 (a dicyclopentadiene resin produced by Esso). The product is heated in bicyclopentene reflux at 240 °C and in low nitrogen stream for 7 hours.

There is a disproportion of the basic molecule while the carboxylic acids are reacting principally with the resin molecule. The final product is a highly viscous liquid.

The I.R. spectrum of the product thus obtained has characteristic peaks at 3000, 2920-2850 and 1730 $cm^{-1}$.

## Example 47 bis

In a polymer reactor there are admixed: 25,500 g of Polyester A and 30,000 g of Escorez 8000 (ESSO). The mixture is heated mechanically in bicyclopentene reflux at 240 °C and in low nitrogen stream, for 7 hours.

The I.R. spectrum of this product shows bands and peaks similar to those of the product of Example 47.

## Example 48

### Resin

30,000 g of Escorez 8000 (a derivative of dicyclopentadiene, used in the adhesives industry and for the production of synthetic rubber from Esso, having a melting point of 108 °C) are admixed in a reactor saturated with nitrogen, together with 15,000 g of maleic anhydride.

The mixture is heated slowly at 180 °C. The temperature is maintained constant in low nitrogen stream for 5 hours. The temperature is then raised to 220 °C and maintained constant until the I.R. spectrum shows the disappearing of the peak at 1570 $cm^{-1}$ (bicyclopentene) and of the peak at 840 $cm^{-1}$ (maleic anhydride).

### Polyester

16,800 g of ricinoleic acid having an acid value of 154 mg KOH/g and an OH value of 181 mg KOH/g are heated at 220 °C in nitrogen stream and in toluene reflux, separating the reaction water azeotropically until the acid value of the product is decreased to 33 mg KOH/g. The toluene is extracted under vacuum.

### Polymer

15,000 g of poly-(ricinoleic)-acid and 15,000 g of a Polyester as the one described in Example 15 are admixed in a reactor together with 6,000 g of the resin described above in this Example and with 1,675 g of aminoethyl ethanolamine having the formula $H_2N\text{-}CH_2\text{-}NH\text{-}CH_2OH$.

The mixture is heated at 220 °C, in nitrogen stream and in toluene reflux until the acid value is 7 mg KOH/g. The toluene is extracted under vacuum.

The I.R. spectrum of the product thus obtained shows characteristic peaks at 3300-3000; 1785-1680; 1640; 1540 and 1460 $cm^{-1}$.

## Example 48 bis

15,500 g of Polyester C and 15,500 g of Polyester A are admixed in a reactor together with 6,000 g of the resin described in Example 48, 1,680 g of aminoethyl ethanolamine and 500 g toluene. The mixture is heated at 200 °C in nitrogen stream and in solvent reflux until the acid value is 7 mg KOH/g. The toluene is extracted under vacuum.

The I.R. spectrum of the product thus obtained shows peaks and bands similar to those described in Example 48.

## Example 49

16,000 g of poly-(ricinoleic)-acid having a COOH equivalent weight of 1700, obtained according to Example 48, are admixed in a reactor together with 1,200 g of polymeric resin acids (having an acid value of 143 mg KOH/g and an average content of dimerized acids of 30%) and with 4,600 g of a poly-(bismalein)-imide having the formula:

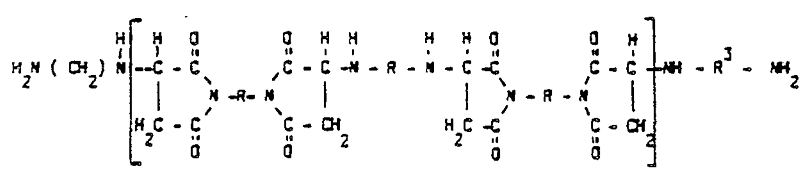

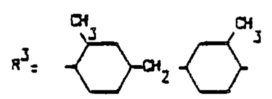

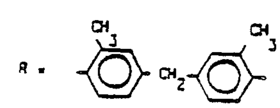

The mixture is heated, in nitrogen stream, in toluene reflux and while 5 g of $[CH_3(CH_2)_3]_3SnBr$ are present, at 200 °C for 5 hours.

The I.R. spectrum of the product thus obtained shows characteristic peaks at 3300-3000; 2920-2850; 1730; 1650; 1540; 1400 and 1200 $cm^{-1}$.

## Example 49 bis

16,500 g of Polyester C are admixed in a polymer reactor together with 4,600 g of poly (bismalein) imide having the formula (X) (see Example 49), together with 300 g Toluene and 5 g of $[CH_3(CH_2)_3]_3SnBr$. The mixture is heated at 200 °C for 5 hours in nitrogen stream, in solvent reflux, and under mechanical stirring separating reaction water.

The solvent is then extracted under vacuum at 200 °C.

The I.R. spectrum thus obtained shows bands and peaks similar to those of the product described in Example 49.

The acid value of the product thus obtained is 6.2 KOH/g.

## Example 50

Polyimide

4,085 g of a polyanhydride siloxane having the formula:

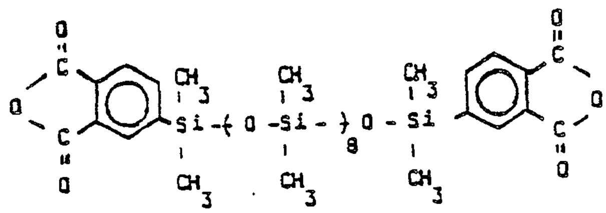

(obtained by reacting 1,3-bis (4′-phthalic anhydride)-tetramethyl-siloxane and octa-methyl-cyclo tetramethyl-siloxane in molar proportions 2:1, in dichlorobenzene, (while it is present a catalytic quantity of concentrated sulfuric acid), are admixed in a reactor together with 698 g of N,N′-bis(3-aminopropyl)ethylenediamine, 300 g of o-dichlorobenzene and 5 g of 4-N,N′-dimethylamminopyridine. The mixture is heated at 150° C in O-dichlorobenzene reflux for 2 hours, in nitrogen stream and extracting reaction water.

Dispersant

At 250° C there are added 16,000 g of polyester of Example 25 and 500 g toluene.

The mixture is heated at 150° C in nitrogen stream separating the reaction water. The o-chlorobenzene and the toluene are extracted under vacuum.

The I.R. spectrum of the product thus obtained shows characteristic peaks at 3300-3000; 2920-2850; 2200; 1650; 1550; 1460 and 1250 $cm^{-1}$.

Example 50 bis

In a polymer reactor there are admixed: 4760 g of the polyimide produced according to Example 50, 16,500 g of Polyester A and 500 g of toluene.

The mixture is heated at 150° C, in nitrogen stream and in solvent reflux, separating the reaction water, until the acid value of the final product is lower than 15 mg KOH/g.

The I.R. spectrum of the product thus obtained shows bands and peaks similar to those of the product described in Example 50.

Example 51

Polyaminoamide

4,772 g of 3,3′-dimethyl-4,4′-diamino dicyclo hexylmethane are admixed in a reactor together with 4,384 g of pyromellitic dianhydride. The mixture is heated at 200° C for 3 hours catalyzing the reaction with 5 g of 4-N,N-dimethylamino pyridine. The initial amine number of the mixture decreases while the reaction is completing, in nitrogen stream and in toluene reflux, separating the reaction water. When the amine number is the half of the initial one, there are added 2,836 g of aminodicyclohexylmethane and the mixture is heated for 3 hours at 220° C azeotropically. The average molecular weight, determined by GPC, of the product thus obtained is 2240.

The I.R. spectrum shows the presence of amino and amido groups at 3300, 1640-1540 $cm^{-1}$ and an absorbtion band at 1720 $cm^{-1}$ (C=O).

Dispersant

16,000 g of the Polyester obtained according to Example 25, 3,360 g of polyaminoamide described above (at 100% solid matter) at liquid state, 800 g of polymerized resin acids having an acid value of 149 mg KOH/g and 500 g of toluene in which there have been previously soluted 10 g of 4-N,N-dimethylamino pyridine, are heated in a polymer reactor, at 220°C under stirring, in nitrogen stream, in toluene reflux separating reaction water, until the acid value of the final product is 8.5 mg KOH/g. The toluene is then extracted under vacuum.

The I.R. spectrum of the product thus obtained shows characteristic peaks at 3300-3000; 2980--2850; 1860; 1785-1730; and 1460 $cm^{-1}$.

Example 51 bis

16,500 g of Polyester A, and 3,360 g of polyaminoimide described in Example 51, 800 g of polymerized resin acids (acid value=149 mg KOH/g) and 500 g toluene in which there have been previously soluted 10 g 4-N,N-dimethylamino pyridine, are heated, in a polymer reactor at 220°C, under stirring in solvent reflux and in nitrogen stream, separating reaction water, until the acid value of the product is 8.5 mg KOH/g. The toluene is extracted under vacuum.

The I.R. spectrum thus obtained shows peaks and bands similar to those of the product made according to Example 51.

Example 52

Polyimido diamine

1,432 g of 3,3′-dimethyl-4,4′ diamino dicyclo hexylmethane are admixed in a reactor together with 1964 g pyromellitic dianhydride and 3 g 4-N,N-dimethylamino pyridine. The mixture is heated at 220°C for 5 hours, in nitrogen stream, in toluene reflux, separating reaction water. Then there are added 1193 g of diaminodicyclo hexylmethane and the mixture is heated for 3 hours more.

The product thus obtained has an amine number of 0.5 mg HCl/g.

The I.R. spectrum shows two bands, very large at 1240 and at 1850 $cm^{-1}$ (non reacted anhydride).

Dispersant

604 g of Intermediate 1 obtained according to Example 7, 500 g of Versamid 140, 2,500 g of polyimido diamine, 300 g of Duomeen T and 16,000 g of polyester obtained according to Example 25, are admixed in a reactor together with 5 g 4-N,N-dimethylamino pyridine.

The mixture is heated at 200°C, in nitrogen stream and in toluene reflux, separating the reaction water until the acid value is 7.8 mg KOH/g. The toluene is then extracted under vacuum.

The I.R. spectrum of the product thus obtained shows characteristic peaks at 3200-3000; 1640 an 1550 $cm^{-1}$.

Example 52 bis

In a polymer reactor there are admixed: 604 g of Intermediate I obtained according to Example 7, 500 g of Versamid 540, 2,500 g of polyimidodiamine, 300 g of Duomeen T and 16,500 g of Polyester A, 500 g of toluene and 5 g of 4-N,N-dimethylamino pyridine.

The mixture is heated at 200° C, in nitrogen stream and in toluene reflux, separating reaction water until the acid value is 7 mg KOH/g. The toluene is then extracted under vacuum.

The I.R. spectrum of the product thus obtained shows bands and peaks similar to those of the product made according to Example 52.

## Example 53

### Imidodianhydride

1,192 g of 3,3′-dimethyl-4,4′ diaminodicyclo hexylmethane are admixed in a reactor together with 3222.3 g of 3,3′-4,4′-benzophenonetetracarboxylic dianhydride and 300 g toluene. The mixture is heated in nitrogen stream, in toluene reflux, at 180° C separating reaction water for 8 hours.

The I.R. spectrum shows characteristic peaks of imides and anhydrides at 3300; 1820; 1650; 1540. 1260 and 1110 $cm^{-1}$.

### Dispersant

To the above mentioned imidodianhydride having the approximate formula:

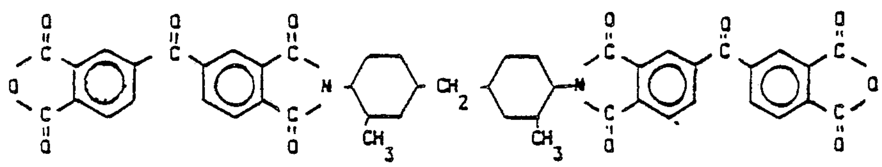

there are added 18,000 g of the Polyester obtained according to Example 25, 604 g of Intermediate 1 described in Example 7, 800 g of Versamid 840 and 120 g of calcium acetate.

The mixture is heated at 220° C, in nitrogen stream and in toluene reflux, separating the reaction water until the acid value of the product is 10 mg KOH/g. The toluene is then extracted under vacuum.

The I.R. spectrum of the product thus obtained shows remarkable similarities with those of the products of Example 51 and 52.

## Example 53 bis

In a polymer reactor there are admixed: 4,000 g of imidodianhydride obtained according to Example 53, 18,500 g of Polyester A, 604 g of Intermediate 1 obtained according to Example 7, 800 g of Versamid 140 and 120 g of calcium acetate. The mixture is heated at 200° C under stirring, in nitrogen stream and in toluene reflux, separating the reaction water until the acid value of the product is decreased below 10 mg KOH/g. The toluene is then extracted under vacuum.

The I.R. spectrum shows bands and peaks similar to those of the product made according to Example 53.

## Example 54

Perylene diamino-diamide

1,500 g of o-chlorotoluene, 20 g of zinc chloride, 393 g of perylene dianhydride, 600 g of 1,4-diaminopropane piperazine are heated at 180 °C, in o-chlorotoluene reflux and in nitrogen stream for 8 hours.

The amine number is measured every hour during the reaction.

The reaction is stopped when the amine number remains constant.

Dispersant

Maintaining the reactor closed, there are added to the above mentioned product, 14,000 g of polyester obtained according to Example 25.

The mixture is heated at 225 °C in solvent reflux and in nitrogen stream, separating the reaction water until the acid value of the product is 15 mg KOH/g.

The solvent is then extracted under vacuum.

The I.R. spectrum of the product thus obtained shows characteristic peaks at 3430-3300; 2920-2850; 1640; 1540; 1380-1360 and 1260 $cm^{-1}$.

Example 54/2bis

In a polymer reactor there are admixed: 14,500 g of Polyester A and 960 g of perylene diamino-diamide, obtained according to Example 54/1 and melted in 1500 g of o-chlorotoluene. The mixture is heated at 225 °C, in solvent reflux and in nitrogen stream, separating the reaction water until the acid value of the product is lower than 15 mg KOH/g. The solvent is then extracted under vacuum.

The X ray analysis and the I.R. spectrum of the product thus obtained give similar results to those of the product made according to Example 54/1.

Example 54/3

In a polymer reactor for alkyd resins production there are admixed: 1583 g of $CH_3(CH_2)_9OH$, 1342 g of $CH_3C(CH_2OH)_2COOH$, 5 g of paratoluenesulfonic acid and 300 g toluene. The mixture is heated at 185 °C-190 °C in nitrogen stream separating the reaction water and until the acid value is lower than 2 mg KOH/g. The temperature is maintained at 185 °C, while, from a closed container connected with the reactor by metallic pipes, there are added, at liquid state, 2303 g of $COOH(CH_2)_{10}COOH$.

The mixture is heated at 220 °C, in nitrogen stream, separating the reaction water until the acid value of the product is lower than 15 mg KOH/g. The mixture is maintained at 220 °C and, from the same container, already described, there are admixed, at liquid state, 8000 g of 12 hydroxystearic acid and the reaction is continued at 220 °C for 10 hours. There are admixed 204 g of $HO(CH_2)_{10}$-OH and the mixture is heated at 220 °C for 5 hours.

From the same container mentioned above there are added, at melted state, 750 g of Duomeen T (Akzo) and 4500 g of dimerized resin acids, having an acid value of 147 mg KOH/g. The mixture is heated at 220 °C, in nitrogen stream, separating the reaction water until the acid value of the product is lower than 50 mg KOH/g. The temperature is kept at 220 °C and there are added 5000 g of the alkyd resin described in Example 14. The mixture is heated at 220 °C for 5 hours, in nitrogen stream separating the reaction water until the acid value of the product is 24 mg KOH/g.

The I.R. spectrum of the product thus obtained shows characteristic peaks at 3510-3100; 2920-2850; 1600-1580; 1270-1250; and 1075 $cm^{-1}$.

Example 54/4

In a polymer reactor there are admixed: 1600 g of Polymin Wasserfrei (BASF), 500 g of dimethylformamide, 3400 g of ethyleneglycol diglycidyl ether and 100 g toluene. The mixture is heated at 125° C in solvent reflux for 3 hours. Then there are added from a closed container, 10 g of potassium hydroxide in alcohol solution and the heating is continued for 3 hours more. The temperature is reduced to 90° C and there are added 30,000 g of 12 hydroxystearic acid and 4,000 g of tall oil resin acids (having an acid value of 144 mg KOH/g, a melting point of 74° C and a content of 30% dimerized acids).

The mixture is heated at 220° C, in nitrogen stream, in solvent reflux, separating the reaction water, and catalyzing the reaction with 6 g of paratoluenesulfonic acid.

There is extracted the solvent under vacuum after having heated the reaction mixture for 15 hours at 220° C.

The acid value of the product thus obtained is 5 mg KOH/g.

The I.R. spectrum of the product shows characteristic peaks at 3500-3200; 2920-2850; 1730; 1640; 1540 and 1280-1240 $cm^{-1}$.

## Example 54/5

In a polymer reactor there are admixed: 1600 g of Polymin Wasserfrei (BASF), 500 g of dimethylformamide, 3,400 g of ethyleneglycoldiglycidylether and 100 g toluene. The mixture is heated at 125° C, in solvent reflux and in nitrogen stream, for 3 hours. From a separate container there are then added 10 g of potassium hydroxide in alcohol solution (at 1%) and the heating of the product is continued for 3 hours more. There are admixed, from a separate container, 31,000 g of Polyester A, 4000 g of tall oil resin acids, (acid value 144 mg KOH/g, melting point 74° C, 30% dimerized acids content) and 6 g of p-toluenesulfonic acid.

The mixture is heated at 220° C, in nitrogen stream and in solvent reflux, separating the reaction water for 5 hours. The solvent is then extracted under vacuum.

The I.R. spectrum of the product thus obtained shows bands and peaks similar to those of the product made according tc Example 54/4.

## Example 54/6

In a polymer reactor there are admixed: 604 g of Intermediate 1 described in Example 7, 18,500 g of 12 hydroxystearic acid (having the same characteristics described in Example 7) and 500 g toluene. The mixture is heated at 220° C for 15 hours, in nitrogen stream and in solvent reflux, separating the reaction water. Maintaining the temperature constant, there are admixed (from a closed container connected with the reactor by metallic pipes) 10,000 g of alkyd resin having the same characteristics of the one described in Example 14 and, immediately after, 700 g of alkylpropylene diamine $H_2N(CH_2)_3NH.R$ (Akzo) at melted state and 500 g of Versamid 140 (at melted state). The mixture is heated for 5 hours more, at 220° C and in nitrogen stream, separating the reaction water.

The toluene is extracted under vacuum when the acid value of the product is 12 mg KOH/g and the OH value is 22 mg KOH/g.

The I.R. spectrum of the product thus obtained shows characteristic peaks at 3500-3200; 1720; 1590-1575; and 1280-1240 $cm^{-1}$.

## Example 54/7

In a polymer reactor there are admixed: 600 g of Intermediate 1 described in Example 7, 17,000 g of polyester A and 500 g toluene. The mixture is heated at 220° C for 5 hours. There are admixed 10,000 g of an alkyd resin, having the same characteristics of the one described in Example 14, 700 g Duomeen T (Akzo), at liquid state, and 500 g of Versamid 140, at liquid state too.

The mixture is heated at 220° C for 5 hours more, in nitrogen stream in solvent reflux and under mechanical stirring, until the acid value of the product is lower than 12 mg KOH/g and the OH value is lower than 25 mg KOH/g. The solvent is extracted under vacuum.

The I.R. spectrum of the product thus obtained shows bands and peaks similar to those of the product described in Example 54/6.

## Example 54/8

In a polymer reactor there are admixed: 1583 g of $CH_3(CH_2)_9OH$, 1342 g of $CH_3C(CH_2OH)_2COOH$, 5 g of p-toluene sulfonic acid and 300 g toluene. The mixture is heated at 185° C-190° C in nitrogen stream, separating reaction water until the acid value of the product is lower than 2 mg KOH/g. The temperature is maintained at 185° C and there are admixed (from a closed container connected with the reactor by metallic pipes) 1,808 g of $HOOC-(CH_2)_{10}-COOH$ at liquid state.

The mixture is heated at 220° C, in nitrogen stream, separating the reaction water until the acid value of the product is lower than 15 mg KOH/g. Maintaining the temperature at 220° C there are admixed at liquid state, 118 g of $H_2N(CH_2)_6NH_2$. The temperature is maintained constant for two hours, in nitrogen stream and in toluene reflux, separating the reaction water until the acid value of the product is lower than 5 mg KOH/g. Maintaining the temperature constant there are admixed, at liquid state, 606 g of a product having the formula $H-[N(CH_2)_{10}-CO-HN(CH_2)_{10}-CO]_n-OH$ and the mixture is reacted for 2 hours at 220° C, in nitrogen stream, separating reaction water. Then there are added at liquid state, 335 g of bisphenol A diglycidyl ether and the mixture is heated for 3 hours together with 5 g diphenylphosphine.

Finally there are added 8,500 g of 12 hydroxystearic acid and the reaction is continued for 15 hours at 220° C separating the reaction water, in nitrogen stream, until the acid value of the product is 5 mg KOH/g.

## Example 54/9

### Epoxy amino-amide

In a polymer reactor there are admixed: 234 g of 1,6 hexanediamine, 1,370 g of a product having the formula:

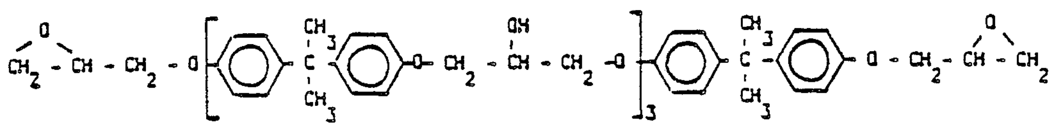

1 g of $(BrCH_2CH_2N(CH_3)_3Br)$ and 100 g toluene.

The mixture is heated at 185° C, in solvent reflux and in nitrogen stream, for 3 hours until the epoxy percentage is lower than 0.2%.

### Polyester

Separately it is prepared a polyester heating at 190° C, 3,166 of $CH_3(CH_2)_9OH$, 2,684 g of $CH_3C(CH_2OH)_2COOH$ and 300 g toluene, in solvent reflux and in nitrogen stream separating the reaction water until the acid value is lower than 5 mg KOH/g. There are added at liquid state, 3,616 g of $HOOC-(CH_2)_{10}-COOH$ and the mixture is heated at 220° C, in nitrogen stream, separating the reaction water until the acid value is lower than 15 mg KOH/g. Maintaining the temperature constant, there are admixed from a separate container, at liquid state, 16,000 g of 12 hydroxystearic acid and the temperature is maintained at 220° C for 15 hours, in nitrogen stream, separating the reaction water.

### Final dispersant

The polyester is pumped hot into the reactor containing the epoxy amino-amide. The mixture is heated at 220 °C in nitrogen stream separating the reaction water until the acid value of the product is lower than 12 mg KOH/g.

The I.R. spectrum of the product thus obtained shows characteristic peaks at 3500-3250, 2920-2850; 1735; 1640; 1540-1510; 1280-1240 and 830 $cm^{-1}$.

## Example 54/10

### Epoxy amino-amide

In a polymer reactor there are admixed: 315 g of bisphenol F diglycidyl ether, 349 g of N,N-bis (3 aminopropyl)-12 diamino-ethane, 1 g of $BrCH_2CH_2N(CH_3)_3Br$ and 100 g toluene. The mixture is heated at 185 °C, in nitrogen stream and solvent reflux, for 3 hours until the epoxy content is lower than 0.2%.

### Dispersant

In the reactor containing the epoxy amino-amide there are admixed 17,560 g of the polyester produced according to Example 54/9.

The mixture is heated at 220 °C, in nitrogen stream, for 5 hours, until the acid value of the final product is lower than 12 mg KOH/g.

The I.R. spectrum shows remarkable similarities with the one of the product produced according to Example 54/11.

The bands ending at 1640 and at 1540 $cm^{-1}$ are more marked than those of the product made according to the previuos Example 54/9 for the presence of more amino groups.

## Example 54/11

### Epoxy amino-amide

In a polymer reactor there are admixed: 806 g of 11-amino-undecanoic acid, 349 g of N,N-bis(3-aminopropyl)-1,2-diamino-ethane, 2 g of $BrCH_2CH_2N(CH_3)_3Br$ and 100 g toluene. The mixture is heated at 185 °C, in solvent reflux and in nitrogen stream for 3 hours.

There are admixed, at liquid state, 1,370 g of a product having the formula:

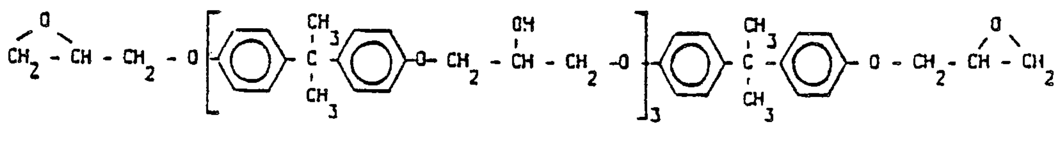

and the mixture is heated in nitrogen stream, under stirring, at 220 °C for 4 hours with 0.5 g of $BrCH_2CH_2P(C_6H_5)_3Br$ until the epoxy residue is 0.2%.

### Polyester

Separately it is prepared a polyester heating at 190°C, 3,166 g of $CH_3(CH_2)_9OH$, 2,684 g of $CH_3C(CH_2OH)_2COOH$ and 300 g toluene, in solvent reflux and in nitrogen stream separating the reaction water, until the acid value is lower than 5 mg KOH/g. Then there are added at liquid state, 3,616 g of $HOOC-(CH_2)_{10}-COOH$ and the reaction mixture is heated at 220°C until the acid value of the product is lower than 15 mg KOH/g. Maintaining the temperature constant there are admixed, from a separate container, at liquid state, 8,000 g of 12-hydroxystearic acid. The temperature is maintained costant for 15 hours more in nitrogen stream, separating the reaction water.

## Polymer

The hot polyester, mentioned above, is pumped into the reactor containing the epoxy amino-amide. The mixture is heated at 220°C, in nitrogen stream, separating the reaction water, until the acid value of the product is lower than 12 mg KOH/g.

The I.R. spectrum of the product thus obtained shows characteristic peaks at 3500-3250; 2920-2850; 1640-1605; 1540-1510; 1460 and at 1240-1280 $cm^{-1}$.

## Example 54/12

In a polymer reactor there are admixed: 1,583 g of $CH_3(CH_2)_9OH$, 1,342 g of $CH_3-C(CH_2OH)_2COOH$, 5 g of p-toluene-sulfonic acid and 300 g toluene.

The mixture is heated at 185°C-190°C, in nitrogen stream, separating the reaction water, until the acid value of the product is 2 mg KOH/g. The temperature is maintained at 185°C and there are added, from a closed container connected with the reactor, 2,303 g of $HOOC-(CH_2)_{10}COOH$, at liquid state. The mixture is heated at 220°C, in nitrogen stream, until the acid value of the product is lower than 15 mg KOH/g. Maintaining the temperature constant at 220°C, there are added 514 g of triethyleneglycol diglycidyl ether while the heating is continued, in nitrogen stream and in toluene reflux, until the product has an acid value lower than 5 mg KOH/g.

The temperature is maintained constant and there are added, at liquid state, 8,000 g of 12-hydroxystearic acid.

The mixture is heated in toluene reflux and in nitrogen stream, separating the reaction water, at 220°C until the acid value is lower than 5 mg KOH/g.

The temperature is reduced to 130°C and then are added 240 g of pyromellitic dianhydride. The temperature is raised to 150°C, and it is maintained for 2 hours. Then there are added 606 g of an amide having the formula $H_2N-(CH_2)_{10}-CO--HN-(CH_2)_3-NH.R$ (R = C18). The temperature is raised to 220°C and it is maintained constant, in nitrogen stream and in toluene reflux, for two hours. While the temperature is maintained constant, there are added 500 g of a product having the formula $H_2N(CH_2)_3NH.R$ (R = C18) and 750 g of resin acids (acid value = 143 mg KOH/g; dimerized resin acid = 30%, other resin acids = 56%, unsaponifiables = 12%) both at liquid state and the reaction is continued, in nitrogen stream, separating the reaction water until the acid value of the product is between 18 and 20 mg KOH/g. The toluene is separated under vacuum.

The I.R. spectrum of the product thus obtained shows characteristic peaks at 3500-3250; 2920-2850; 1735; 1640; 1540 and 1460 $cm^{-1}$.

## Example 54/13

### Peryleneimide

In a polymer reactor there are admixed: 393.0 g of perylene-tetracarboxylic dianhydride, 206 g of 2,5 di ter-butylaniline, 150 g of o-xylene, 0.5 g of $[CH_3(CH_2)_3]_4NI$ and 0.5 g of $BrCH_2CH_2N(CH_3)_3Br$. The mixture is heated at 145-148°C, in nitrogen stream and in solvent reflux, separating the reaction water for 3 hours.

Then there are added at liquid state, 293 g of 4,4′-methylene-bis-[2-methylcyclohexane amine] and the heating is continued at 145-148 °C, in solvent reflux and in nitrogen stream, separating reaction water until there is obtained a product having an acid value of 0.3 mg KOH/g.

## Aliphatic polyester

In a separate reactor there are admixed: 6,332 g of $CH_3$-$(CH_2)_9OH$, 5,368 g of $CH_3$-C-$(CH_2OH)_2COOH$, 5 g of p-toluene-sulfonic acid and 300 g toluene. The mixture is heated at 185 °-190 °C, in nitrogen stream, separating reaction water until the acid value of the product is lower than 2 mg KOH/g. The temperature is maintained constant at 185 °C and there are added, from a closed container connected with the reactor, 7,232 g of HOOC-$(CH_2)$10-COOH, at liquid state. The mixture is reacted, in nitrogen stream, until the acid value of the product is lower than 15 mg KOH/g. Maintaining the temperature at 220 °C, there are added 32,000 g of 12-hydroxystearic acid and the heating is continued at 220 °C, in solvent reflux and in nitrogen stream, separating the reaction water, for 15 hours.

## Dispersant

12,000 g of the above mentioned aliphatic polyester are transferred, while they are hot, into the reactor containing the peryleneimide. The mixture is heated at 240 °C, in nitrogen stream and solvent reflux, separating the reaction water, until the acid value of the final product is lower than 20 mg KOH/g.

The I.R. spectrum of the product thus obtained shows characteristic peaks at 3400-3250; 2920-2850; 1730; 1640; 1540; 1360 and 1260 $cm^{-1}$.

## Example 54/14

## Peryleneimide

In a polymer reactor there are admixed: 510.9 g of 1,8 diamino-p-menthane, 205.35 g of 2,5-di-tert-butylaniline, 786 g of perylenetetracarboxylicacid dianhydride, 150 g of o-xylene, 0.5 g of $[CH_3(CH_2)_3]_4NI$ and 0.5 g of $BrCH_2CH_2N(CH_3)_3Br$. The mixture is heated at 145 °C-148 °C, in nitrogen stream and in solvent reflux, separating the reaction water until the final product has an acid value of 0.3 mg KOH/g.

## Dispersant

15,000 g of aliphatic polyester described in Example 54/13 are transferred into a reactor containing the above mentioned peryleneimide together with 300 g toluene. The mixture is heated at 240 °C, in nitrogen stream and in solvent reflux, separating the reaction water, until the product has an acid value of 12 mg KOH/g. The solvent is then extracted under vacuum at 220 °C.

The I.R. spectrum is similar to the one of the product of Example No. 54/13 except for the bands related to the amides which are more marked.

## Example 54/15

## Polyesteramide

16,000 g of aliphatic polyester obtained according to Example 54/13, are reacted with 922 g of 4 aminosulphanilide, in toluene reflux and in nitrogen stream, at 185° C for 5 hours, separating the reaction water, in a polymer reactor.

Naphthalenesulfonic acid dichloride

In a separate reactor there are admixed 864 g of 2,6-naphthalenedisulfonic acid and 238 g of $SOCl_2$, in benzene reflux, at 80° C for 2 hours.

Dispersant

The above mentioned naphthalenesulfonic acid chloride is transferred into a reactor containing the polyesteramide. The reactor which contained the naphthalene sulfonic acid is washed with 300 g toluene heated at 100° C and they are discharged into the reactor containing the polyesteramide.

The mixture is heated at 180° C under strong stirring in toluene reflux for 2 hours, separating hydrochloric acid. The solvent is extracted under vacuum. The final product has an acid value of 12 mg KOH/g.

The I.R. spectrum of the product thus obtained shows characteristic peaks at 3400-3200; 2920-2850; 1730; 1640; 1540; 1350-1310 and at 1180-1150 $cm^{-1}$.

Example 54/16

Naphthaleneimide

In a polymer reactor there are admixed: 137 g of $C_6H_4(CH_2NH_2)_2$ 269 g of naphthalenetetracarboxylic dianhydride, 206 g of 2,5 di-tert-butylaniline, 150 g of o-xylene, 0.5 g of $[CH_3(CH_2)_3]_4NI$ and 0.5 g of $BrCH_2CH_2N(CH_3)_3Br$. The mixture is heated at 145°-148° C, in nitrogen stream and in solvent reflux, separating reaction water.

Dispersant

12,000 g of polyester obtained according to Example 54/13, are admixed in a reactor together with the above mentioned naphthaleneimide and they are reacted at 220° C for 5 hours, in nitrogen stream and in solvent reflux, separating the reaction water until the acid value of the product is 14 mg KOH/g. The solvent is then extracted under vacuum.

The I.R. spectrum of the product thus obtained shows characteristic peaks at 3300-3000; 2920-2850; 1730; 1640; 1460; 1175 and 1110 $cm^{-1}$.

Example 54/17

Naphthaleneimide

In a polymer reactor there are admixed: 274 g of $C_6H_4(CH_2NH_2)_2$ 269 g of naphthalenetetracarboxylic dianhydride, 150 g of o-xylene, 0.5 g of $[CH_3(CH_2)_3]_4NI$ and 0.5 g of $BrCH_2CH_2N(CH_3)_3Br$.

The mixture is heated at 145°-148° C, in nitrogen stream and in solvent reflux, separating the reaction water.

Dispersant

15,000 g of polyester obtained according to Example 54/13, are admixed in a reactor, together with the naphthaleneimide, and they are heated at 220° C for 5 hours, in nitrogen stream and in solvent reflux, separating the reaction water until the acid value of the product is 15 mg KOH/g.

The I.R. spectrum shows bands and peaks similar to those of the product made according to Example 54/16.

## Example 54/18

### Peryleneimide

In a polymer reactor there are admixed: 274 g of $C_6H_4(CH_2NH_2)_2$, 393 g of perylenetetracarboxylic dianhydride, 300 g of o-xylene, 0.5 g of [ $CH_3(CH_2)_3]_4NI$ and 0.5 of $BrCH_2CH_2N$-$(CH_3)_3Br$. The mixture is heated at 145° C-148° C, in nitrogen stream and solvent reflux, separating the reaction water.

### Dispersant

15,000 g of the polyester obtained according to Example 54/13, are admixed in a reactor together with the above mentioned peryleneimide and they are reacted at 220° C for 5 hours, in nitrogen stream and in solvent reflux, separating the reaction water until the acid value of the final product is 15 mg KOH/g.

The solvent is then extracted under vacuum.

The I.R. spectrum of the product thus obtained shows characteristic peaks at 3430; 2920-2850; 1640; 1540; 1375 and 1260 $cm^{-1}$.

## Example 54/19

### Anthraquinone-sulfonamide

In a polymer reactor there are admixed: 600 g of o-xylene, 390 g of anthraquinone-2,6 disulfonic acid and 2 moles of $SOCl_2$.

The mixture is heated at 85° C for 3 hours until there is obtained a Chloride. The temperature is maintained constant and from a separate container there are added, at liquid state, 275 g of $C_6H_4(CH_2NH_2)_2$. The temperature is then raised to 110° C and is maintained for 50 minutes.

### Dispersant

15,000 g of the polyester obtained according to Example 54/13, are admixed in a reactor together with the anthraquinone-amino--sulfonamide, described above, and they are reacted at 160° C for 5 hours, in nitrogen stream and in solvent reflux, separating the reaction water.

The acid value of the final product is 16 mg KOH/g. The solvent is extracted under vacuum.

The I.R. spectrum is similar to the one of the product obtained according to Example 54/17.

Example 54/20

Dehydroabietylamide

In a polymer reactor there are admixed: 820 g of $H_2N(CH_2)_{10}$-CO[HN$(CH_2)_{10}$-COHN-$(CH_2)_{10}$-CO-$]_n$HN-$(CH_2)_{10}$-COOH, 582 g of dehydroabietyl amine, 1,200 g of an amine having the formula HOOC$(CH_2)_4$CO-[HN-$(CH_2)_6$NH-OC-$(CH_2)_4$-CO$]_n$HN-$(CH_2)_6$-$NH_2$ and 500 g o-xylene.

The mixture is heated at 185° C and stirred in nitrogen stream and in solvent reflux, separating the reaction water until the acid value of the product is 5.5 mg KOH/g.

Dispersant

In a polymer reactor there are admixed: 30,000 g of aliphatic polyester obtained according to Example 54/13, the above mentioned dehydroabietylamide, at liquid state, and 300 g toluene.

The mixture is heated at 220° C, under stirring, in nitrogen stream and in solvent reflux, separating the reaction water until the acid value is 10 mg KOH/g.

The I.R. spectrum of the product thus obtained shows characteristic peaks at 3300-3000; 2920-2850; 1640; 1540 and 1260 $cm^{-1}$.

Example 55

There are used the same quantities of resin 4, phthalic anhydride, trimethylolpropane, maleic anhydride and TNPP described in Example 36, while the polyesteramide of Example 7 is substituted with 1,800 g of the product obtained according to Example 1, then there are reacted with 13 g of Good-rite 3114, 20 g of Cyasorb UV 351, 20 g of Weston 618, 220 g Wax A and 220 g [$CH_2$-CH($O_2CCH_3$)-] (melting at 85° C), according to the procedure used in Example 32.

The final product has an acid value of 18 mg KOH/g and melts at 135° C.

Example 56

There are used the same quantities of resin 4, phthalic anhydride, trimethylolpropane and TNPP described in Example 36, while the polyesteramide of Example 7 is replaced with 2,000 g of a product obtained according to Example 2, then there are reacted with 15 g of Good-rite 3114, 20 g of Cyasorb UV 531, 20 g of Weston 618, 220 g of Wax A and 220 g of [-$CH_2$-CH($O_2CCH_3$)-] (melting at 85° C), according to the procedure described in Example 32.

The final product has an acid value of 12 mg KOH/g and melts at 136° C.

Example 57

There are used the same quantities of resin 4, phthalic anhydride, trimethylolpropane, maleic acid and TNPP described in Example 36, while the polyesteramide described in Example 7 is replaced with 2,000 g of product obtained according to Example 3, and there are reacted with 15 g of Good-rite 3114, 20 g of Cyasorb UV 351, 20 g Weston 618, 220 g Wax A and 220 g of [-$CH_2$-CH($O_2CCH_3$)-] (melting at 85° C), according to the procedure described in connection with Example 32. The final product has an acid value of

19 mg KOH/g and melts at 133° C.

Example 58

There are used the same quantities of resin 4, phthalic anhydride, trimethylolpropane, maleic anhydride and TNPP described in Example 36, while the polyesteramide of Example 7 is replaced with 1,500 g of a product obtained according to Example 4, and there are reacted with 15 g of Good-rite 3114, 20 g of Cyasorb UV 531, 20 g of Weston 618, 220 g of Wax A and 220 g of [-$CH_2$-$CH(O_2CCH_3)$-] (melting at 85° C), according to the procedure described in Example 32.

The final product has an acid value of 8 mg KOH/g and melts at 133° C.

Example 59

There are used the same quantities of resin 4, phthalic anhydride, trimethylolpropane, maleic anhydride, and TNPP described in Example 36, while the polyesteramide of Example 7 is replaced with 1,700 g of the product obtained according to Example 5, then there are reacted with 15 g of Good-rite 3114, 20 g of Cyasorb UV 351, 20 g of Weston 618, 220 g of Wax A and 200 g of [-$CH_2$-$CH(O_2CCH_3)$-] (melting at 85° C), according to the procedure used in Example 32.

The final product has an acid value of 8 Mg KOH/g and melts at 133° C.

Example 60

There are used the same quantities of resin 4, phthalic, anhydride trimethylolpropane, maleic anhydride and TNPP described in Example 36, while the polyester amide of Example 7 is replaced with 1,800 g of the product made according to Example 8, then there are reacted with 15 g of Good-rite 3114, 20 g of Cyasorb UV 531, 20 g Weston 618, 220 g of Wax A and 220 g of [$CH_2$-$CH(O_2CCH_3)$-] (melting at 85° C), according to the procedure of Example 32.

The final product has an acid value of 8 mg KOH/g and melts at 134° C.

Example 61-88r

There are the same quantities of resin 4, phthalic anhydride, trimethylolpropane, maleic anhydride and TNPP described in Example 36, then there are reacted with 15 g of Good-rite 3114, 20 g of Cyasorb UV 531, 20 g of Weston 618, 220 g of Wax A and 220 g of [-$CH_2$-$CH(O_2CCH_3)$-] (melting at 85° C) according to the procedure described in Example 32, while the polyesteramide of Example 7, is replaced with the following quantities of the dispersants obtained according to the Examples described below:

Ex. 61, 1,600 g of dispersant obtained according to Ex. 9

" 62, 1,700 " " " " " " " 10

" 63, 1,500 " " " " " " " 11

" 64, 1,800 " " " " " " " 12

" 65, 1,700 " " " " " " " 13

" 66, 1,700 " " " " " " " 14

" 67, 1,600 " " " " " " " 15

" 68, 1,500 " " " " " " " 16

" 69, 1,500 " " " " " " " 17

" 70, 2,000 " " " " " " " 18

" 71, 2,000 " " " " " " " 19

" 72, 2,000 g " " " " " " 20

" 73, 1,800 " " " " " " " 21

Ex. 74, 1,800 g " " " " " " 22

" 75, 1,600 " " " " " " " 25

" 76, 1,600 " " " " " " " 26

" 77, 1,500 " " " " " " " 27

" 78, 1,500 " " " " " " " 28

" 79, 2,000 " " " " " " " 29

" 80, 1,900 " " " " " " " 30

" 81, 1,800 " " " " " " " 32

" 82, 2,000 " " " " " " " 48

| | | | | | | | | | | |
|---|---|---|---|---|---|---|---|---|---|---|
| Ex. | 83, | 2,000 | g | of | dispersant | obtained | according | to | Ex. | 49 |
| " | 84, | 2,000 | " | " | " | " | " | " | " | 50 |
| Ex. | 85, | 1,800 | g | of | dispersant | obtained | according | to | Ex. | 51 |
| " | 86, | 1,800 | " | " | " | " | " | " | " | 52 |
| " | 87, | 2,200 | " | " | " | " | " | " | " | 53 |
| " | 88, | 2,000 | " | " | " | " | " | " | " | 54 |
| " | 88a, | 2,000 | " | " | " | " | " | " | " | 54/3 |
| " | 88b, | 2,000 | " | " | " | " | " | " | " | 54/4 |
| " | 88c, | 2,000 | " | " | " | " | " | " | " | 54/5 |
| " | 88d, | 2,000 | " | " | " | " | " | " | " | 54/6 |
| " | 88e, | 2,000 | " | " | " | " | " | " | " | 54/9 |
| " | 88f, | 2,000 | " | " | " | " | " | " | " | 54/10 |
| " | 88g, | 2,000 | " | " | " | " | " | " | " | 54/11 |
| " | 88h, | 2,000 | " | " | " | " | " | " | " | 54/12 |
| " | 88i, | 2,000 | " | " | " | " | " | " | " | 54/13 |
| " | 88l, | 2,000 | " | " | " | " | " | " | " | 54/14 |
| " | 88m, | 2,000 | " | " | " | " | " | " | " | 54/15 |
| " | 88n, | 2,000 | " | " | " | " | " | " | " | 54/16 |
| " | 88o, | 2,000 | " | " | " | " | " | " | " | 54/17 |
| " | 88p, | 2,000 | " | " | " | " | " | " | " | 54/18 |
| " | 88q, | 2,000 | " | " | " | " | " | " | " | 54/19 |
| " | 88r, | 2,000 | " | " | " | " | " | " | " | 54/20 |

All the products prepared according to the Examples from 61 to 88r melt between 126° and 135° C and have an acid value variating from 8 to 22 mg KOH/g.

Similar products are also obtained replacing, in Examples 61-88r, the resin 4 with resins: 1, 2, 3, 5, 6 and 7.

The products thus obtained have an acid value between 8 and 22 mg KOH/g and melt between 70 and 116° C; they have moreover similar dispersing properties as those described above.

However, the ones having a melting point lower than 110° C can show disadvantages in the production of some master batches.

## Example 89-248

The examples from 89 to 248 are made by replacing 12-hydroxystearic acid with hydroxycarboxylic acid lactones having from 3 to 12 carbon atoms. The products thus obtained are more suitable to perform dispersions in aromatic liquids and in mixtures of ketones and alcohols, than those made by 12-hydroxycarboxylic acids and/or ricinoleic acid.

Examples of dispersants containing hydroxycarboxylic acid lactones are described in the following

Tables.

| Example No. | Reaction method according to Ex. No. | ... of ... | are replaced with ... of... | A.V. | I.R. spectrum |
|---|---|---|---|---|---|
| 89 | A | 800.0 Kg 12 - HA<br>20.4 Kg 1,10 D | 820.4 kg E - CL | 11.5 | lowered the band at 1730 - 1710 $cm^{-1}$. |
| 90 | B | 800.0 Kg 12 - HA<br>61.0 Kg 1,10 D | 861.0 Kg E - CL | 10.5 | similar to B. |
| 91 | C | 786.0 Kg RA<br>20.4 Kg 1,10 D | 806.4 Kg E - CL | 15.2 | lowered the band at 1730 - 1710 $cm^{-1}$. |
| 92 | 1 | 1,500 g 12 - HA | 1,500 g E - CL | | similar to Ex.1 |
| 93 | 1 bis | 15,000 g POL B | 15,000 g P from Ex.90 | 4.5 | similar to Ex.1 bis |
| 94 | 2 | 1,600 g PRE Ex.1 | 1,600 g PRE from Ex.92 | | similar to Ex.2 |
| 95 | 2 bis | 1,600 g PRE Ex.1 | 1,600 g PRE from Ex.92 | | similar to Ex.2 |
| 96 | 3 | 18,000 g PRE Ex.1 | 18,000 g PRE from Ex.92 | | similar to Ex.3 |
| 97 | 3 bis | 17,000 g POL B | 17,000 g P from Ex.90 | | similar to Ex.3 |
| 98 | 4 | 18,000 g PRE Ex.1 | 18,000 g PRE from Ex.92 | | similar to Ex.4 |
| 99 | 4 bis | 17,000 g POL B | 17,000 g P from Ex.90 | | similar to Ex.4 |

| | | | | | | | |
|---|---|---|---|---|---|---|---|
| 100 | 5 | 18,000 | g PRE Ex.1 | 18,000 | g PRE from Ex.92 | | similar to Ex.4 |
| 101 | 5 bis | 17,000 | g POL B | 17,000 | g P from Ex.90 | | similar to Ex.4 |
| 102 | 6 | 16,000 | g PRE Ex.1 | 16,000 | g PRE from Ex.92 | | similar to Ex.6 |
| 103 | 6 bis | 15,000 | g POL B | 15,000 | g P from Ex.90 | | similar to Ex.6 |
| 104 | 7 | 16,340 | g 12-HA | 16,340 | g E - CL | 0.5 | similar to Ex.7 |
| 105 | 7 bis | 9,000 | g " | 9,000 | g E - CL | 3.5 | similar to Ex.7 |
| 106 | 8 | 16,340 | g " | 16,340 | g E - CL | 3.1 | similar to Ex.7 |
| 107 | 8 bis | 8,000 | g " | 8,000 | g E - CL | 3 | similar to Ex.8 |
| 108 | 9 | 16,340 | g " | 16,340 | g E - CL | 2 | similar to Ex.9 |
| 109 | 9 bis | 900 | Kg " | 900 | Kg E - CL | 2 | similar to Ex.9 |
| 110 | 10 | 1,900 | g PA Ex.9 | 1,900 | g PA Ex.108 | 2 | similar to Ex.10 |
| 111 | 10 bis | 19,000 | g PA Ex.9 bis | 19,000 | g PA Ex.109 | 2.1 | similar to Ex.10 |
| 112 | 11 | 12,000 | g PA Ex.9 | 12,000 | g PA Ex.108 | 5 | similar to Ex.11 |
| 113 | 11 bis | 12,000 | g PA Ex.9 bis | 12,000 | g PA Ex.109 | 6.1 | similar to Ex.11 |
| 114 | 12 | 1,700 | g PA Ex.9 | 1,700 | g PA Ex.108 | 2 | similar to Ex.12 |
| 115 | 12 bis | 16,000 | g PA Ex.9 bis | 16,000 | g PA Ex.109 | 2 | similar to Ex.12 |
| 116 | 13 | 16,500 | g PA Ex.9 | 16,500 | g PA Ex.108 | 2 | similar to Ex.12 |
| 117 | 13 bis | 16,500 | g PA Ex.9 bis | 16,500 | g PA Ex.109 | 2 | similar to Ex.12 |

| | | | | | |
|---|---|---|---|---|---|
| 118 | 14 | 16,000 g 12-HA | 16,000 g G - VL | 10 | similar to Ex.14 |
| 119 | 15 | 16,000 g " | 16,000 g G - OCL | 3 | similar to Ex.15 |
| 120 | 15 bis | 16,000 g POL A | 16,000 g POL Ex.89 | 3.5 | similar to Ex.15 |
| 121 | 16 | 16,000 g 12-HA | 16,000 g G - VL | 15 | similar to Ex.14 |
| 123 | 17 | 2,427 g RA<br>10,708 g 12-HA | 13,135 g G - BL | 9 | similar to Ex.17 |
| 124 | 17 bis | 2,500 g POL C<br>12,000 g POL A | 2,500 g POL Ex.91<br>12,000 g POL Ex.89 | 18 | similar to Ex.17 |
| 125 | 18 | 15,000 g 12-HA | 15,000 g G - BL | 12 | similar to Ex.18 |
| 126 | 18 bis | 15,000 g POL A | 15,000 g POL Ex.89 | 9 | similar to Ex.18 |
| 127 | 19 | 16,400 g 12-HA | 16,400 g G - BL | 5 | similar to Ex.19 |
| 128 | 19 bis | 10,600 g 12-HA | 10,600 g E - CL | 5 | similar to Ex.19 |
| 129 | 20 | 15,000 g 12-HA | 15,000 g E - CL | 33 | similar to Ex.20 |
| 130 | 20 bis | 17,000 g POL A | 17,000 g POL Ex.89 | 22 | similar to Ex.20 |

| | | | | | | |
|---|---|---|---|---|---|---|
| 131 | 21 | 17,000 | g 12-HA | 7,000 | g G - BL | 59 | similar to Ex.21 |
| | | | | 10,000 | g E - CL | | |
| 132 | 21 bis | 17,000 | g POL A | 17,000 | g POL Ex.89 | 55 | similar to Ex.21 |
| 133 | 22 | 16,000 | g 12-HA | 6,000 | g G - BL | 80 | similar to Ex.21 |
| | | | | 10,000 | g E - CL | | |
| 134 | 22 bis | 16,900 | g POL A | 16,900 | g POL Ex.89 | 83 | similar to Ex.22 |
| 135 | 23 | 33,000 | g PRE Ex.1 | 33,000 | g PRE Ex.92 | 3.2 | similar to Ex.23 |
| 136 | 23 bis | 30,000 | g POL B | 30,000 | g POL Ex.90 | 3 | similar to Ex.23 |
| 137 | 24 | 15,000 | g 12-HA | 5,000 | g G - BL | | similar to Ex.24 |
| | | | | 10,000 | g E - CL | | |
| 138 | 24 bis | 15,000 | g POL B | 15,000 | g POL Ex.90 | | similar to Ex.24 |
| 139 | 25 | 16,400 | g 12-HA | 6,400 | g G - BL | | similar to Ex.25 |
| | | | | 10,000 | g E - CL | | |
| 140 | 25 bis | 16,000 | g POL A | 16,000 | g POL Ex.89 | | similar to Ex.25 |

| | | | | | | | |
|---|---|---|---|---|---|---|---|
| 141 | 26 | 82,390 | g 12-HA | 82,390 | g E - CL | 7 | similar to Ex.26 |
| 142 | 26 bis | 8,500 | g POL A | 8,500 | g POL Ex.89 | 6.2 | similar to Ex.26 |
| 143 | 27 | 17,000 | g POL Ex.25 | 17,000 | g POL Ex.139 | 6.5 | similar to Ex.27 |
| 144 | 27 bis | 17,500 | g POL A | 17,500 | g POL Ex.89 | 6 | similar to Ex.27 |
| 145 | 28 | 17,900 | g POL Ex.25 | 17,900 | g POL Ex.139 | 1.5 | similar to Ex.27 |
| 146 | 28 bis | 18,000 | g POL A | 18,000 | g POL Ex.89 | 1.2 | similar to Ex.28 |
| 147 | 29 | 9,500 | g POL Ex.25 | 9,500 | g POL Ex.139 | 6.5 | similar to Ex.29 |
| 148 | 29 bis | 5,000 | g POL A | 5,000 | g POL Ex.89 | 2.5 | similar to Ex.29 |
| 149 | 30 | 16,500 | g PA Ex.7 | 16,500 | g PA Ex.107 | 0.3 | similar to Ex.29 |
| 150 | 30 bis | 16,800 | g PA Ex.9 bis | 16,800 | g PA Ex.109 | 0.2 | similar to Ex.29 |
| 151 | 31 | 22,400 | g 12-HA | 15,400 | g E - CL | 0.3 | similar to Ex.31 |
| | | | | 7,000 | g G - BL | | |
| 152 | 31 bis | 22,000 | g POL A | 22,000 | g POL Ex.89 | | similar to Ex.31 |
| 153 | 32 | 1,550 | g PA Ex.7 | 1,550 | g PA Ex.107 | 16.2 | |
| 154 | 33 | 1,550 | g " " | 1,550 | g " " | 11.5 | |
| 155 | 34 | 1,550 | g " " | 1,550 | g " " | 14.1 | |
| 156 | 35 | 1,550 | g " " | 1,550 | g " " | 15.9 | |

| | | | | | | | |
|---|---|---|---|---|---|---|---|
| 157 | 36 | 1,600 | g PA Ex.7 | 1,600 | g PA Ex.107 | 14 | |
| 158 | 37 | 1,600 | g " " | 1,600 | g " " | 10.2 | |
| 159 | 38 | 1,600 | g " " | 1,600 | g " " | 11.5 | |
| 160 | 39 | 1,500 | g " " | 1,500 | g " " | 9.8 | |
| 161 | 40 | 1,500 | g PRE Ex.21 | 1,500 | g PRE Ex.131 | 18.5 | |
| 162 | 41 | 1,600 | g " " | 1,600 | g " " | 16 | |
| 163 | 42 | 1,600 | g " " | 1,600 | g " " | 28 | |
| 164 | 43 | 8,239 | g 12-HA | 8,239 | g E - CL | 16 | |
| 165 | 44 | 1,600 | g PRE Ex.43 | 1,600 | g PRE Ex.164 | 15.5 | |
| 166 | 45 | 1,600 | g " " | 1,600 | g " " | 36 | |
| 167 | 47 | 2,500 | g POL Ex.25 | 2,500 | g POL Ex.139 | | similar to Ex.47 |
| 168 | 47 bis | 25,500 | g POL A | 25,500 | g POL Ex.89 | | similar to Ex.47 |
| 169 | 48 | 16,800 | g RA | 6,800 | g G - BL | 4.5 | similar to Ex.48 |
| | | | | 10,000 | g E - CL | | |
| 170 | 48 bis | 15,500 | g POL A | 15,500 | g POL Ex.89 | 4.2 | similar to Ex.48 |
| | | 15,500 | g POL C | 15,500 | g POL Ex.91 | | |

| | | | | | | | |
|---|---|---|---|---|---|---|---|
| 171 | 49 | 16,000 | g POL Ex.48 | 16,000 | g POL Ex.169 | | similar to Ex.49 |
| 172 | 49 bis | 16,500 | g POL C | 16,500 | g POL Ex.91 | 3.5 | similar to Ex.49 |
| 173 | 50 | 16,000 | g POL Ex.25 | 16,000 | g POL Ex.139 | | similar to Ex.50 |
| 174 | 50 bis | 16,500 | g POL A | 16,500 | g POL Ex.89 | | similar to Ex.50 |
| 175 | 51 | 16,000 | g POL Ex.25 | 16,000 | g POL Ex.139 | 3.2 | similar to Ex.51 |
| 176 | 51 bis | 16,500 | g POL A | 16,500 | g POL Ex.89 | 3.5 | similar to Ex.51 |
| 177 | 52 | 16,000 | g POL Ex.25 | 16,000 | g POL Ex.139 | 4.5 | similar to Ex.52 |
| 178 | 52 bis | 16,500 | g POL A | 16,500 | g POL Ex.89 | 4.1 | similar to Ex.52 |
| 179 | 53 | 18,000 | g POL Ex.25 | 18,000 | g POL Ex.139 | 6.3 | similar to Ex.52 |
| 180 | 53 bis | 18,500 | g POL A | 18,500 | g POL Ex.89 | 5.8 | similar to Ex.52 |
| 181 | 54 | 14,000 | g POL Ex.25 | 14,000 | g POL Ex.139 | 8.4 | similar to Ex.54 |
| 182 | 54/2 bis | 14,500 | g POL A | 14,500 | g POL Ex.89 | 9.2 | similar to Ex.54 |
| 183 | 54/3 | 8,000 | g 12-HA | 8,000 | g E - CL | 12.5 | similar to Ex.54/3 |
| 184 | 54/4 | 30,000 | g " | 10,000 | g G - BL | 2.3 | similar to Ex.54/4 |
| | | | | 20,000 | g E - CL | | |
| 185 | 54/5 | 31,000 | g POL A | 31,000 | g POL Ex.89 | | similar to Ex.54/4 |

| | | | | | | | |
|---|---|---|---|---|---|---|---|
| 186 | 54/6 | 18,500 | g 12-HA | 8,500 | g G - BL | 6.4 | similar to Ex.54/6 |
| | | | | 10,000 | g E - CL | | |
| 187 | 54/7 | 17,000 | g POL A | 17,000 | g POL Ex.89 | 12.2 | similar to Ex.54/6 |
| 188 | 54/8 | 8,500 | g 12-HA | 3,500 | g G - BL | 2.1 | |
| | | | | 5,000 | g E - CL | | |
| 189 | 54/9 | 16,000 | g " | 6,000 | g G - BL | 5.9 | similar to Ex.54/9 |
| | | | | 10,000 | g E - CL | | |
| 190 | 54/10 | 17,560 | g POL Ex.54/9 | 17,500 | g POL Ex.189 | 5.8 | similar to Ex.54/10 |
| 191 | 54/11 | 8,000 | g 12-HA | 3,000 | g G - BL | 5.4 | similar to Ex.54/11 |
| | | | | 5,000 | g E - CL | | |
| 192 | 54/12 | 8,000 | g " | 3,000 | g G - BL | 8.6 | similar to Ex.54/12 |
| | | | | 5,000 | g E - CL | | |
| 193 | 54/13 | 32,000 | g " | 12,000 | g G - BL | 9.1 | similar to Ex.54/13 |
| | | | | 20,000 | g E - CL | | |

| | | | | | | | |
|---|---|---|---|---|---|---|---|
| 194 | 54/14 | 15,000 | g POL Ex.54/13 | 15,000 | g POL Ex.193 | 5.4 | similar to Ex.54/14 |
| 195 | 54/15 | 16,000 | g " " | 16,000 | g " " | 5.1 | similar to Ex.54/15 |
| 196 | 54/16 | 12,000 | g " " | 12,000 | g " " | 7.5 | similar to Ex.54/16 |
| 197 | 54/17 | 15,000 | g " " | 15,000 | g " " | 7.2 | " " " |
| 198 | 54/18 | 15,000 | g " " | 15,000 | g " " | 6.9 | similar to Ex.54/18 |
| 199 | 54/19 | 15,000 | g " " | 15,000 | g " " | 7.3 | similar to Ex.54/16 |
| 200 | 54/20 | 30,000 | g " " | 30,000 | g " " | 4.8 | similar to Ex.54/20 |
| 201 | 55 | 1,800 | g PM Ex.1 | 1,800 | g PM Ex.92 | 8.2 | |
| 202 | 56 | 2,000 | g PM Ex.2 | 2,000 | g PM Ex.94 | 5.4 | |
| 203 | 57 | 2,000 | g PM Ex.3 | 2,000 | g PM Ex.96 | 7.5 | |
| 204 | 58 | 2,000 | g PM Ex.4 | 2,000 | g PM Ex.98 | 3.5 | |
| 205 | 59 | 1,700 | g P Ex.7 | 1,700 | g P Ex.104 | 3.2 | |
| 206 | 60 | 1,800 | g P Ex.8 | 1,800 | g P Ex.106 | 3.5 | |
| 207 | 61 | 1,600 | g P Ex.9 | 1,600 | g P Ex.108 | | |
| 208 | 62 | 1,700 | g P Ex.10 | 1,700 | g P Ex.110 | | |
| 209 | 63 | 1,500 | g P Ex.11 | 1,500 | g P Ex.112 | | |
| 210 | 64 | 1,800 | g P Ex.12 | 1,800 | g P Ex.114 | | |
| 211 | 65 | 1,700 | g P Ex.13 | 1,700 | g P Ex.116 | | |

| | | | |
|---|---|---|---|
| 212 | 66 | 1,700 g P Ex.14 | 1,700 g P Ex.118 |
| 213 | 67 | 1,600 g P Ex.15 | 1,600 g P Ex.119 |
| 214 | 68 | 1,500 g P Ex.16 | 1,500 g P Ex.121 |
| 215 | 69 | 1,500 g P Ex.17 | 1,500 g P Ex.123 |
| 216 | 70 | 2,000 g P Ex.18 | 2,000 g P Ex.125 |
| 217 | 71 | 2,000 g P Ex.19 | 2,000 g P Ex.127 |
| 218 | 72 | 2,000 g P Ex.20 | 2,000 g P Ex.129 |
| 219 | 73 | 1,800 g P Ex.21 | 1,800 g P Ex.131 |
| 220 | 74 | 1,800 g P Ex.22 | 1,800 g P Ex.133 |
| 221 | 75 | 1,600 g P Ex.25 | 1,600 g P Ex.139 |
| 222 | 76 | 1,600 g P Ex.26 | 1,600 g P Ex.141 |
| 223 | 77 | 1,500 g P Ex.27 | 1,500 g P Ex.143 |
| 224 | 78 | 1,500 g P Ex.28 | 1,500 g P Ex.145 |
| 225 | 79 | 2,000 g P Ex.29 | 2,000 g P Ex.147 |
| 226 | 80 | 1,900 g P Ex.30 | 1,900 g P Ex.149 |
| 227 | 81 | 1,800 g P Ex.32 | 1,800 g P Ex.153 |
| 228 | 82 | 2,000 g P Ex.48 | 2,000 g P Ex.169 |
| 229 | 83 | 2,000 g P Ex.49 | 2,000 g P Ex.171 |

| | | | | | |
|---|---|---|---|---|---|
| 230 | 84 | 2,000 | g P Ex.50 | 2,000 | g P Ex.173 |
| 231 | 85 | 1,800 | g P Ex.51 | 1,800 | g P Ex.175 |
| 232 | 86 | 1,800 | g P Ex.52 | 1,800 | g P Ex.177 |
| 233 | 87 | 2,200 | g P Ex.53 | 2,200 | g P Ex.179 |
| 234 | 88 | 2,000 | g P Ex.54 | 2,000 | g P Ex.181 |
| 235 | 88 a | 2,000 | g P Ex.54/3 | 2,000 | g P Ex.183 |
| 234 | 88 b | 2,000 | g P Ex.54/4 | 2,000 | g P Ex.184 |
| 235 | 88 c | 2,000 | g P Ex.54/5 | 2,000 | g P Ex.185 |
| 236 | 88 d | 2,000 | g P Ex.54/6 | 2,000 | g P Ex.186 |
| 237 | 88 e | 2,000 | g P Ex.54/9 | 2,000 | g P Ex.189 |
| 238 | 88 f | 2,000 | g P Ex.54/10 | 2,000 | g P Ex.190 |
| 239 | 88 g | 2,000 | g P Ex.54/11 | 2,000 | g P Ex.191 |
| 240 | 88 h | 2,000 | g P Ex.54/12 | 2,000 | g P Ex.192 |
| 241 | 88 i | 2,000 | g P Ex.54/13 | 2,000 | g P Ex.193 |
| 242 | 88 l | 2,000 | g P Ex.54/14 | 2,000 | g P Ex.194 |
| 243 | 88 m | 2,000 | g P Ex.54/15 | 2,000 | g P Ex.195 |
| 244 | 88 n | 2,000 | g P Ex.54/16 | 2,000 | g P Ex.196 |
| 245 | 88 o | 2,000 | g P Ex.54/17 | 2,000 | g P Ex.197 |

| | | | | | |
|---|---|---|---|---|---|
| 246 | 88 p | 2,000 | g P Ex.54/18 | 2,000 | g P Ex.198 |
| 247 | 88 q | 2,000 | g P Ex.54/19 | 2,000 | g P Ex.199 |
| 248 | 88 r | 2,000 | g P Ex.54/20 | 2,000 | g P Ex.200 |

In the above Table:

HA means hydroxystearic acid

D means decanediol

RA means ricinoleic acid

POL means polyester

PRE means prepolymer

PA means polyesteramide

PM means polymer

P means product

CL means caprolactone

BL means butyrolactone

VL means valerolactone

OCL means octanoic lactone

E means epsilon and G means gamma

## Dispersions

In the following examples there are described the dispersions of several organic and inorganic pigments (see Pigment Table); they can be used both in powder form and in presscakes (presscakes = pigment/water mixture, obtained after the last washing of the pigment and the last treatment in filter-press).

In the press-cakes the pigment content variates from 20% to 48%. The inorganic fillers as carbonates, silicates etc., and other solid particles, flame retardant, antioxidants and others, are used almost always as powders.

| | | | | | | |
|---|---|---|---|---|---|---|
| a | C.I. N. | 12775 | Pigment Green | N. | 10 | Nichel Metallized Azo |
| b | C.I. N. | 11710 | Pigment Yellow | N. | 3 | Hansa Yellow 10 G |
| c | C.I. N. | 11740 | | | | Hansa Yellow RN |
| d | C.I. N. | 68420 | Vat Yellow | N. | 20 | Anthrapyrimidine Yellow |
| e | C.I. N. | 70600 | Vat Yellow | N. | 1 | Flavanthrone Yellow |
| f | C.I. N. | 59710 | Vat Orange | N. | 4 | Pyranthrone Scarlet |
| g | C.I. N. | 71140 | Vat Red | N. | 29 | Perylene Scarlet |
| h | C.I. N. | 68000 | Vat Red | N. | 35 | Acridone Red |
| i | C.I. N. | | Red | N. | 88 | Thio Indigo Red Violet B |
| l | C.I. N. | 60010 | Vat Violet | N. | 1 | Iso Violanthrone Violet B |
| m | C.I. N. | 69825 | Vat Blue | N. | 6 | Indanthrone Blue, Red Shade |
| n | C.I. N. | 69810 | Vat Blue | N. | 14 | Indanthrone Blue, Green Shade |
| o | C.I. N. | 74160 | Pigment Blue | N. | 15 | Phthalo Blue, Red Shade |
| p | C.I. N. | 74160 | Pigment Blue | N. | 15 | Phthalocyanine Blue, NF |
| q | C.I. N. | 74160 | Pigment Blue | N. | 15 | Phthalo Greenish (Beta) |
| r | C.I. N. | 74260 | Pigment Green | N. | 7 | Phthalocyanine Green |
| s | C.I. N. | 74260 | Pigment Green | N. | 7 | Phthalo Green Yellowish |

| | | | | |
|---|---|---|---|---|
| t | C.I. N. | Quinacridone Red | | |
| u | C.I. N. | | | Carbazole Dioxazine Violet |
| v | C.I. N. 77891 | Pigment White | N. 1 | Titan Dioxide |
| z | C.I. N. 77520 | Pigment Blue | N. 27 | Iron Blue |
| y | C.I. N. 77266 | Pigment Black | N. 7 | Special SW4 |
| x | C.I. N. 77491 | Pigment Brown | N. 6 | |
| w | C.I. N. 77492 | Pigment Brown | N. 7 | |
| j | C.I. N. 77220 | Pigment White | N. 18 | |
| ae | C.I. N. 77052 | Pigment White | N. 11 | |
| ö | C.I. N. 77947 | Pigment White | N. 4 | |
| k | C.I. N. 77005 | Pigment White | N. 19 | |
| pg | C.I. N. 77120 | Pigment White | N. 21. | |

Such examples are referred also to four known technics to obtain solid dispersions: flushings, chips, extrusions, pseudoflushings.

When in each example there are no particular specifications, there has been proceeded following the general methods described below.

Flushing:

In a kneader mixer, having a capacity of 2,200 l, having a two speeds engine of 180 Hp, a cooling and heating jacket and a vacuum device (W & Ph), there are admixed: 300 parts of pigment, as presscakes, and 200 parts of one of the products described in Example 32-39; 42-45; or 55-88.

The products are mixed at 135° C and at 50 r.p.m. speed. There is separated 80% of the water contained in the presscake and there are added 300 parts more pigment, as presscake and 200 parts of one of the products described in Example 32-39; 42-45; or 55-88.

There is separated more water mixing the products at 50 r.p.m. at 135° C.

The kneader is set under vacuum at 30 mm Hg of residual pressure and the mixing speed is raised to 100 r.p.m., and it is maintained until the total water content of the final product is lower than 2%.

The mixer is cooled down to 30° C, while it is stopped. Then the product is powderized by operating for a few seconds the blades of the kneader mixer, at low speed.

Chip:

Example of equipments which can be used to perform this method are: (a) "Bambury" of "Farrel Birmingham Co" type, (b) extra heavy duty kneader mixer with tangential full blades and floating vertical compressor and (c) heavy duty kneader mixer with Z type blades of W & Ph and Battagion types.

E.g. there has been chosen a kneader mixer type W & Ph having a capacity of 260 l, provided with a hydraulic compressing piston double slope pressing plate and tangential full blades, heating and cooling jacket.

In the above mentioned W & Ph mixer there are admixed: 60 parts of pigment and 40 parts of one of the products described in Example 55-73 or 76. When instead there are used dispersants prepared according to Examples 74-75 and 77-83 the quantities employed are 75 parts of pigment and 25 parts of dispersant.

The products have been mixed at 60 r.p.m. speed, keeping the mixer closed and the pressing plate lowered a few centimeters under the upper port of the mixer. The product is heated at 80° C, by external heat. After 10 minutes mixing, the speed of the mixer is increased to 120 r.p.m. and the pressing plate is lowered to the lowest level.

The jacket of the mixer is heated, by oil circulation at 135° C and the mixing is continued at this temperature at 120 r.p.m. The pressing plate of the mixer is lifted to the highest level and the mixing is continued for 5 minutes more, while the jacket of the mixer is cooled down to 15° C.

The kneader mixer is stopped for 60 minutes. The product is then crashed by operating again the blades of the mixer at low speed.

Extrusion:

There are used: a stainless turbine mixer having a tip speed of 1,500 r.p.m. and a capacity of 100 litres, having two feed hoppers placed on its cover for the feeding of solid matters; and a double screw extruder, having a variable temperature and the feed hopper of which is placed directly under the turbine mixer and it is connected with it by a closed duct.

The extrusions are performed at temperatures which are normally 2° C higher than the melting temperature of the polymer used as dispersing medium. The last part of the extrusion chamber should be cooled in such way that the extruder filament may come out from the output die at 35° C temperature lower than the melting point of the polymer used as dispersing matter. At a small distance from the output nozzle it is placed a water cooled pelleting device, ,connected with a plastic pipe which joins the extruder to an air drier. From the air drier the extruder pellets are introduced into hot air circulating stoves.

There are admixed, in the turbine mixer, 55 parts of dry pigment and 45 parts of one of the polymers described in Examples 55-60, 62-73, 76, 88i. In case there are used the dispersants described in Examples 74-75 and 77-83, there are employed 75 parts of pigment and 25 parts of dispersant. The components are mixed at 1,500 r.p.m. for 5 minutes. There is opened the feeder connected with the extruder hopper and the mixture is feeded into the extruder. The plastic filament is extruded, pelleted and dried. The combinations of different screws type are chosen according to the different variety of materials to be extruded, to their hardness and their melting temperature.

Preferably, there are used multiple screw extruders fit to extrusions, of very concentrated matters, which should be performed at temperature from 50 to 220° C.

Pseudoflushing:

There are admixed in a heavy duty kneader mixer, 60 parts of pigment, 50 parts of water and 10 parts of isopropanol and they are mixed until there is obtained a homogenous mixture.

The mixture is then treated as previously described as regards the flushing procedure. There is obtained a product containing 60% of pigment and 40% of one of the products described in Examples 32-39, 42-45 or 55-88r.

Dispersions 1-46

These dispersions have been prepared according to the flushing method. Here in succession, there are specified the compositions of the dispersions from 1 to 46 indicating, in parenthesis, the numbers related to the Examples of the dispersants used and the letters of the pigments used and described in the pigment Table.

1(32, b); 2(33, c); 3(34, d); 4(35, e); 5(36, h); 6(37, i); 7(38, l); 8(39, m); 9(42, n); 10(43, o); 11(44, p); 12(45, q); 13(55, r); 14(56, s); 15(57, t); 16(58, b); 17(59, c); 18(60, d); 19(61, e); 20(62, h); 21(63, i); 22(64, l); 23-(65, m); 24(66, n); 25(67, o); 26(68, p); 27(69, g); 28(70, r); 29(71, s); 30(72, t); 31(73, b); 32(74, c); 33(75, d); 34(76, e); 35(77, h); 36(78, i); 37(79, l); 38(80, m); 39(81, n); 40(82, o); 41(83, p); 42(84, q); 43(85, r); 44-(86, s); 45(87, t); and 46(88, b).

The dispersions have been examined at the microscope by "BASF method" and there has been found that the dispersion degree is between 6 and 7, in the BASF scale related to dispersions of thermoplastic materials.

In the above mentioned scale the poorest degree of dispersion is 1 and the best degree of dispersion is 7.

## Dispersions 47-74

These dispersions are made according to the "Chip" method. The numbers and the letters written in parenthesis have the same meanings as the ones described in Examples 1-46.
47(55, a); 48(56, b); 49(57, c); 50(58, d); 51(59, e); 52(60, f); 53(61, g); 54(62, h); 55(63, i); 56(64, e); 57(65, m); 58(66, n); 59(67, o); 60(68, p); 61(69, q); 61 bis(70, r); 62(71, s); 63(72, t); 64(73, u); 65(76, y); 66(74, v); 67(75, z); 68(77, x); 69(78, w); 70(79, j); 71(80, ae); 72(81, ö); 73(82, k) and 74(83, pg). The dispersions have been exmined at the microscope by BASF method and there has been found that the dispersion degree of them is between 6 and 7.

## Dispersions 75-103

The dispersions have been prepared according to the "Extrusion" method.

The numbers and the letters written in parenthesis have the same meanings of those written as regards Examples 1-46.
75(55, a); 76(56, b); 77(57, c); 78(58, d); 79(59, e); 80(60, f); 81(88i, g); 82(62, h); 83(63, i); 84(64, l); 85-(65,m); 86(66,n); 87(67, o); 88(69; q); 90(70, r); 91(71, s); 92(72, t); 93(73, n); 94(76, y); 95(74, v); 96(75, z); 97(77, x); 98(78, w); 99(79, j); 100(80, ae); 101(81, o); 102(82, k) and 103(83, pg).

The dispersions have been examined at the microscope according to BASF method and there has been found that the dispersion degree of them is between 6 and 7.

## Dispersion 104

There has been used a kneader mixer having the following characteristics: capacity 1,500 l, motor 100 Hp (having two speeds: 50 and 100 r.p.m., heating and cooling jacket connected with an oil heating and circulating device and with heat exchangers for cooling; a vacuum device able to set 5 mm Hg of residual pressure inside the kneader, overlapping blades; type W & Ph.

Red 57.1

In a mixer having the above mentioned characteristics there are admixed:

650 Kg of press cake at 28% solid = 182 Kg of Carmine 6B powder, and

30 Kg of dispersant from Ex. 14 (100%).

The products have been mixed for 15 minutes at 50 r.p.m., while the jacket of the mixer is heated at 60°C.

Then there are added:

120 Kg PKWF 240/270 Haltermann

800 Kg

Maintaining the temperature at 60°C while mixing there have been separated and discharged

370 Kg water

430 Kg

Then there are added and mixed,

650 Kg of press cake at 28% solid = 182 Kg Carmine 6B powder; and

35 Kg of dispersant from Ex. 14 (100%).

The products have been mixed for 15 minutes at 50 r.p.m.

Then there are added:

80 Kg PKWF 240/270 AF Haltermann

1,195 Kg

Maintaining the temperature at 60°C while mixing, there have been separated and discharged

485 Kg water

710 Kg

Then there are added and mixed

325 Kg of press cake at 28% solid = 91.0 Kg Carmine 6B powder; and

15 Kg of dispersant of Example 14 (100%)

50 Kg of PWKF 240/270 Haltermann

1,100 Kg

Maintaining the temperature at 60°C while mixing, there have been separated and discharged

235 Kg water

865 Kg

The content of the mixer is set under vacuum. The temperature of the jacket is raised to 90°C and the speed is raised to 100 r.p.m. Then there are added, over a period of 20 minutes,

40 Kg of PKWF 240/270 AF Haltermann

905 Kg

The product is maintained under vacuum (10 mm Hg of residual pressure) at 100 r.p.m. speed, until the water remained in the product is lower than 0.5%

80 Kg water

825 Kg

of the final product have the following formula:

55.15% Seikafast Carmine 6B - 1483 - LT Dainichiseika

9.70% Dispersant Ex. No. 14

35.15% PKWF 240/270 AF Haltermann

100.00%

The speed of the mixer is reduced to 50 r.p.m. and the temperature is reduced to 20°-30° C, the product is mixed at this temperature for 15 minutes before it is discharged in the packaging drums.

The average size of the agglomerates of the dispersion analysed at the microscope is lower than 3 microns.

## Dispersions 105-145

With a similar method as the one described in Example 104 there are obtained some dispersions having the same characteristics of the ones described in it, by replacing with an equal quantity of one of the dispersants made according to Examples 1 bis, 2 bis, 6 bis, 7 bis, 8 bis, 12 bis, 13 bis, 15 bis, 17 bis, 22 bis, 1, 2, 6, 7, 8, 12, 13, 14, 15, 16, 17, 22, 26, 28, 51, 53, 54/3, 54/4, 54/6, 54/8, 54/9, 54/10, 54/11, 54/12, 54/13, 54/14, 54/15, 26 bis, 28 bis, 51 bis, 53 bis.

## Dispersions 146-148

The dispersions according to the present invention are particularly suitable to disperse also those pigments named lakes.

Examples of such lakes are the compounds having the following chemical structures:

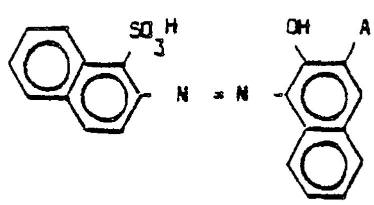

| | | |
|---|---|---|
| Red | 49:1 | (Ba salt; A = H) |
| Red | 49:2 | (Ca salt; A = H) |
| Red | 63 | (Ca salt; A = COOH) |

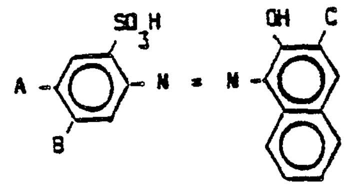

| | | | | | |
|---|---|---|---|---|---|
| Red | 48:1 | (Ba salt) | A = $CH_3$ | B = Cl | C = COOH |
| Red | 48:2 | (Ca salt) | A = $CH_3$ | B = Cl | C = COOH |
| Red | 48:4 | (Mn salt) | A = $CH_3$ | B = Cl | C = COOH |
| Red | 52:1 | (Ca salt) | A = Cl | B = $CH_3$ | C = COOH |
| Red | 52:2 | (Mn salt) | A = Cl | B = $CH_3$ | C = COOH |
| Red | 53:1 | (Ba salt) | A = Cl | B = $CH_3$ | C = H |
| Orange | 46 | (Ba salt) | A = Cl | B = $C_2H_5$ | C = H |
| Red | 200 | (Ca salt) | A = Cl | B = $C_2H_5$ | C = COOH |
| Red | 57:1 | (Ca salt) | A = Cl | B = H | C = COOH |

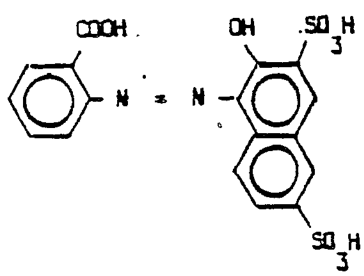

Red 60:1 (Ba salt)

Dispersion 148

Red 53:1

In a mixer as the one described as regards Dispersion 104, there are admixed:

850 Kg of press cake at 28% solid = 236.5 Kg of Lake Red CT-14, and

40 kg of the dispersant of Example 26 (100%).

The product has been mixed for 15 minutes at 50 r.p.m. while the jacket of the mixer is heated at 60°C.

Then there are added:

120 Kg of PKWF 240/270 AF Haltermann

1,010 Kg

Maintaining the temperature at 60°C while mixing, there have been separated and discharged:

491 Kg of water

519 Kg

Then there have been added:

630 Kg of press cake at 27.8% of solid = 175 Kg Lake Red CT-14, and

23 Kg of the Dispersant of Example 26 (100%).

The product has been mixed for 15 minutes at 50 r.p.m., maintaining the temperature constant.

Then there have been added:

50 Kg of PKWF 240/270 AF

1,220 Kg

Maintaining the temperature at 60°C while mixing, there have been separated and discharged

475 Kg of water

747 Kg

Then there have been added and mixed

| | |
|---|---|
| 330 Kg | of press cake at 27.8% of solid = 91.7 Kg of Lake Red CT-14, |
| 17 Kg | of the dispersant of Example 26 (100%), and |
| 20 Kg | of PKWF 240/270 AF Haltermann |
| 1,114 Kg | |
| | Maintaining the temperature at 60°C while mixing, there have been separated and discharged |
| 288 Kg | of water |
| 826 Kg | |
| | The mixer content is set under vacuum (10 mm Hg of residual pressure) and the blade speed is set to 100 r.p.m., until the remaining water is lower than 0.5% |
| 53 Kg | water |
| 813 Kg | |
| | of product having the following composition: |

| | |
|---|---|
| 62.0% | Seikafast Lake Red CT-14 |
| 9.8% | Dispersant of Example 26 |
| 28.2% | PKWF 240/270 AF |
| 100.0% | |

The mixer speed has been reduced to 50 r.p.m. and the temperature of the product is reduced to 25°-30°C. The product has been mixed for 15 minutes more before being discharged into the packaging drums.

The average size of the agglomerates of the dispersion is lower than 3 microns.

Dispersion 149

Red 48.2

In a kneader mixer as the one described in Dispersion 104 there have been admixed:

900 Kg of press cake at 22.5% solid = 256.5 Kg Red 2B-Ca

Lake, and

43 Kg of the dispersant of Example 53 (100%).

The products have been mixed for 15 minutes at 50 r.p.m. while the jacket of the mixer has been heated at 60°C

130 Kg of PKWF 260/290 AF Haltermann

1,073 Kg

Maintaining the temperature at 60°C while mixing, there have been separated and then discharged:

515 Kg water

558 Kg

Then there have been added and mixed

450 Kg of press cake at 28.5% of solid = 128.2 Kg of Red 2B-Ca Lake,

23 Kg of Dispersant from Example 53 (100%), and

70 Kg of PKWF 260/290 AF Haltermann

1,101 Kg

Maintaining the temperature at 60°C while mixing there have been separated and discharged:

300 Kg water

801 Kg

Then there have been added:

300 Kg of press cake at 28.5% of solid = 85.5 Kg of Red 2B Ca Lake,

14 Kg of Dispersant from Example 53 (100%)

20 Kg of PKWF 260/290 AF Haltermann

1,135 Kg

Maintaining the temperature at 60°C while mixing, there have been separated and discharged:

330 Kg water

805 Kg

The mixer content is then set under vacuum. The temperature is raised to 85°C and the speed is set at 100 r.p.m. Over a period of 20 minutes there are then added

20 Kg of PKWF 260/290 AF Haltermann

825 Kg

At the above mentioned speed and temperature, the product is set under vacuum (10 mm Hg of residual pressure) until the water content of the final product is lower than 0.5%

35 Kg water

790 Kg of product having the following composition:

59.5% Seikafast Red 1547 Dainichiseika,

10.1% Dispersant of Example 53

30.4% PKWF 260/290 AF

100.0%

There have been reduced the speed of the mixer to 50 r.p.m. and the temperature at 25°-30°C. The product has been mixed for 10-15 minutes more, before being discharged into the packaging drums. The average size of the agglomerates of the dispersions, examined at the microscope, is lower than 3 microns.

Dispersion 150

Red 81

In a kneader mixer as the one described according to Dispersion 104, there have been admixed:

1,050 Kg of press cake at 24.6% of solid = 258.3 Kg of Seikalight Rose R 40,

| | |
|---|---|
| 35 Kg | of the dispersant produced according to Example 15 (100%). |
| | The products have been mixed for 15 minutes at 50 r.p.m. while the jacket of the mixer has been heated at 60°C. |
| | Then there have been added: |
| 115 Kg | of PKWF 260/290 AF Haltermann |
| 1,200 Kg | |
| | Maintaining the temperature at 60°C, while stirring, there have been separated and discharged |
| 555 Kg | water |
| 645 Kg | |
| | Then there have been added and mixed |
| 400 Kg | of press cake at 24.6% of solid = 98.4 Kg Seikalight Rose R 40, |
| 20 Kg | of Dispersant produced according to Example 15 (100%) |
| 20 Kg | of PKWF 260/290 Haltermann |
| 1,085 Kg | |
| | Maintaining the temperature at 60°C while mixing, there have been separated and discharged: |
| 212 Kg | water |
| 873 Kg | |
| | Then there have been added: |
| 250 Kg | of press cake at 24.6% of solid = 61.5 Kg of Seikalight Rose R 40, |
| 25 Kg | of dispersant produced according to Example 15 (100%) |
| 45 Kg | of PKWF 260/290 AF Haltermann |
| 1,193 Kg | |
| | Maintaining the temperature at 60°C while mixing there have been separated and then discharged: |

388 Kg water

805 Kg

Then there have been added:

14 Kg of Dispersant produced according to Example 15 (100%)

819 Kg

Maintaining the temperature at 60°C while mixing, there have been separated and then discharged:

80 Kg water

739 Kg

The content of the mixer has been set under vacuum (10 mm Hg residual pressure) at the temperature of 65°C (max) and mixed at 100 r.p.m. until the water content of it is lower than 2%

40 Kg water

699 Kg of product having the following composition:

59.9% Seikalight Rose R 40 Dainichiseika,

13.4% of Dispersant from Example 15

25.7% PKWF 260/290 AF

1.0% water

100.0%

There have been reduced the speed of the mixer to 50 r.p.m. and the temperature to 25°-30°C. The product has been mixed for 10-15 minutes more, before being discharged into the packaging drums. The average size of the agglomerates of the dispersion, examined at the microscope, is lower than 3 microns.

Dispersions 151-172

In a kneader mixer having the same mechanical characteristics as those of the one used in connection with Dispersion 104, but being 100 times smaller, there have been prepared some dispersions, using similar procedure as the one used according to Dispersion 150, but using weight quantities of press cake (pigment), dispersant and mineral oil 100 times lower, while the dispersant described in Example 15 is substituted with the products made according to Example 1, 2, 3, 4, 5, 14, 18, 20, 26, 49, 54/3, 54/12, 54/19, 1 bis, 2 bis, 3 bis, 4 bis, 5 bis, 18 bis, 20 bis, 26 bis, 49 bis.

The dispersion degree has been examined at the microscope and it has been found to be similar to the one of Dispersion 150.

Dispersion 173

There has been used the same method as for the Dispersion 150 but replacing the pigment content with Violet 1 (Seikalight Magenta 2R, Dainichiseika). The dispersion thus obtained has shown the same characteristics as the one of Dispersion No. 123.

The Dispersants of the present invention can be, therefore, utilized with pigments having the following formulas:

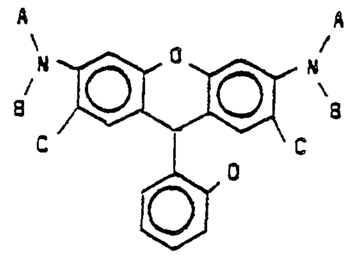

| | | | | |
|---|---|---|---|---|
| Red 81 | A = $C_2H_5$, | B = H, | C = $CH_3$ | D = $COOC_2H_5$ |
| Violet 1 | A = B = $C_2H_5$ | | C = H, | D = COOH |

Dispersion 174

Violet 23

In a kneader mixer similar to the one described as regards Dispersion 104 there have been admixed:

1,050 Kg of press cake at 25% of solid = 262.5 Kg of Chromofine Violet RE, and

35 Kg of Dispersant made according to Example 54/3 100%. The products have been mixed for 15 minutes at 50 r.p.m. while the jacket of the mixer has been heated at 60°C. Then there are added:

115 Kg of PKWF 260/290 AF Haltermann

1,200 Kg

Maintaining the temperature at 60°C, while mixing, there have been separated and discharged

630 Kg water

570 Kg

Then there have been added and mixed

550 Kg of press cake at 25% of solid = 137.5 Kg of Chromofine Violet RE,

28 Kg of Dispersant made according to Example 54/3 (100%), and

30 Kg of PKWF 260/290 AF Haltermann

1,178 Kg

Maintaining the temperature at 60°C, while mixing, there have been separated and discharged:

340 Kg water

838 Kg

Then there have been added and mixed:

250 Kg of press cake at 25% of solid = 62.5 Kg of Chromofine Violet RE,

25 Kg of Dispersant made according to Example 54/3 (100%), and

45 Kg of PKWF 260/290 AF Haltermann

1,158 Kg

Maintaining the temperature at 60°C, while mixing there have been separated and discharged:

360 Kg water

798 Kg

The content of the mixer has been set under vacuum (10 mm Hg) at 65°C, while mixing at 100 r.p.m. until the water content of the product is lower than 2%.

53 Kg water

745 Kg of the product having the following composition:

62.1% Chromofine Violet RE, Dainichiseika,

11.8% of Dispersant made according to Example 54/3,

25.5% PKWF 260/290 AF Haltermann, and

0.6% water

100.0%

There have been reduced the speed of the mixer to 50 r.p.m., and the temperature to 25°-30°C. The product is mixed 10-15 minutes more before being discharged into the packaging drums.

The average size of the agglomerates of the dispersion, examined under the microscope, is lower than 3 microns.

## Dispersion 175

Phthalocyanine Blue 15:3

In a kneader mixer as the one described as regards Dispersion 104, there have been admixed:

750.0 Kg of press cake at 50% of solid = 375 Kg Sunfast blue, green shade,

107.5 Kg of the Dispersant made according to Ex. 11 (100%).

The products have been mixed for 15 minutes at 50 r.p.m. while the jacket of the mixer has been heated at 60°C.

Then there have been added:

| | |
|---|---|
| 225.0 Kg | of PKWF 260/290 AF Haltermann |
| 1,082.5 Kg | |
| | Maintaining the temperature at 60°C, while mixing, there have been separated and discharged |
| 320.0 Kg | water |
| 762.5 Kg | |
| | Then there have been added and mixed: |
| 300.0 Kg | press cake at 50% solid = 150 Kg of Sunfast blue, green shade, |
| 72.5 Kg | of Dispersant made according to Example 11 (100%), and |
| 55.0 Kg | PKWF 260/290 AF Haltermann |
| 1,190.0 Kg | |
| | Maintaining the temperature at 60°C, while mixing, there have been separated and discharged |
| 185.0 Kg | water |
| 1,005.0 Kg | |
| | The content of the mixer has been set under vacuum (10 mm Hg) at 85°C, while mixing at 100 r.p.m., until the water content of the product is lower than 2%. |
| 20.0 Kg | water |
| 985.0 Kg | of the product having the following composition: |

| | |
|---|---|
| 53.3% | Sunfast blue (green shade) Sun Chemical |
| 18.3% | of Dispersant made according to Example 11 |
| 28.4% | PKWF 260/290 AF Haltermann |
| 100.0% | |

There have been reduced the speed of the mixer to 50 r.p.m. and the temperature to 25°-30°C. The product has been mixed 10-15 minutes more before being discharged into the packaging drums.

The dispersion has been examined under the microscope and there has been found that the average size of the agglomerates of the dispersion is lower than 3 microns.

Dispersions 176-177

In a similar way as described in regard to Dispersion 175, there have been prepared two dispersions containing, respectively, the following pigments:

| | | |
|---|---|---|
| pigment green 7 C.I. | No. 74260 | $C_{32}H_2N_8Cl_{14}Cu$; |
| pigment green 36 C.I. | No. 74265 | $C_{32}H_2N_8Br_9Cl_2Cu$. |

The dispersions have been examined at the microscope and they have been found to have similar characteristics as Dispersion 175.

Dispersions 178-180

In a similar way as described in regard to Dispersion 175, there have been prepared three dispersions, substituting the Dispersant of Example 11 with an equal amount (percentage) of the dispersants produced according to Example 6, 10 and 24. Said dispersions have been prepared in a mixer having the capacity of 15 l, having the same characteristics of the one described as regards Dispersion 104, and the same speeds. The dispersions thus obtained have been examined under the microscope and it has been found that the average size of their agglomerates is lower than 3.8 microns.

Dispersion 181

Alkaliblue 68 C.I. 42765

In a kneader mixer as the one described as regards Dispersion 104, there have been admixed:

1,200 Kg of press cake at 22% of solid = 264 Kg of Alkaliblue 6B, BASF

90 Kg of Dispersant produced according to Example 2 (100%). The products have been mixed for 15 minutes at 50 r.p.m. while the jacket of the mixer has been heated at 60°C. Then there have been added

130 Kg of PKWF 240/270 AF

1,420 Kg

Maintaining the temperature at 60°C, while mixing, there have been separated and discharged

715 Kg water

705 Kg

Then there have been added and mixed:

350 Kg of press cake at 22% solid = 77 Kg Alkaliblue 6B, BASF,

40 Kg of Dispersant produced according to Example 2 (100%), and

60 Kg PKWF 240/270 AF

1,155 Kg

Maintaining the temperature at 60°C, while mixing, there have been separated and discharged

250 Kg water

905 Kg

Then there have been added and mixed

150 Kg of press cake at 22% of solid = 22 Kg Alkaliblue 6B,

BASF,

10 Kg of Dispersant produced according to Example 2 (100%), and

38 Kg PKWF 240/270 AF Haltermann

1,103 Kg

Maintaining the temperature at 60°C, while mixing, there have been separated and discharged

290 Kg water

813 Kg

The mixer content has been set under vacuum, at 75°C, while mixing at 100 r.p.m., until the water content of the product is lower than 4%

48 Kg water

765 Kg of product having the following composition:

48.9% Alkaliblue 6B BASF

18.3% Dispersant made according to Example 2

29.8 PKWF 240/270 AF

3.0% water

100.0%

There have been reduced the speed of the mixer to 50 r.p.m. and the temperature to 25°-30°C. The product is mixed 10-15 minutes more, before being discharged into the packaging drums. The dispersion has been examined under the microscope and there has been found that the average size of its agglomerates is lower than 3.8 microns.

Dispersions 182-192

In a kneader mixer having the capacity of 15 l, the same scale characteristics of the one described in Dispersion 104 and the same speed, there has been proceeded as regards Dispersion 181, maintaining constant the percentage ratio between the components, while the dispersant made according to Example 2 has been substituted with the dispersants of Example 54/15, 51, 53, 18, 15, 12, 51 bis, 53 bis, 18 bis, 15 bis and 12 bis.

The dispersions have been examined at the microscope and there has been found that they have similar characteristics as the ones of Dispersion 181.

Dispersion 193

Benzidine Yellow 12

In a kneader mixer similar to the one as regards Dispersion 104, there have been admixed:

| | |
|---|---|
| 800.0 Kg | of press cake at 50% solid = 400 Kg Rangoon Yellow, Sun Chemical |
| 140.0 Kg | of Dispersant produced according to Example 21 (100%). |
| | The products have been mixed for 15 minutes at 50 r.p.m. while the jacket of the mixer has been heated at 40°C. |
| | Then there have been added: |
| 240.0 Kg | of PKWF 240/270 AF Haltermann |
| 1,180.0 Kg | |
| | Maintaining the temperature at 60°C, while mixing, there have been separated and discharged |
| 260.0 Kg | water |
| 920.0 Kg | |
| | Then there have been added and mixed |
| 80.0 Kg | of press cake at 50% of solid = 40 Kg Rangoon Yellow |
| 26.0 Kg | of Dispersant made according to Example 21 (100%) |
| 42.0 Kg | of PKWF 240/270 AF |
| 1,078.0 Kg | |

Maintaining the temperature at 40°C, while mixing, there have been separated and then discharged

| | |
|---|---|
| 120 | Kg water |
| 958 | Kg |

There have been added and mixed

| | |
|---|---|
| 150 | Kg of press cake at 50% of solid = 75 Kg Rangoon Yellow |
| 20 | Kg of Dispersant made according to Ex. 21 (100%) and |
| 2 | Kg of PKWF 240/270 AF |
| 1,160 | Kg |

Maintaining the temperature at 40°C while mixing there have been separated and then discharged

| | |
|---|---|
| 98 | Kg water |
| 1,062 | Kg |

The content of the mixer has been set under vacuum (5 mm Hg the residual pressure) at 50°C, while mixing at 100 r.p.m. until the water content has been lower than 1%

| | |
|---|---|
| 39 | Kg |
| 1,023 | Kg of product having the following composition: |

| | |
|---|---|
| 50.3% | Rangoon Yellow, Sun Chemical |
| 18.2% | Dispersant made according to Example 21 |
| 30.7% | PKWF 240/270 AF Haltermann |
| 0.8% | water |
| 100.0% | |

There have been reduced the speed of the mixer to 50 r.p.m. and the temperature to 25°-30°C and the product has been mixed for 10-15 minutes more, before being discharged into packaging drums.

The dispersion has been examined at the microscope and there has been found that the average size of the agglomerates of it is lower than 3 microns.

## Dispersions 194-211

In a kneader mixer having the capacity of 1.5 l, having the same scale dimensions of the one described as regards Dispersion 104 and the same speed, there has been proceeded as in Dispersion 193, maintaining constant the percentage ratio between the components, but substituting the dispersant of Example 21 with the dispersants made according to Examples 2, 54/15, 54/12, 54/3, 51, 49, 28, 26, 24, 22, 15, 54/10, 54/17, 2 bis, 49 bis, 28 bis, 26 bis and 22 bis.

The dispersions have been examined at the microscope and it has been found that they have the same characteristics as Dispersion 193.

The dispersants according to the present invention can be, therefore, used to disperse pigments having the formula:

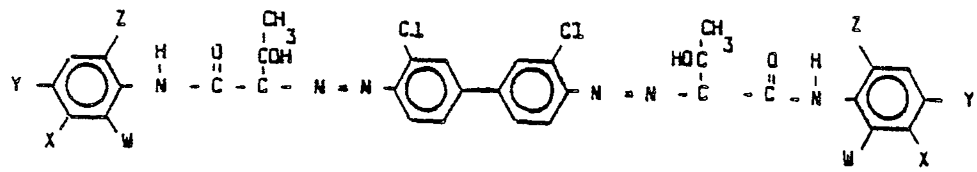

| Pigment C.I. Yellow | C.I. Formula No | Name Diarylide | w | x | y | z |
|---|---|---|---|---|---|---|
| 12 | 21090 | AAA | | | | |
| 13 | 21100 | AAMX | $CH_3$ | | $CH_3$ | |
| 14 | 21095 | AAOP | | | | $CH_3$ |
| 17 | 21105 | AAOA | | | | $OCH_3$ |
| 55 | 21096 | AAPT | | | $CH_3$ | |
| 83 | 21108 | AADMC | | $OCH_3$ | Cl | $OCH_3$ |

Dispersion 212

Pigment Red 17

In a kneader mixer as the one described in Dispersion 104, there have been admixed:

| | |
|---|---|
| 1,200 Kg | of press cake at 35% solid = 420 Kg of Montclair Red, Sun Chemical |
| 150 Kg | of Dispersant made according to Example 18 (100%), and |
| 50 Kg | of PKWF 240/270 AF Haltermann |
| 1,400 Kg | |
| | The products have been mixed (50 r.p.m.) at 60°C and there have been discharged |
| 690 Kg | water |
| 710 Kg | |
| | Then there have been added and mixed |
| 300 Kg | of press cake at 35% solid = 105 Kg of Montclair Red, Sun Chemical |
| 55 Kg | of Dispersant made according to Example 18 (100%) and |
| 200 Kg | of PKWF 240/270 AF |
| 1,265 Kg | |
| | Maintaining the temperature at 60°C, while mixing, there have been separated and discharged |
| 250 Kg | water |
| 1,015 Kg | |
| | Then there have been added and mixed |
| 300 Kg | of press cake at 35% of solid = 105 Kg of Montclair Red |
| 30 Kg | of Dispersant made according to Example 18 (100%), and |
| 100 Kg | of PKWF 240/270 AF |
| 1,445 Kg | |
| | Maintaining the temperature at 60°C, while mixing, at |

55 r.p.m., there have been separated and discharged

| | |
|---|---|
| 150 Kg | water |
| 1,295 Kg | |
| | The content of the mixer has been set under vacuum (15 mm Hg of residual pressure) at 76°C, while mixing at 100 r.p.m. until the water content of the product is lower than 1% |
| 80 Kg | water |
| 1,215 Kg | of product having the following composition |

51.8% Montclair Red, Sun Chemical
19.4% Dispersant made according to Example 18
28.8% PKWF 240/270 AF Haltermann
100.0%

There have been reduced the speed of the mixer to 50 r.p.m. and the temperature to 25°-30°C. The product has been mixed for 10-15 minutes more before being discharged into the packaging drums.

The dispersion has been examined under the microscope and there has been found that the average size of the agglomerates of it is lower than 4 microns.

Dispersions 213-215

In a kneader mixer having the capacity of 1.5 l, having the same scale dimensions of the one described as regards Dispersion 104 and the same speeds, there has been proceeded as for Dispersion 212, maintaining the percentage ratio of the components constant, but substituting the dispersant of Example 18 with the dispersants of Examples 54/15, 19 and 54/17. There have been obtained similar results to those obtained with Dispersion 212.

The dispersants according to the present invention can be used, therefore, to disperse the pigments having the following formulas:

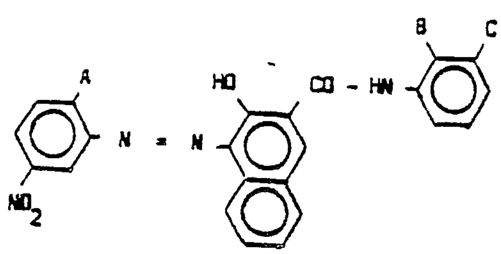

| | | | |
|---|---|---|---|
| Red 17 | A = $CH_3$ | B = $CH_3$ | C = H |
| Red 22 | A = $CH_3$ | B = H | C = H |
| Red 23 | A = $OCH_3$ | B = H | C = $NO_2$ |

Dispersion 216

Pigment Red 3

In a kneader mixer as the one described as regards Dispersion 104, there have been admixed:

1,260 Kg of press cake at 33.5% of solid = 422.1 Kg Flamingo Red, Sun Chemical,

150 Kg of Dispersant made according to Example 30 (100%), and

50 Kg of PKWF 240/270 AF Haltermann

1,460 Kg

The products have been mixed, while stirring at 50 r.p.m., at 60°C. Then there have been separated and discharged

710 Kg water

750 Kg

Then there have been added and mixed

300 Kg of press cake at 33.5% of solid = 100.5 Kg Flamingo Red

55 Kg of Dispersant made according to Example 30 (100%) and
200 Kg of PKWF 240/270 AF Haltermann

1,305 Kg

Maintaining the temperature at 60°C, while mixing, there have been separated and then discharged

200 Kg water

1,045 Kg

Then there have been added and mixed

300 Kg of press cake at 33.5% of solid = 100.5 Kg Flamingo Red
30 Kg of Dispersant made according to Example 30 (100%), and
90 Kg of PKWF 240/270 AF Haltermann

1,465 Kg

Maintaining the temperature at 60°C, while mixing at 50 r.p.m. there have been separated and discharged

190 Kg water

1,275 Kg

The content of the mixer is set under vacuum (15 mm Hg residual pressure) at 80°C, while mixing at 100 r.p.m., until the water content of the product is lower than 1%

76.9 Kg water

1,198.1 Kg of product having the following composition

52.0% Flamingo Red, Sun Chemical
19.6% Dispersant made according to Example 3 (100%)
28.4% PKWF 240/270 AF Haltermann

100.0%

There have been reduced the speed of the mixer to 50 r.p.m. and the temperature to 25°-30° C. The product has been mixed 10-15 minutes more, before being discharged into the packaging drums.

The dispersion has been examined under the microscope and there has been found that the average size of the agglomerates of it is lower than 4 microns.

Dispersions 217-220

In a kneader mixer having the capacity of 1.5 l, having the same scale dimensions of the one described as regards Dispersion 104 and the same speeds, there has been proceeded as in Dispersion 216 maintaining constant the percentage ratio of the components while the Dispersant of Example 30 is substitued with the dispersant of Example 24, 29, 24 bis, 29 bis. The dispersions thus obtained have similar characteristics to those of Dispersion 216.

Dispersion 221

Pseudoflushing: black 7 - Regal 400 R-Cabot

In a kneader mixer as the one described as regards Dispersion 104, there have been admixed

300 Kg Regal 400 R, 100% solid, Cabot
370 Kg water
30 Kg n-propanol
700 Kg

The products have been mixed at 50 r.p.m., at room temperature, for 15 minutes. Then there have been added

150 Kg Regal 400 R, 100% solid
80 Kg water
20 Kg n-propanol
950 Kg

The products have been mixed at 50 r.p.m., for 15 minutes more at room temperature. Then there have

| | |
|---|---|
| | been added |
| 170 Kg | PKWF 240/270 AF Haltermann |
| 80 Kg | of Dispersant made according to Example 30 |
| 1,200 Kg | |
| | The products have been mixed at 50 r.p.m. at maximum temperature of 35°C, and there have been thus separated and discharged |
| 470 Kg | of a mixture containing water/n-propanol |
| 730 Kg | |
| | Then there have been added and mixed |
| 20 Kg | of Dispersant made according to Example 30, and |
| 100 Kg | of PKWF 240/270 AF Haltermann |
| 850 Kg | |
| | The mixer content has been set under vacuum (10 mm Hg residual pressure) at 60°C, while mixing at 100 r.p.m., until the water content of the product is lower than 1%. |
| 28 Kg | water |
| 822 Kg | of the product having the following composition |

| | |
|---|---|
| 54.7% | Regal 400 R, Cabot |
| 12.2% | Dispersant made according to Example 30 |
| 32.8% | PKWF 240/270 AF Haltermann, and |
| 0.3% | water |
| 100.0% | |

There have been reduced the mixer speed to 50 r.p.m. and the temperature to 25°-30°C. The product has been mixed 10-15 minutes more, before being discharged into the packaging drums.

The dispersion has been examined under the microscope and there has been found that the average size of the agglomerates of it is lower than 5 microns.

Dispersion 222

There have been used the following machinery:

a) "butterfly" mixer, "Molteni Italy", motor 30 Hp, speed 30-250 r.p.m., mixing capacity 550 Kg, capacity of the mixer container 750 l;

b) Bühler three roll mill, provided with flotation device for automatic stop and connected with a screw feeder.

In the mixer there have been admixed 40 Kg of dispersant from Example 51/12 and 132 Kg of PKWF 240/270 AF, and they have been mixed for 5 minutes at 30 r.p.m. There have been added 128 Kg of pigment red 57.1 (C.I. No. 15850), Lithol Rubine D 4566, while mixing for 5 minutes more at 30 r.p.m. There have been added 100 Kg more pigment red and the components have been mixed for 25 minutes at 30 r.p.m. and for 1.5 minutes at 100 r.p.m.

There has been obtained a homogeneous and fluid mixture which has been discharged over the three roll mill by a screw feeder, and it has been grinded with a pressure, between the rollers, variating from 20 to 30 Kg $cm^2$.

There has been obtained a fluid composition, the agglomerates of which are lower than 4 microns.

Dispersion 223

With the same machinery described as regards Dispersion 222 there have been mixed 72 Kg of Dispersant made according to Example 24 and 108 Kg of PKWF 240/270 AF.

Then there have been added and mixed, according to the procedure described in Dispersion 173, 220 Kg "Blu Segnale Luce NCG" BASF, Italy.

There has been obtained a fluid composition which has been discharged and grinded in a three roll mill similar to the one already described in Example 222.

There has been obtained a fluid composition the agglomerates of which are lower than 4 microns.

Dispersion 224

With the same machinery described as regards Dispersion 222 there have been mixed 54 Kg of Dispersant made according to Example 26 and 100 Kg of PKWF 240/270 AF.

Then there have been added and mixed, according to the procedure described in Dispersion 173, 240 Kg of Seikalight Rose R 40, Dainichiseika (C.I. 45160 - Red 81).

There has been obtained a fluid composition which has been discharged and grinded over a three roll mill as the one already described in Dispersion 222.

There has been obtained a fluid composition, the agglomerates of which are lower than 5 microns.

Dispersion 225

With the same machinery described in Example 222 there have been mixed 48 Kg of Dispersant from Example 54/15 and 152 Kg of PKWF 240/270 AF.

Then there have been added and mixed, according to the procedure described in Dispersion 173, 200 Kg of pigment Yellow 13 (C.I. No. 21100) Isol Diaryl Yellow GRF 118 K.V.K. There has been obtained a semi-fluid composition which has been discharged over a three roll mill by a suction diaphragm pump. The grinding of the product has been carried on as in Example 222.

There has been obtained a thixotropic composition, semifluid, the agglomerates of which are lower than 3 microns.

Dispersion 226

With the same machinery described in connection with Dispersion 222 there have been mixed 48 Kg of the Dispersant made according to Example 13 and 132 Kg of PKWF 240/270 AF.

Then there have been added and mixed, according to the procedure described in Example 222, 220 Kg of Regal 400 R (Cabot).

There has been obtained a fluid compound which has been discharged and mixed over a three roll mill as already described in Dispersion 222.

There has been obtained a fluid compound the agglomerates of which are lower than 3 microns.

Dispersions 227-237

There has been followed the procedure described in Dispersion 226 and there has been used a machinery useful to produce 0.5 Kg of dispersion.

The compositions of the dispersions are the following:

| | |
|---|---|
| Regal 400 R | 55% |
| PKWF 240/270 AF | 33% |
| Dispersant | 12% |
| | 100% |

There have been used the dispersants made according to Examples 12, 25, 27, 28, 46, 54/4, 12 bis, 25 bis, 27 bis, 28 bis and 46 bis.

The average size of the agglomerates present in the dispersions thus obtained is lower than 3 microns.

Dispersion 238

With the machinery described in Dispersion 222 there have been mixed 40 Kg of the dispersant made according to Example 20 and 100 Kg of PKWF 240/270 AF.

Then there have been added and mixed, according to the procedure described in Dispersion 222, 260 Kg of Milori Blue 690 BB, Dainichiseika, (pigment Blue 27 C.I. No. 77510).

There has been obtained a fluid composition which has been discharged and grinded over a three roll mill, as already described in Dispersion 222.

There has been obtained a fluid composition, the agglomerates of which are lower than 5 microns.

Dispersion 239

With the same machinery described in Dispersion 222, there have been weighted and mixed 40 Kg of the Dispersant made according to Example 28 and 20 Kg of PKWF 240/270 AF (Haltermann).

Then, there have been added and mixed, according to the procedure described in Dispersion 173, 340 Kg of pigment RH D2 I.C.I. (pigment white 6 C.I. No. 77891).

There has been obtained a fluid composition which has been discharged and grinded over a three roll mill, as the one already described in Dispersion 222.

There has been obtained a fluid composition, the agglomerates of which are lower than 5 microns.

Dispersion 240

With the machinery described as regards Dispersion 222 there have been mixed 78 Kg of the Dispersant made according to Example 29 and 114 Kg of PKWF 240/270 AF (Haltermann).

Then there have been added and mixed, according to the procedure described in Dispersion 173, 208 Kg of pigment Red 3 (C.I. No. 12120) Flamingo Red, Sun Chemical.

There has been obtained a fluid composition which has been discharged and grinded over a three roll mill as the one already described in Dispersion 222.

There has been obtained a fluid composition, the agglomerates of which are lower than 5 microns.

Dispersion 241

With the same machinery described in Dispersion 222 there have been mixed 76 Kg of the Dispersant made according to Example 19 and 116 Kg of PKWF 240/270 AF Haltermann.

Then there have been added and mixed, according to the procedure described in Dispersion 222, 208 Kg of pigment Red 22 (C.I. No. 12315) Montclair Red, Sun Chemical.

There has been obtained a fluid composition which has been discharged and grinded over a three roll mill, as the one already described in Dispersion 222.

There has been obtained a fluid composition, the agglomerates of which are lower than 4 microns.

Dispersion 242

There have been used the following machines:

a) a Silverson turbo-mixer with hydraulic hoist, 18 Hp motor, rotor speed 200-2,500 r.p.m.;

b) a changeable container with tap having the capacity of 1,000 l;

c) a feeder pump with flexible pipes (40 mm diametre) and pipe couplings to connect the container with the grinding machine;

d) a Netsch bead mill with quartz balls, having a 50 l milling container, provided with an axial and jacket cooling.

In the above mentioned container there have been weighted 40 Kg of Dispersant made according to Example 22 and 260 Kg toluene. The products have been mixed for two minutes at 1,000 r.p.m.

Then there have been added 200 Kg of Seikafast Red 1547 (pigment red 48:2 C.I. No. 15865:2).

The products have been mixed at 2,500 r.p.m. for 15 minutes.

There has been obtained a liquid and homogenous composition which has been pumped into the Netzsch grinder, and grinded at 200 Kg/h, trying to maintain the maximum temperature at 50 °C.

The agglomerate size present in the dispersion thus obtained is lower than 3 microns.

Dispersions 243-250

These dispersions have been prepared with the same machinery described in Dispersion 242, the same mixing and grinding procedures; the ratio between the components is the following:

| | |
|---|---|
| Pigment | 200 Kg |
| Dispersant | 40 Kg |
| Toluene | 260 Kg |
| | 400 Kg |

| Ex. No. | Pigment | Dispersant |
|---|---|---|
| 243 | Montclair Red, Sun Chemical<br>Red 22 - C.I. No. 12315 | Ex.<br>18 |
| 244 | Seikalight Rose R 40 Dainichiseika<br>Red 81 - C.I. No. 45160:1 | Ex.<br>20 |
| 245 | Seikalight Magenta 2 R, Dainichiseika<br>Violet 1 - C.I. No. 45170:2 | Ex.<br>54/19 |
| 246 | Blu Segnale Luce NCG BASF Italy<br>Blue 15:3 - C.I. No. 74160 | Ex.<br>24 |
| 247 | Regal 400 R, Cabot<br>Black 7 - C.I. No. 77266 | Ex.<br>30 |
| 248 | Sunset Orange, Sun Chemical<br>Orange 5 - C.I. No. 12075 | Ex.<br>54/15 |
| 249 | Hancock Yellow 74, Sun Chemical<br>Yellow 74 - C.I. No. 11741 | Ex.<br>49 |
| 250 | Sunfast Yellow, Sun Chemical<br>Yellow 83 - C.I. No. 21108 | Ex.<br>54/15 |

Dispersions 251-255

These dispersions have been prepared with the same machinery described in Dispersion 242, and the same mixing and grinding procedures, while the quantities of the components have been the following:

| Example 251 | |
|---|---|
| Milori Blue 690 BB,Dainichiseika (Blue 27-C.I. No. 77510)<br>Dispersant Ex. 54/3<br>Toluene | 250 Kg<br>50 Kg<br>200 Kg<br>500 Kg |

| Example 252 | |
|---|---|
| White RH D2 I.C.I. (White 6 - C.I. No. 77891)<br>Dispersant Ex. 29<br>Toluene | 390 Kg<br>50 Kg<br>60 Kg<br>500 Kg |

| Example 253 | |
|---|---|
| Ansico Red, Sun Chemical (Red 38 - C.I. No. 22120)<br>Dispersant Ex. 21<br>Solvesso 150 (ESSO) | 175 Kg<br>50 Kg<br>275 Kg<br>500 Kg |

| Example 254 | |
|---|---|
| Sunfast Magenta, Sun Chemical (Red 12 - C.I. No. 73915) | 175 Kg |
| Dispersant Ex. 54/19 | 50 Kg |
| Solvesso 150 (ESSO) | 275 Kg |
| | 500 Kg |

| Example 255 | |
|---|---|
| Rangoon Orange, Sun Chemical (Orange 13-C.I. No. 21110) | 175 Kg |
| Dispersant Ex. 21 | 50 Kg |
| Solvesso 150 (ESSO) | 275 Kg |
| | 500 Kg |

| Dispersion No. | Dispersion method according to Dispersion No. | ............ of ............ | | are replaced with ........ of........ | |
|---|---|---|---|---|---|
| 256 | 1 | 200 parts | product Ex. 32 | 200 parts | product Ex. 153 |
| 257 | 2 | " " | " " 33 | " " | " " 154 |
| 258 | 3 | " " | " " 34 | " " | " " 155 |
| 259 | 4 | " " | " " 35 | " " | " " 156 |
| 260 | 5 | " " | " " 36 | " " | " " 157 |
| 261 | 6 | " " | " " 37 | " " | " " 158 |
| 262 | 7 | " " | " " 38 | " " | " " 159 |
| 263 | 8 | " " | " " 39 | " " | " " 160 |
| 264 | 9 | " " | " " 42 | " " | " " 163 |
| 265 | 10 | " " | " " 43 | " " | " " 164 |
| 266 | 11 | " " | " " 44 | " " | " " 165 |
| 267 | 12 | " " | " " 45 | " " | " " 166 |
| 268 | 13 | " " | " " 55 | " " | " " 201 |
| 269 | 14 | " " | " " 56 | " " | " " 202 |
| 270 | 15 | " " | " " 57 | " " | " " 203 |

| | | | | | | | | | | | |
|---|---|---|---|---|---|---|---|---|---|---|---|
| 271 | 16 | 200 | parts | product | Ex. | 58 | 200 | parts | product | Ex. | 204 |
| 272 | 17 | " | " | " | " | 59 | " | " | " | " | 205 |
| 273 | 18 | " | " | " | " | 60 | " | " | " | " | 206 |
| 274 | 19 | " | " | " | " | 61 | " | " | " | " | 207 |
| 275 | 20 | " | " | " | " | 62 | " | " | " | " | 208 |
| 276 | 21 | " | " | " | " | 63 | " | " | " | " | 209 |
| 277 | 22 | " | " | " | " | 64 | " | " | " | " | 210 |
| 278 | 23 | " | " | " | " | 65 | " | " | " | " | 211 |
| 279 | 24 | " | " | " | " | 66 | " | " | " | " | 212 |
| 280 | 25 | " | " | " | " | 67 | " | " | " | " | 213 |
| 281 | 26 | " | " | " | " | 68 | " | " | " | " | 214 |
| 282 | 27 | " | " | " | " | 69 | " | " | " | " | 215 |
| 283 | 28 | " | " | " | " | 70 | " | " | " | " | 216 |
| 284 | 29 | " | " | " | " | 71 | " | " | " | " | 217 |
| 285 | 30 | " | " | " | " | 72 | " | " | " | " | 218 |
| 286 | 31 | " | " | " | " | 73 | " | " | " | " | 219 |
| 287 | 32 | " | " | " | " | 74 | " | " | " | " | 220 |
| 288 | 33 | " | " | " | " | 75 | " | " | " | " | 221 |

| | | | | | | | | | | |
|---|---|---|---|---|---|---|---|---|---|---|
| 289 | 34 | 200 | parts | product | Ex. | 76 | 200 | parts | product | Ex. 222 |
| 290 | 35 | " | " | " | " | 77 | " | " | " | " 223 |
| 291 | 36 | " | " | " | " | 78 | " | " | " | " 224 |
| 292 | 37 | " | " | " | " | 79 | " | " | " | " 225 |
| 293 | 38 | " | " | " | " | 80 | " | " | " | " 226 |
| 294 | 39 | " | " | " | " | 81 | " | " | " | " 227 |
| 295 | 40 | " | " | " | " | 82 | " | " | " | " 228 |
| 296 | 41 | " | " | " | " | 83 | " | " | " | " 229 |
| 297 | 42 | " | " | " | " | 84 | " | " | " | " 230 |
| 298 | 43 | " | " | " | " | 85 | " | " | " | " 231 |
| 299 | 44 | " | " | " | " | 86 | " | " | " | " 232 |
| 300 | 45 | " | " | " | " | 87 | " | " | " | " 233 |
| 301 | 46 | " | " | " | " | 88 | " | " | " | " 234 |
| 302 | 47 | " | " | " | " | 55 | " | " | " | " 201 |
| 303 | 48 | " | " | " | " | 56 | " | " | " | " 202 |
| 304 | 49 | " | " | " | " | 57 | " | " | " | " 203 |
| 305 | 50 | " | " | " | " | 58 | " | " | " | " 204 |
| 306 | 51 | " | " | " | " | 59 | " | " | " | " 205 |

| | | | | | | | | |
|---|---|---|---|---|---|---|---|---|
| 307 | 52 | 200 parts | product Ex. 60 | | 200 parts | product Ex. 206 | | |
| 308 | 53 | " " | " " 61 | | " " | " " 207 | | |
| 309 | 54 | " " | " " 62 | | " " | " " 208 | | |
| 310 | 55 | " " | " " 63 | | " " | " " 209 | | |
| 311 | 56 | " " | " " 64 | | " " | " " 210 | | |
| 312 | 57 | " " | " " 65 | | " " | " " 211 | | |
| 313 | 58 | " " | " " 66 | | " " | " " 212 | | |
| 314 | 59 | " " | " " 67 | | " " | " " 213 | | |
| 315 | 60 | " " | " " 68 | | " " | " " 214 | | |
| 316 | 61 | " " | " " 69 | | " " | " " 215 | | |
| 317 | 61 bis | " " | " " 70 | | " " | " " 216 | | |
| 318 | 62 | " " | " " 71 | | " " | " " 217 | | |
| 319 | 63 | " " | " " 72 | | " " | " " 218 | | |
| 320 | 64 | " " | " " 73 | | " " | " " 219 | | |
| 321 | 65 | " " | " " 76 | | " " | " " 222 | | |
| 322 | 66 | " " | " " 74 | | " " | " " 220 | | |
| 323 | 67 | " " | " " 75 | | " " | " " 221 | | |
| 324 | 68 | " " | " " 77 | | " " | " " 223 | | |

| | | | | | | | | | | |
|---|---|---|---|---|---|---|---|---|---|---|
| 325 | 69 | 200 | parts | product | Ex. | 78 | 200 | parts | product | Ex. 224 |
| 326 | 70 | " | " | " | " | 79 | " | " | " | " 225 |
| 327 | 71 | " | " | " | " | 80 | " | " | " | " 226 |
| 328 | 72 | " | " | " | " | 81 | " | " | " | " 227 |
| 329 | 73 | " | " | " | " | 82 | " | " | " | " 228 |
| 330 | 74 | " | " | " | " | 83 | " | " | " | " 229 |
| 331 | 75 | " | " | " | " | 55 | " | " | " | " 201 |
| 332 | 76 | " | " | " | " | 56 | " | " | " | " 202 |
| 333 | 77 | " | " | " | " | 57 | " | " | " | " 203 |
| 334 | 78 | " | " | " | " | 58 | " | " | " | " 204 |
| 335 | 79 | " | " | " | " | 59 | " | " | " | " 205 |
| 336 | 80 | " | " | " | " | 60 | " | " | " | " 206 |
| 337 | 81 | " | " | " | " | 88 i | " | " | " | " 241 |
| 338 | 82 | " | " | " | " | 62 | " | " | " | " 208 |
| 339 | 83 | " | " | " | " | 63 | " | " | " | " 209 |
| 340 | 84 | " | " | " | " | 64 | " | " | " | " 210 |
| 341 | 85 | " | " | " | " | 65 | " | " | " | " 211 |
| 342 | 86 | " | " | " | " | 66 | " | " | " | " 212 |

| | | | | | | | | | |
|---|---|---|---|---|---|---|---|---|---|
| 343 | 87 | 200 | parts | product | Ex. 67 | 200 | parts | product | Ex. 213 |
| 344 | 88 | " | " | " | " 69 | " | " | " | " 215 |
| 345 | 90 | " | " | " | " 70 | " | " | " | " 216 |
| 346 | 91 | " | " | " | " 71 | " | " | " | " 217 |
| 347 | 92 | " | " | " | " 72 | " | " | " | " 218 |
| 348 | 93 | " | " | " | " 73 | " | " | " | " 219 |
| 349 | 94 | " | " | " | " 76 | " | " | " | " 222 |
| 350 | 95 | " | " | " | " 74 | " | " | " | " 220 |
| 351 | 96 | " | " | " | " 75 | " | " | " | " 221 |
| 352 | 97 | " | " | " | " 77 | " | " | " | " 223 |
| 353 | 98 | " | " | " | " 78 | " | " | " | " 224 |
| 354 | 99 | " | " | " | " 79 | " | " | " | " 225 |
| 355 | 100 | " | " | " | " 80 | " | " | " | " 226 |
| 356 | 101 | " | " | " | " 81 | " | " | " | " 227 |
| 357 | 102 | " | " | " | " 82 | " | " | " | " 228 |
| 358 | 103 | " | " | " | " 83 | " | " | " | " 229 |
| 359 | 104 | 9.7 | % | " | " 14 | 9.7 | % | " | " 118 |
| 360 | 105 | " | " | " | " 1 bis | " | " | " | " 93 |

| | | | | | | | | | | | |
|---|---|---|---|---|---|---|---|---|---|---|---|
| 361 | 106 | 9.7 | % | product | Ex. | 2 bis | 9.7 | % | product | Ex. | 95 |
| 362 | 107 | " | " | " | " | 6 bis | " | " | " | " | 103 |
| 363 | 108 | " | " | " | " | 7 bis | " | " | " | " | 105 |
| 364 | 109 | " | " | " | " | 8 bis | " | " | " | " | 107 |
| 365 | 110 | " | " | " | " | 12 bis | " | " | " | " | 115 |
| 366 | 111 | " | " | " | " | 13 bis | " | " | " | " | 117 |
| 367 | 112 | " | " | " | " | 15 bis | " | " | " | " | 120 |
| 368 | 113 | " | " | " | " | 17 bis | " | " | " | " | 124 |
| 369 | 114 | " | " | " | " | 22 bis | " | " | " | " | 134 |
| 370 | 115 | " | " | " | " | 1 | " | " | " | " | 92 |
| 371 | 116 | " | " | " | " | 2 | " | " | " | " | 94 |
| 372 | 117 | " | " | " | " | 6 | " | " | " | " | 102 |
| 373 | 118 | " | " | " | " | 7 | " | " | " | " | 104 |
| 374 | 119 | " | " | " | " | 8 | " | " | " | " | 106 |
| 375 | 120 | " | " | " | " | 12 | " | " | " | " | 114 |
| 376 | 121 | " | " | " | " | 13 | " | " | " | " | 116 |
| 377 | 122 | " | " | " | " | 14 | " | " | " | " | 118 |
| 378 | 123 | " | " | " | " | 15 | " | " | " | " | 119 |

| | | | | | | | | | | | |
|---|---|---|---|---|---|---|---|---|---|---|---|
| 379 | 124 | 9.7 | % | product | Ex. | 16 | 9.7 | % | product | Ex. | 121 |
| 380 | 125 | " | " | " | " | 17 | " | " | " | " | 123 |
| 381 | 126 | " | " | " | " | 22 | " | " | " | " | 133 |
| 382 | 127 | " | " | " | " | 26 | " | " | " | " | 141 |
| 383 | 128 | " | " | " | " | 28 | " | " | " | " | 145 |
| 384 | 129 | " | " | " | " | 51 | " | " | " | " | 175 |
| 385 | 130 | " | " | " | " | 53 | " | " | " | " | 179 |
| 386 | 131 | " | " | " | " | 54/3 | " | " | " | " | 183 |
| 387 | 132 | " | " | " | " | 54/4 | " | " | " | " | 184 |
| 388 | 133 | " | " | " | " | 54/6 | " | " | " | " | 186 |
| 389 | 134 | " | " | " | " | 54/8 | " | " | " | " | 188 |
| 390 | 135 | " | " | " | " | 54/9 | " | " | " | " | 189 |
| 391 | 136 | " | " | " | " | 54/10 | " | " | " | " | 190 |
| 392 | 137 | " | " | " | " | 54/11 | " | " | " | " | 191 |
| 393 | 138 | " | " | " | " | 54/12 | " | " | " | " | 192 |
| 394 | 139 | " | " | " | " | 54/13 | " | " | " | " | 193 |
| 395 | 140 | " | " | " | " | 54/14 | " | " | " | " | 194 |
| 396 | 141 | " | " | " | " | 54/15 | " | " | " | " | 195 |

| | | | | | |
|---|---|---|---|---|---|
| 397 | 142 | 9.7 % | product Ex. 26 bis | 9.7 % | product Ex. 142 |
| 398 | 143 | " " | " " 28 bis | " " | " " 146 |
| 399 | 144 | " " | " " 51 bis | " " | " " 176 |
| 400 | 145 | " " | " " 53 bis | " " | " " 180 |
| 401 | 146 | 9.8 % | " " 26 | 9.8 % | " " 141 |
| 402 | 147 | " " | " " 26 | " " | " " 141 |
| 403 | 148 | " " | " " 26 | " " | " " 141 |
| 404 | 149 | 10.1 % | " " 53 | 10.1 % | " " 179 |
| 405 | 150 | 13.4 % | " " 15 | 13.4 % | " " 119 |
| 406 | 151 | " " | " " 1 | " " | " " 92 |
| 407 | 152 | " " | " " 2 | " " | " " 94 |
| 408 | 153 | " " | " " 3 | " " | " " 96 |
| 409 | 154 | " " | " " 4 | " " | " " 98 |
| 410 | 155 | " " | " " 5 | " " | " " 100 |
| 411 | 156 | " " | " " 14 | " " | " " 118 |
| 412 | 157 | " " | " " 18 | " " | " " 125 |
| 413 | 158 | " " | " " 20 | " " | " " 129 |
| 414 | 159 | " " | " " 26 | " " | " " 141 |

| | | | | | |
|---|---|---|---|---|---|
| 415 | 160 | 13.4 % | product Ex. 49 | 13.4 % | product Ex. 171 |
| 416 | 161 | " " | " " 54/3 | " " | " " 183 |
| 417 | 162 | " " | " " 54/12 | " " | " " 192 |
| 418 | 163 | " " | " " 54/19 | " " | " " 199 |
| 419 | 164 | " " | " " 1 bis | " " | " " 93 |
| 420 | 165 | " " | " " 2 bis | " " | " " 95 |
| 421 | 166 | " " | " " 3 bis | " " | " " 97 |
| 422 | 167 | " " | " " 4 bis | " " | " " 99 |
| 423 | 168 | " " | " " 5 bis | " " | " " 101 |
| 424 | 169 | " " | " " 18 bis | " " | " " 126 |
| 425 | 170 | " " | " " 20 bis | " " | " " 130 |
| 427 | 171 | " " | " " 26 bis | " " | " " 142 |
| 428 | 172 | " " | " " 29 bis | " " | " " 148 |
| 429 | 173 | " " | " " 15 | " " | " " 119 |
| 430 | 174 | 11.8 % | " " 54/3 | 11.8 % | " " 183 |
| 431 | 175 | 18.3 " | " " 11 | 18.3 " | " " 112 |
| 432 | 176 | " " | " " 11 | " " | " " 112 |
| 433 | 177 | " " | " " 11 | " " | " " 112 |

| | | | | | |
|---|---|---|---|---|---|
| 434 | 178 | 18.3 % | product Ex. 6 | 18.3 % | product Ex. 102 |
| 435 | 179 | " " | " " 10 | " " | " " 110 |
| 436 | 180 | " " | " " 24 | " " | " " 137 |
| 437 | 181 | " " | " " 2 | " " | " " 94 |
| 438 | 182 | " " | " " 54/15 | " " | " " 195 |
| 439 | 183 | " " | " " 51 | " " | " " 175 |
| 440 | 184 | " " | " " 53 | " " | " " 179 |
| 441 | 185 | " " | " " 18 | " " | " " 125 |
| 442 | 186 | " " | " " 15 | " " | " " 119 |
| 443 | 187 | " " | " " 12 | " " | " " 114 |
| 444 | 188 | " " | " " 51 bis | " " | " " 176 |
| 445 | 189 | " " | " " 53 bis | " " | " " 180 |
| 446 | 190 | " " | " " 18 bis | " " | " " 126 |
| 447 | 191 | " " | " " 15 bis | " " | " " 120 |
| 448 | 192 | " " | " " 12 bis | " " | " " 115 |
| 449 | 193 | 18.2 % | product Ex. 21 | 18.2 % | product Ex. 131 |
| 450 | 194 | " " | " " 2 | " " | " " 94 |
| 451 | 195 | " " | " " 54/15 | " " | " " 195 |

| | | | | | |
|---|---|---|---|---|---|
| 452 | 196 | 18.2 % | product Ex. 54/12 | 18.2 % | product Ex. 192 |
| 453 | 197 | " " | " " 54/3 | " " | " " 183 |
| 454 | 198 | " " | " " 51 | " " | " " 175 |
| 455 | 199 | " " | " " 49 | " " | " " 171 |
| 456 | 200 | " " | " " 28 | " " | " " 145 |
| 457 | 201 | " " | " " 26 | " " | " " 141 |
| 458 | 202 | " " | " " 24 | " " | " " 137 |
| 459 | 203 | " " | " " 22 | " " | " " 133 |
| 460 | 204 | " " | " " 15 | " " | " " 119 |
| 461 | 205 | " " | " " 54/10 | " " | " " 190 |
| 462 | 206 | " " | " " 54/17 | " " | " " 197 |
| 463 | 207 | " " | " " 2 bis | " " | " " 95 |
| 464 | 208 | " " | " " 49 bis | " " | " " 172 |
| 465 | 209 | " " | " " 28 bis | " " | " " 146 |
| 466 | 210 | " " | " " 26 bis | " " | " " 142 |
| 467 | 211 | " " | " " 22 bis | " " | " " 134 |
| 468 | 212 | 19.4 % | product Ex. 18 | 19.4 % | product Ex. 125 |
| 469 | 213 | " " | " " 54/15 | " " | " " 195 |

| | | | | | | | | | | | |
|---|---|---|---|---|---|---|---|---|---|---|---|
| 470 | 214 | 19.4 | % | product | Ex. | 19 | 19.4 | % | product | Ex. | 127 |
| 471 | 215 | " | " | " | " | 54/17 | " | " | " | " | 197 |
| 472 | 216 | 19.6 | % | " | " | 30 | 19.6 | % | " | " | 149 |
| 473 | 217 | " | " | " | " | 24 | " | " | " | " | 137 |
| 474 | 218 | " | " | " | " | 29 | " | " | " | " | 147 |
| 475 | 219 | " | " | " | " | 24 bis | " | " | " | " | 138 |
| 476 | 220 | " | " | " | " | 29 bis | " | " | " | " | 148 |
| 477 | 221 | 12.2 | % | " | " | 30 | 12.2 | % | " | " | 149 |
| 478 | 222 | 40 | Kg | " | " | 54/12 | 40 | Kg | " | " | 192 |
| 479 | 223 | 72 | " | " | " | 24 | 72 | " | " | " | 137 |
| 480 | 224 | 54 | " | " | " | 26 | 54 | " | " | " | 141 |
| 481 | 225 | 48 | " | " | " | 54/15 | 48 | " | " | " | 195 |
| 482 | 226 | 48 | " | " | " | 13 | 48 | " | " | " | 116 |
| 483 | 227 | 33 | % | " | " | 12 | 33 | % | " | " | 114 |
| 484 | 228 | " | " | " | " | 25 | " | " | " | " | 139 |
| 485 | 229 | " | " | " | " | 27 | " | " | " | " | 143 |
| 486 | 230 | " | " | " | " | 28 | " | " | " | " | 145 |
| 487 | 231 | " | " | " | " | 46 | " | " | " | " | 167 |

| | | | | | | | | | | | | |
|---|---|---|---|---|---|---|---|---|---|---|---|---|
| 488 | 232 | 33 | % | product | Ex. | 54/4 | 33 | % | product | Ex. | 184 |
| 489 | 233 | " | " | " | " | 12 bis | " | " | " | " | 115 |
| 490 | 234 | " | " | " | " | 25 bis | " | " | " | " | 140 |
| 491 | 235 | " | " | " | " | 27 bis | " | " | " | " | 144 |
| 492 | 236 | " | " | " | " | 28 bis | " | " | " | " | 146 |
| 493 | 237 | " | " | " | " | 46 bis | " | " | " | " | 167 |
| 494 | 238 | 40 | Kg | " | " | 20 | 40 | Kg | " | " | 129 |
| 495 | 239 | " | " | " | " | 28 | " | " | " | " | 145 |
| 496 | 240 | 78 | " | " | " | 29 | 78 | " | " | " | 147 |
| 497 | 241 | 76 | " | " | " | 19 | 76 | " | " | " | 127 |
| 498 | 242 | 40 | " | " | " | 22 | 40 | " | " | " | 133 |
| 499 | 243 | " | " | " | " | 18 | " | " | " | " | 125 |
| 500 | 244 | " | " | " | " | 20 | " | " | " | " | 129 |
| 501 | 245 | " | " | " | " | 54/19 | " | " | " | " | 199 |
| 502 | 246 | " | " | " | " | 24 | " | " | " | " | 137 |
| 503 | 247 | " | " | " | " | 30 | " | " | " | " | 149 |
| 504 | 248 | " | " | " | " | 54/15 | " | " | " | " | 195 |
| 505 | 249 | " | " | " | " | 49 | " | " | " | " | 171 |

| | | | | | | | | | | | |
|---|---|---|---|---|---|---|---|---|---|---|---|
| 506 | 250 | 40 | Kg | product | Ex. | 54/15 | 40 | Kg | product | Ex. | 195 |
| 507 | 251 | 50 | " | " | " | 54/3 | 50 | " | " | " | 183 |
| 508 | 252 | " | " | " | " | 29 | " | " | " | " | 147 |
| 509 | 253 | " | " | " | " | 21 | " | " | " | " | 131 |
| 510 | 254 | " | " | " | " | 54/19 | " | " | " | " | 199 |
| 511 | 255 | " | " | " | " | 21 | " | " | " | " | 131 |

Notes

(a) All the dispersions from 256 to 301 have been examined under the microscope, according to BASF method. The results are quite similar to those of the dispersions from 1 to 46.

(b) All the dispersions from 302 to 330 have been examined under the microscope, according to BASF method. The results are quite similar to those of the dispersions from 47 to 74.

(c) All the dispersions from 331 to 358 have been examined under the microscope, according to BASF method. The results are quite similar to those of the dispersions from 75 to 103.

(d) All the dispersions from 359 to 498 have been examined under the microscope, at 600 magnifications. The particle sizes of the dispersions variate between 3 and 6 microns.

(e) All the dispersions from 499 to 511 have been examined under the microscope, at 600 magnifications, in comparison with the dispersions from 243 to 255. The particles sizes of the dispersions variate between 3 and 5 microns. The viscosities variate from 100 to 300 centipoise.

**Claims**

1. Method to disperse large quantities of solid particles in thermoplastic materials and non polymeric liquid diluents commonly used in printing inks productions by at least a composition, having an average molecular weight included between 2,500 and 70,000, obtained by reacting (a) at least a reactive composition at the limit of plastic materials with (b) a composition of aliphatic hydroxycarboxylic acids having from 8 to 20 carbon atoms, polybutadiene resins having a terminal hydroxylic or carboxylic group and the caprolactone polycondensates having a terminal carboxylic group.

2. Method according to the previous claim 1, characterized by the fact that the reactive composition at the limit of plastic materials is a polymerization or polycondensation product showing the following characteristics:
- it possesses free functions, as hydroxylic groups, carboxylic groups, primary or secondary amino groups, or anyhow it is able to react with hydroxylic and/or carboxylic groups;
- it has a molecular weight between 600 and 50,000; and
- it is liquid at ambient temperature or, if it is solid it is attackable by the toluene and/or by the o-xylene.

3. Method according to the previous claim 2, characterized by the fact that the reactive composition at the limit of the plastic materials is chosen in the group comprising phthalic, alkyd, acrylic alkyd resins, maleic and maleic modified resins, melamines and triazines condensates, aldehyde resins, keton resins, xylol formaldehyde, sulfonamide, epoxy, polyesteramide, hydrocarbon resins; colophony condensates, polyamide resins, polyurethane and silicone resins.

4. Method according to the previous claim 3, characterized by the fact that the reactive composition at the limit of the plastic materials includes, linked in chain, elementary chemical structures chosen among: imidazolines, oxazolines, piperazines, cyclopentadiene, dioxopyrrolidine, dioxoimidazoline and perylene; the radicals of pimaric acid, L-pimaric acid, of abietic acid and its dimers, of resin acids, of the aromatic colophony acids, of Tall oil aliphatic acids, of aliphatic amino alcohols, of aliphatic, cycloaliphatic, aromatic diamines, of diamino imines of amino acids, of saturated and unsaturated fatty acids, of saturated and unsaturated cycloaliphatic and aromatic di- and polycarboxylic acids, of the dehydroabietylamine of glycols, of aromatic or alkylaromatic diols, of polyhydroxy aliphatic alcohols, of aliphatic and aromatic ethers, of aliphatic isocyanates and of the styrene.

5. Method according to the previous claim 1, characterized by the fact that the composition having a molecular weight included between 2,500 and 70,000 contains at least 5% by weight of a reactive composition at the limit of the plastic materials.

6. Method according to the previous claim 5, characterized by the fact that the composition having a molecular weight included between 2,500 and 70,000 contains from 25 to 75% by weight of a reactive composition at the limit of plastic materials.

7. A composition containing (i) solid particles, (ii) at least a composition, having an average molecular weight included between 2,500 and 70,000, obtained by condensing a composition at the limit of plastic materials with a composition chosen among polyesters obtained by the polycondensation of hydroxycarboxylic aliphatic acids having from 8 to 20 carbon atoms, the polybutadiene resins having a hydroxylic or carboxylic terminal group and the caprolactone polycondensates having a carboxylic terminal group, and (iii) at least a thermoplastic material or a non-polymeric liquid diluent commonly used for the printing inks and paints production.

8. A composition according to claim 7, characterized by the fact that the reactive composition at the limit of the plastic materials is a polymerization or a polycondensation product showing the following characteristics:

- it possesses free functions, as hydroxylic, carboxylic group, primary or secondary amino groups, or groups anyhow able to react with hydroxylic and/or carboxylic groups;
- it has a molecular weight included between 600 and 50,000; and
- it is liquid at ambient temperature or, if it is solid, it is attackable by the toluene and/or the o-xylene.

9. A composition according to claim 8, characterized by the fact that the reactive composition at the limit of plastic materials is chosen among the group comprising, phthalic resins, alkyd resins, acrylic alkyd resins, maleic and maleic derivate resins, the melamines and triazines condensates, the aldehyde resins, keton resins, xylol formaldehyde resins, sulfonamide, epoxy, polyesteramide, hydrocarbon resins, colophony condensates, polyamide resins, polyurethane and silicone resins.

10. A composition according to claim 9, characterized by the fact that the reactive composition at the limit of the plastic materials comprises, linked in chain, some elementary chemical structures chosen among: the imidazoline, the oxazolines, the piperazines, the cyclopentadiene, the dioxopyrrolidine, the dioxoimidazoline and the perylene; the radicals of: pimaric acid, L-pimaric acid, abietic acid and its dimers, resin acids, aromatic colophony acids, aliphatic Tall oil acids, aliphatic amino alcohols, aliphatic cycloaliphatic and aromatic diamines, diaminoimines, amino acids, saturated and unsaturated fatty acids, saturated and unsaturated aliphatic, cycloaliphatic and aromatic di- and polycarboxylic fatty acids, dehydroabietylamine, glycols, aromatic or alkylaromatic diols, polyoxydrilic aliphatic alcohols, aliphatic and aromatic ethers, aliphatic isocyanates and styrene.

11. A composition according to claim 10, characterized by the fact that the composition having a molecular weight included between 2,500 and 70,000 contains at least 5% by weight of a reactive composition at the limit of the plastic materials.

12. A composition according to claim 7, characterized by the fact that the composition having a molecular weight included between 2,500 and 70,000 contains from 25 to 75% by weight of a reactive composition at the limit of the plastic materials.